# EUROPÄISCHE PATENTANMELDUNG

(11) **EP 4 599 816 A1**
(43) Veröffentlichungstag der Anmeldung: **13.08.2025**
(21) Anmeldenummer: 24156424.4
(22) Anmeldetag: 07.02.2024
(51) Int. Cl.: A61J 3/00, B22F 10/10, B22F 12/33, B22F 12/86, B22F 12/88, B29C 64/10, B29C 64/20, B29C 64/236, B29C 64/245, B33Y 10/00, B33Y 30/00, B29C 64/205, B29C 64/321

(54) **VORRICHTUNG ZUR HERSTELLUNG VON DREIDIMENSIONALEN SIEBDRUCKWERKSTÜCKEN**

(71) Anmelder: Exentis Knowledge GmbH, 5608 Stetten AG (CH)
(72) Erfinder: BÜRKLIN, Uwe, 79312 Emmendingen (DE); REICHENBACH, Michael, 79183 Waldkirch (DE)
(74) Vertreter: Wenzel Nemetzade Warthmüller Patentanwälte Part mbB

(57) **Zusammenfassung**

Vorrichtung zur Herstellung von dreidimensionalen Siebdruckwerkstücken, insbesondere 3D-Siebdruckanlage, mit einer ein Drucksieb aufweisenden Druckeinrichtung für die schichtweise Erzeugung zumindest eines Siebdruckwerkstücks in mehreren Druckvorgängen und mit einer Dosiereinrichtung zur dosierten Ausgabe einer pastösen Druckmasse auf das Drucksieb, wobei die Dosiereinrichtung wenigstens einen Behälter zur Aufbewahrung der pastösen Druckmasse, eine Ausgabevorrichtung zur Ausgabe der Druckmasse auf das Drucksieb und eine zwischen dem Behälter und der Ausgabevorrichtung verlaufende Zuführleitung zur Zuführung der Druckmasse aus dem Behälter bis zur Ausgabevorrichtung aufweist.

## Beschreibung

Die vorliegende Erfindung betrifft eine Vorrichtung zur Herstellung von dreidimensionalen Siebdruckwerkstücken. Ebenso betrifft die vorliegende Erfindung ein Verfahren zur Herstellung von dreidimensionalen Siebdruckwerkstücken.

Bei der Herstellung von Werkstücken im Wege des dreidimensionalen Siebdrucks besteht das Erfordernis, eine Druckmasse in regelmäßigen Abständen auf das jeweilige Drucksieb aufzubringen. Die auf dem Drucksieb aufgetragene beziehungsweise verteilte Druckmasse kann im Anschluss mittels eines Druckrakels durch das Drucksieb hindurchgepresst werden. Durch einen solchen Druckvorgang wird auf der jeweiligen Druckunterlage eine Druckschicht oder auf dem bereits teilweise aufgebauten Werkstück eine weitere Druckschicht erzeugt.

Im Betrieb einer Vorrichtung zur Herstellung von dreidimensionalen Siebdruckwerkstücken kann die jeweils einzusetzende Druckmasse insbesondere manuell durch den jeweiligen Anlagenbediener auf das Drucksieb aufgetragen werden. Dies ist handhabungsintensiv und erfordert mithin einen verhältnismäßig hohen Personaleinsatz. Die Zugänglichkeit des Drucksiebs ist zudem begrenzt. Gleichzeitig kann ein derart manueller Auftrag zu ungleichmäßigen Druckresultaten oder ungleichmäßigen Druckschichten sowie auch zu unerwünschten Verunreinigungen führen.

Vor dem oben dargelegten Hintergrund bestand die Aufgabe der vorliegenden Erfindung darin, eine Vorrichtung zur Herstellung von dreidimensionalen Siebdruckwerkstücken anzugeben, die eine vereinfachte Bedienbarkeit sowie eine erhöhte Einsatzflexibilität bei gleichzeitig verbesserter Produktionsgenauigkeit gewährleistet. Ebenso bestand die Aufgabe darin, ein Verfahren zur Herstellung von dreidimensionalen Siebdruckwerkstücken anzugeben.

In Bezug auf die Vorrichtung ist diese Aufgabe durch den Gegenstand des Anspruchs 1 gelöst worden. Ein erfindungsgemäßes Verfahren ist Gegenstand von Anspruch 15. Vorteilhafte Ausgestaltungen sind Gegenstand der abhängigen Ansprüche und werden nachfolgend erläutert.

Erfindungsgemäß ist eine Vorrichtung zur Herstellung von dreidimensionalen Siebdruckwerkstücken vorgesehen. Bei der Vorrichtung handelt es sich insbesondere um eine 3D-Siebdruckanlage, bevorzugt um eine automatisierte 3D-Siebdruckanlage.

Die erfindungsgemäße Vorrichtung weist eine ein Drucksieb aufweisende Druckeinrichtung für die schichtweise Erzeugung zumindest eines Siebdruckwerkstücks in mehreren Druckvorgängen und eine Dosiereinrichtung zur dosierten Ausgabe einer pastösen Druckmasse auf das Drucksieb auf. Dabei ist die Dosiereinrichtung ausgestattet mit wenigstens einem Behälter zur Aufbewahrung der pastösen Druckmasse, einer Ausgabevorrichtung zur Ausgabe der Druckmasse auf das Drucksieb und einer zwischen dem Behälter und der Ausgabevorrichtung verlaufende Zuführleitung zur Zuführung der Druckmasse aus dem Behälter bis zur Ausgabevorrichtung.

Durch eine erfindungsgemäß vorgesehene Dosiereinrichtung kann mit nur geringem Handhabungsaufwand eine präzise Ausgabe von Druckmasse auf das jeweilige Drucksieb realisiert werden. Insbesondere kann mittels der Dosiereinrichtung ein hohes Maß an Dosierpräzision gewährleistet werden, sodass die Menge an ausgetragener Druckmasse verhältnismäßig genau eingestellt und/oder kontrolliert wird. Gleichzeitig erlaubt die Anordnung der Ausgabevorrichtung, des Behälters zur Aufbewahrung der pastösen Druckmasse sowie der Zuführleitung zur Zuführung der Druckmasse aus dem Behälter bis zur Ausgabevorrichtung eine insgesamt platzsparende und/oder auf die jeweilige Anlagenkonstruktion angepasste Anordnung.

Insbesondere oberhalb des jeweiligen Drucksiebs und/oder innerhalb der Druckeinrichtung können räumliche und/oder geometrische Restriktionen vorhanden sein, denen jedoch durch Aufteilung der Dosiereinrichtung in eine Ausgabevorrichtung, einen Behälter sowie eine Zuführleitung in besonders vorteilhafte Weise entgegnet werden kann.

Eine solche Anordnung lässt sich auch bei lokal sehr begrenzten Platzverhältnissen in besonders vorteilhafter Weise positionieren und montieren. Der Gesamtaufbau der Vorrichtung kann auf diese Weise in nur geringem Umfang durch die Anordnung der Dosiereinrichtung beeinflusst werden und aufwändige und komplizierte Konstruktionen lassen sich vermeiden.

Insgesamt lässt sich mit einer erfindungsgemäßen Ausgestaltung ein hohes Maß an Produktivität sowie Betriebssicherheit gewährleisten. Zudem können durch eine erfindungsgemäß vorgesehene Dosiervorrichtung hohe Anforderungen an die Reinheitsbedingungen der jeweils hergestellten Produkte eingehalten werden, da die Gefahr von Kontaminationen der jeweils einzusetzenden Druckmasse durch einen Anlagenbediener geringgehalten oder vollständig vermieden werden können.

Unter dreidimensionalem Siebdruck kann vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat, wie zum Beispiel auf einen Drucktisch oder auf einen Werkstückträger oder eine vorher aufgebrachte Schicht eines Siebdruckwerkstücks übertragen und getrocknet wird. Diese Vorgehensweise kann mehrmals wiederholt werden, bis die jeweils gewünschte Bauteilhöhe oder Bauteilform erreicht wird. Insbesondere können bei dreidimensionalem Siebdruck mindestens zwei oder mindestens drei Druckschichten aufeinander erzeugt werden. In einem abschließenden Prozessschritt kann das so erzeugte Bauteil gesintert werden. Hierdurch kann ein Siebdruckwerkstück entstehen.

Ebenso kann unter dreidimensionalem Siebdruck vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat übertragen und getrocknet wird, wobei bereits durch einen einmaligen Druck die jeweils gewünschte Bauteilhöhe oder Bauteilform erreicht wird. In einem abschließenden Prozessschritt kann ein auf diese Weise erzeugtes Bauteil gesintert werden und ein Siebdruckwerkstück entstehen. Soweit vorliegend von mehreren Druckvorgängen die Rede ist, kann anstelle dessen bereits ein Druckvorgang ausreichend und geeignet sein.

Unter Siebdruckwerkstück kann vorliegend in bevorzugter Weise ein Werkstück beziehungsweise ein dreidimensionales Druckerzeugnis verstanden werden, das einem Sinterschritt zu unterziehen ist beziehungsweise unterzogen worden ist. Dies betrifft insbesondere Werkstücke aus einem Metall, einer Keramik, einem Glasmaterial und/oder einem Kunststoffmaterial. Insbesondere kommen hierzu Legierungen aus Stahl, Nickel, Kupfer, Titan und/oder Keramiklegierungen in Betracht.

Druckerzeugnisse aus Kunststoffmaterialien können durch die Bezeichnung "dreidimensionales Siebdruckwerkstück" ausgeschlossen oder mitumfasst sein. Insbesondere besteht auch die Möglichkeit, gedruckte Werkstücklagen aus Kunststoffmaterial einem Sinterschritt zu unterziehen.

Unter Siebdruckwerkstück kann vorliegend ebenfalls ein Werkstück beziehungsweise ein dreidimensionales Druckerzeugnis verstanden werden, das frei von einem Sinterschritt hergestellt worden ist beziehungsweise frei von einem Sinterschritt fertigstellbar ist oder fertiggestellt wird. Mithin kann eine abschließende Aushärtung von Druckschichten auch frei von Sinterschritten erfolgen. Die Aushärtung eines Siebdruckwerkstücks kann in vorteilhafter Weise auch durch UV-Härtung und/oder durch eine Polymerisationsreaktion und/oder durch Trocknung, insbesondere durch Konvektionstrocknung, erfolgen. Eine derartige Aushärtung kann insbesondere dann bevorzugt vorgenommen werden, wenn eine abschließende Aushärtung von Druckschichten frei von Sinterschritten erfolgen soll.

Unter Siebdruckwerkstück kann vorliegend zusätzlich oder alternativ ein Werkstück beziehungsweise ein dreidimensionales Druckerzeugnis verstanden werden, dass vollständig durch dreidimensionalen Siebdruck erzeugt worden ist.

Unter Siebdruckwerkstück kann vorliegend ebenso ein Werkstück beziehungsweise ein dreidimensionales Druckerzeugnis verstanden werden, dass zumindest teilweise oder abschnittsweise durch dreidimensionalen Siebdruck erzeugt worden ist. Mithin kann ein Siebdruckwerkstück durch Auftragen mindestens einer Druckschicht oder auch einer Mehrzahl von Druckschichten auf ein anderweitig bereitgestelltes Substrat erzeugt werden, wobei das Substrat einen Teil des fertigen Werkstücks bildet.

Bei einem Siebdruckwerkstück im Sinne der vorliegenden Erfindung kann es sich ferner um ein pharmazeutisches Erzeugnis und/oder um ein biologisches Erzeugnis handeln. Solche Siebdruckwerkstücke können unter anderem aus pharmazeutischen Pulvermaterialien und/oder Pulvergemischen und/oder Granulaten und/oder aus biologischen Materialien hergestellt sein. Insbesondere können pharmazeutische Erzeugnisse und/oder biologische Erzeugnisse frei von Sinterschritten fertiggestellt beziehungsweise für die jeweilige Anwendung ausreichend ausgehärtet werden.

Siebdruckwerkstücke hergestellt aus pharmazeutischen Pulvermaterialien und/oder Pulvergemischen und/oder Granulaten können Arzneistoffe, Wirkstoffe, Hilfsstoffe, insbesondere Füllmittel und/oder Bindemittel und/oder Sprengmittel und/oder Gleitmittel, aufweisen.

Gemäß einer bevorzugten Ausgestaltung der vorliegenden Erfindung kann die Vorrichtung zur Herstellung von dreidimensionalen Siebdruckwerkstücken für die Produktion unter Reinraumbedingungen ausgebildet und/oder eingerichtet sein. Insbesondere kann die Vorrichtung für die Produktion unter Reinraumbedingungen gemäß Reinraumklassen den A, B, C und/oder D nach EU-GMP ausgebildet und/oder eingerichtet sein.

Weiter bevorzugt kann eine erfindungsgemäße Vorrichtung zur Herstellung von dreidimensionalen Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen Forschung ausgebildet und/oder eingerichtet sein.

Ebenso kann die erfindungsgemäße Vorrichtung zur Herstellung von dreidimensionalen Siebdruckwerkstücken für den Einsatz und/die Anwendung als medizinische und/oder pharmazeutische Produkte, Implantate und/oder sterile Produkte und/oder Medikamente und/oder für den Einsatz und/die Anwendung als Tabletten zur Wirkstoffverabreichung ausgebildet und/oder eingerichtet sein.

Bei einem Siebdruckwerkstück kann es sich gemäß der vorliegenden Erfindung um ein Werkstück handeln, das durch dreidimensionalen Siebdruck in einem oder in mehreren Druckvorgängen auf einem Werkstückträger aufgebaut wird. Dabei handelt es sich bei dem Siebdruckwerkstück insbesondere um ein Werkstück, welches nach Abschluss des Druckvorgangs und/oder nach Abschluss eines sich an den Druckvorgang anschließenden Sintervorgangs wieder von dem jeweiligen Werkstückträger lösbar ist, insbesondere zerstörungsfrei lösbar ist.

Zwischen etwaigen Druckvorgängen für ein Siebdruckwerkstück kann der jeweilige Werkstückträger von dem Drucktisch beziehungsweise von der Drucktischplatte gelöst werden beziehungsweise von dieser lösbar sein. Die einzelnen Schichten eines Siebdruckwerkstücks - bei mehrschichtigem Aufbau - können zwischen zwei aufeinanderfolgenden Druckvorgängen in einer von dem Drucktisch beziehungsweise von der Drucktischplatte entfernten Stellung getrocknet werden.

Gemäß einer bevorzugten Ausgestaltung kann der Behälter außerhalb eines Druckbereichs der Druckeinrichtung und/oder außerhalb eines Drucktisches der Druckeinrichtung angeordnet sein. Zusätzlich oder alternativ kann der Behälter in horizontaler Richtung relativ zum Drucksieb und/oder Drucktisch beabstandet oder in vertikaler Richtung unterhalb oder oberhalb eines Drucktisches der Druckeinrichtung angeordnet sein. Der in der Vorrichtung vorhandene Bauraum kann hierdurch besonders vorteilhaft genutzt und durch den Einsatz der Dosiereinrichtung ergeben sich keine oder nur geringe konstruktive Einschränkungen. Dabei kann insbesondere durch eine Anordnung außerhalb des Druckbereichs und/oder des Drucktischs und vertikal auf einer Höhe oberhalb des Drucktisches und/oder des Drucksiebs eine besonders ergonomische Anordnung geschaffen werden.

Gemäß einer weiter bevorzugten Ausgestaltung kann der Behälter während der Ausgabe der Druckmasse außerhalb eines Druckbereichs der Druckeinrichtung und/oder außerhalb eines Drucktisches der Druckeinrichtung und/oder in horizontaler Richtung relativ zum Drucksieb und/oder Drucktisch beabstandet oder in vertikaler Richtung unterhalb oder oberhalb eines Drucktisches der Druckeinrichtung angeordnet sein und/oder bleiben. Dies lässt sich konstruktiv mit einem nur geringen Aufwand bewerkstelligen und gewährleistet eine dennoch gute Zugänglichkeit des Behälters für das jeweilige Bedienpersonal.

Gemäß einer noch weiter bevorzugten Ausgestaltung kann der Behälter während der Ausgabe der Druckmasse stationär und/oder unbeweglich angeordnet sein und/oder bleiben. Dies ermöglicht einen insgesamt robusten und stabilen Vorrichtungsaufbau und eine hohe Betriebssicherheit.

Gemäß einer noch weiter bevorzugten Ausgestaltung kann der Behälter als Eimer ausgebildet sein, insbesondere mit einer zylindrisch oder konisch umlaufenden Seitenwand und/oder mit einer oberseitig ausgebildeten und/oder verschließbaren Öffnung und/oder mit einem unterseitig ausgebildeten Druckmassenauslass. Ein solcher Behälter lässt sich mit nur geringem Aufwand bereitstellen, kann einfach nachgefüllt oder aufgefüllt werden und mit einem hohen Aufnahmevolumen ausgebildet sein. Zudem ermöglicht ein unterseitiger Druckmassenauslass eine sicheres und einfaches herausfördern von Druckmasse aus dem Behälter. Durch eine konisch umlaufende Seitenwand kann die Gefahr von größeren Rückständen in dem Behälter verringert werden.

Gemäß einer noch weiter bevorzugten Ausgestaltung kann der oder ein als Eimer ausgebildete Behälter ein Aufnahmevolumen von mindestens 1 dm³, bevorzugt von mindestens 3 dm³, weiter bevorzugt von mindestens 4 dm³, weiter bevorzugt von mindestens 5 dm³, weiter bevorzugt von mindestens 7 dm³, weiter bevorzugt von mindestens 9 dm³, weiter bevorzugt von mindestens 10 dm³, weiter bevorzugt von mindestens 15 dm³, weiter bevorzugt von mindestens 20 dm³, noch weiter bevorzugt von mindestens 25 dm³ und noch weiter bevorzugt von mindestens 35 dm³ aufweisen. Mit einem solchen Aufnahmevolumen kann eine verhältnismäßig große Menge an Druckmasse bereitgestellt und für den Druck von Werkstücken auf das jeweilige Drucksieb dosiert aufgebracht werden. Ein häufiger Austausch oder Rüstaufwand für den Austausch eines entleerten Behälters durch einen gefüllten Behälter kann mithin vermieden werden.

Gemäß einer noch weiter bevorzugten Ausgestaltung kann der oder als Eimer ausgebildete Behälter ein Aufnahmevolumen von bis zu 5 dm³, bevorzugt von bis zu 7 dm³, weiter bevorzugt von bis zu 9 dm³, weiter bevorzugt von bis zu 10 dm³, weiter bevorzugt von bis zu 15 dm³, weiter bevorzugt von bis zu 20 dm³, weiter bevorzugt von bis zu 25 dm³, weiter bevorzugt von bis zu 30 dm³, weiter bevorzugt von bis zu 35 dm³, weiter bevorzugt von bis zu 45 dm³, noch weiter bevorzugt von bis zu 50 dm³ und noch weiter bevorzugt von bis zu 100 dm³ aufweisen. Ein derart dimensionierter Behälter lässt sich auch in begrenzten Bauräumen in geeigneter Weise unterbringen und ermöglicht zudem eine gute Handhabbarkeit.

Gemäß einer noch weiter bevorzugten Ausgestaltung kann der Behälter als Kartusche ausgebildet sein, insbesondere als Einwegkartusche oder als Mehrwegkartusche. Kartuschen eignen sich besonders für eine einfache Handhabung, einen handhabungsfreundlichen Austausch sowie auch für eine praktische Lagerung. Einwegkartuschen können zudem hohen Reinheitsanforderungen der jeweiligen Druckmasse genügen. Mehrwegkartuschen gewährleisten eine besonders material- und ressourcenschonende Produktion. Insbesondere können Mehrwegkartusche auch vor Ort durch den Betreiber der Vorrichtung mit neuer Druckmasse befüllt und wieder für die Produktion eingesetzt werden.

Gemäß einer noch weiter bevorzugten Ausgestaltung kann die Kartusche geschlossen ausgebildet sein und/oder eine öffenbare und/oder geöffnete Auslassöffnung aufweisen. Die Druckmasse kann auf diese Weise sicher vor Verunreinigungen geschützt bleiben und durch die Auslassöffnung kontrolliert ausgebracht werden. Zusätzlich oder alternativ kann eine Kartusche einen relativ zu einer umlaufenden Kartuschen-Seitenwand verschiebbaren Kolbenboden aufweisen. Dies ermöglicht eine einfache und sichere Druckbeaufschlagung der in der Kartusche vorhandenen Druckmasse und damit ein kontrolliertes Ausbringen über eine Auslassöffnung, die bevorzugt gegenüberliegend dem Kolbenboden angeordnet sein kann.

Gemäß einer noch weiter bevorzugten Ausgestaltung kann ein oder der als Kartusche ausgebildete Behälter ein Aufnahmevolumen von mindestens 50 cm³, bevorzugt von mindestens 100 cm³, weiter bevorzugt von mindestens 200 cm³, weiter bevorzugt von mindestens 300 cm³, weiter bevorzugt von mindestens 500 cm³, weiter bevorzugt von mindestens 800 cm³, weiter bevorzugt von mindestens 1000 cm³, weiter bevorzugt von mindestens 1200 cm³, weiter bevorzugt von mindestens 1500 cm³, noch weiter bevorzugt von mindestens 1800 cm³ und noch weiter bevorzugt von mindestens 2000 cm³ aufweisen. Mit einem solchen Aufnahmevolumen kann eine verhältnismäßig große Menge an Druckmasse in der jeweiligen Kartusche bereitgestellt und für den Druck von Werkstücken auf das jeweilige Drucksieb dosiert aufgebracht werden. Ein häufiger Austausch oder Rüstaufwand für den Austausch einer entleerten Kartusche durch eine gefüllte Kartusche kann mithin vermieden werden.

Gemäß einer noch weiter bevorzugten Ausgestaltung kann ein oder der als Kartusche ausgebildete Behälter ein Aufnahmevolumen von bis zu 200 cm³, bevorzugt von bis zu 500 cm³, weiter bevorzugt von bis zu 700 cm³, weiter bevorzugt von bis zu 900 cm³, weiter bevorzugt von bis zu 1000 cm³, weiter bevorzugt von bis zu 1200 cm³, weiter bevorzugt von bis zu 1500 cm³, weiter bevorzugt von bis zu 1700 cm³, weiter bevorzugt von bis zu 2000 cm³, weiter bevorzugt von bis zu 2500 cm³, noch weiter bevorzugt von bis zu 3000 cm³und noch weiter bevorzugt von bis zu 4000 cm³ aufweisen. Eine derart dimensionierte Kartusche lässt sich auch in äußerst begrenzten Bauräumen in geeigneter Weise anordnen und ermöglicht zudem eine gute Handhabbarkeit beziehungsweise einen einfachen und sicheren Austausch.

Gemäß einer noch weiter bevorzugten Ausgestaltung kann die Dosiereinrichtung wenigstens einen Aktor zur Förderung der Druckmasse aus dem Behälter aufweisen. Durch einen solchen Aktor kann in automatisierter Weise und mit nur geringem apparativen Aufwand eine automatisierte oder teilautomatisierte Dosierung von Druckmasse realisiert werden und die Produktivität und Fertigungspräzision kann verbessert werden.

Gemäß einer noch weiter bevorzugten Ausgestaltung kann der Aktor zur Förderung der Druckmasse als Saugvorrichtung zum Ansaugen der Druckmasse aus dem Behälter ausgebildet sein, insbesondere als Schneckenpumpe und/oder Exzenterschneckenpumpe. Eine solche Saugvorrichtung kann kostengünstig bereitgestellt werden, weist eine hohe Betriebssicherheit auf und gewährleistet verhältnismäßig große und präzise dosierte Fördervolumina.

Gemäß einer noch weiter bevorzugten Ausgestaltung kann die Saugvorrichtung zumindest abschnittsweise in den Behälter und/oder in die im Behälter befindliche Druckmasse eingetaucht sein. Ein solcher Aufbau kann mit nur geringem Aufwand bereitgestellt werden und ermöglicht einen besonders einfachen Austausch eines entleerten Behälters mit einem befüllten Behälter, insbesondere mit nur geringem Rüstaufwand.

Gemäß einer noch weiter bevorzugten Ausgestaltung kann die Saugvorrichtung außerhalb des Behälters angeordnet sein und/oder über eine Ansaugleitung mit dem Behälter in Fluidverbindung stehen. Ferner kann eine mit der Saugvorrichtung in Verbindung stehende Ansaugleitung in den Behälter und/oder in die im Behälter befindliche Druckmasse eingetaucht sein. Im Betrieb kann dadurch die Gefahr von Beschädigungen der Saugvorrichtung durch die Druckmasse verringert und gleichzeitig ein sicheres Ansaugen der Druckmasse gewährleistet werden.

Gemäß einer noch weiter bevorzugten Ausgestaltung kann die Saugvorrichtung dazu ausgebildet und/oder angeordnet sein, aus dem Behälter angesaugte Druckmasse in die Zuführleitung und bis zur Ausgabevorrichtung zu befördern. Auf diese Weise kann mit besonders hoher Zuverlässigkeit Druckmasse aus dem Behälter bis in die Zuführleitung und weiter zur Ausgabevorrichtung befördert werden. Eine sichere und präzise Dosierung, auch bei einem einfachen konstruktiven Aufbau, wird hierdurch gewährleistet.

Gemäß einer noch weiter bevorzugten Ausgestaltung kann der Aktor zur Förderung der Druckmasse als Druckerhöhungsvorrichtung zur Druckbeaufschlagung der Druckmasse in dem Behälter und/oder zur druckbasierten Förderung der Druckmasse aus dem Behälter heraus ausgebildet sein. Die Dosierpräzision kann hierdurch weiter verbessert werden. Zudem kann die Gefahr von Kontaminationen der Druckmasse aufgrund geringerer und vollständig vermiedener Kontaktierungen der Druckmasse durch den Aktor verringert werden.

Gemäß einer noch weiter bevorzugten Ausgestaltung kann die Druckerhöhungsvorrichtung einen Linearantrieb aufweisen, wobei der Linearantrieb bevorzugt als elektrischer oder elektromechanischer Linearantrieb und/oder als elektrischer Spindelantrieb und/oder als Elektrozylinder und/oder als Linearaktor ausgebildet sein kann. Ein solcher Linearantrieb kann eine besonders hohe Förderpräzision gewährleisten und lässt sich mit nur geringem Aufwand und zu geringen Kosten als Bestandteil der Dosiereinrichtung integrieren.

Gemäß einer noch weiter bevorzugten Ausgestaltung kann die Druckerhöhungsvorrichtung als pneumatischer und/oder hydraulischer Linearantrieb oder Linearzylinder ausgebildet sein. Eine derart ausgebildete Druckerhöhungsvorrichtung ist zuverlässig im Betrieb und kann verhältnismäßig hohe Druckkräfte erzeugen. Zudem kann bei derartiger Ausgestaltung in besonders vorteilhafter Weise und mit nur geringem Aufwand eine volumetrische Überwachung der ausgepressten Paste aus dem jeweiligen Behälter vornehmen. Ein pneumatischer und/oder hydraulischer Linearantrieb oder Linearzylinder kann wegtechnisch überwacht werden und damit eine genaue Dosierung beziehungsweise volumetrische Überwachung gewährleisten.

Gemäß einer noch weiter bevorzugten Ausgestaltung kann die Druckerhöhungsvorrichtung dazu ausgebildet und/oder eingerichtet sein, den Kolbenboden einer mit Druckmasse gefüllten Kartusche mit einer Druckkraft zu beaufschlagen. Zusätzlich oder alternativ kann die Druckerhöhungsvorrichtung dazu ausgebildet und/oder eingerichtet sein, den Kolbenboden einer Kartusche relativ zu der jeweiligen Kartuschen-Seitenwand in einer Längsrichtung zu verschieben, um den Innendruck der Kartusche zu erhöhen. Hierdurch kann auf kontrollierte Weise eine Erhöhung des Innendrucks in der jeweiligen Kartusche und damit ein gezieltes und dosiertes Auspressen der Druckmasse aus der Kartusche bewerkstelligt werden, ohne dass es zu einer unerwünschten Beschädigung der Kartusche kommt.

Gemäß einer noch weiter bevorzugten Ausgestaltung kann die Dosiereinrichtung wenigstens einen Sensor zur Positionsbestimmung eines Kolbenbodens einer Kartusche aufweisen. Die kontrollierte und sichere Bewegung des Kolbenbodens wird auf diese Weise vereinfacht. Zudem kann über einen solchen Sensor der Füllstand der jeweiligen Kartusche ermittelt werden. Ebenso kann durch einen solchen Sensor eine besonders sichere und kontrollierte Kontaktierung des Kolbenbodens durch den jeweiligen Aktor bewerkstelligt werden.

Gemäß einer noch weiter bevorzugten Ausgestaltung kann der Sensor zur Positionsbestimmung dazu eingerichtet sein, eine Relativposition zwischen einem Kolbenboden und dem Aktor zur Förderung der Druckmasse, insbesondere eine Relativposition zwischen einem Kolbenboden und dem Linearantrieb, zu bestimmen. Die Annäherung des Aktors an den jeweiligen Kolbenboden sowie die Kontaktierung des Kolbenbodens durch den Aktor kann hierdurch mit besonders hoher Genauigkeit und Sicherheit erfolgen. Das Auspressen unerwünscht hoher Volumina an Druckmasse kann auf diese Weise sicher vermieden werden.

Gemäß einer noch weiter bevorzugten Ausgestaltung kann der Sensor dazu eingerichtet sein, eine Absolut-Position des Kolbenbodens einer Kartusche zu bestimmen. Die Bestimmung einer Absolut-Position des Kolbenbodens einer Kartusche eignet sich in besonders vorteilhafter Weise zur Ermittlung des noch vorhandenen Füllvolumens an Druckmasse.

Gemäß einer noch weiter bevorzugten Ausgestaltung kann der Sensor zur Positionsbestimmung des Kolbenbodens als induktiver Sensor und/oder als kapazitiver Sensor und/oder als mechanischer Sensor ausgebildet sein. Ein solcher Sensor kann kostengünstig bereitgestellt werden, auf engem Bauraum installiert werden und gewährleistet ein hohes Maß an Funktionssicherheit.

Gemäß einer noch weiter bevorzugten Ausgestaltung kann der Sensor an dem Aktor zur Förderung der Druckmasse, insbesondere an dem Linearantrieb, angeordnet sein. Die Bestimmung einer Relativposition zwischen dem Aktor und dem jeweiligen Kolbenboden der Kartusche kann hierdurch auf geeignete Weise bewerkstelligt werden.

Gemäß einer noch weiter bevorzugten Ausgestaltung kann die Druckerhöhungsvorrichtung einen Druckbehälter aufweisen, der druckdicht verschließbar ist und in dem der Behälter zur Aufbewahrung der pastösen Druckmasse positionierbar sein kann. Durch einen in einem Druckbehälter erhöhten Innendruck kann auf besonders zuverlässige Weise auch der Druck auf die Druckmasse erhöht werden, beispielsweise sofern der Behälter zur Aufbewahrung der pastösen Druckmasse in geöffneter Stellung innerhalb des Druckbehälters angeordnet ist. Durch die Druckerhöhung auf die Druckmasse kann diese wiederum in kontrollierter und genau dosierter Weise gefördert und ausgebracht werden.

Gemäß einer noch weiter bevorzugten Ausgestaltung kann der Druckbehälter eine Anschlussöffnung für eine Druckluftzufuhr aufweisen und an die Anschlussöffnung kann eine Druckluftleitung druckdicht angeschlossen oder anschließbar sein. Dabei kann die Anschlussöffnung bevorzugt in einem Deckel des Druckbehälters ausgebildet sein. Hierdurch lässt sich mit nur geringem konstruktiven Aufwand der Innendruck des Druckbehälters kontrolliert einstellen und dadurch eine Förderung von Druckmasse aus dem jeweiligen Behälter initiieren.

Gemäß einer noch weiter bevorzugten Ausgestaltung kann der Druckbehälter eine Austrittsöffnung für die Durchführung der Zuführleitung oder eine Austrittsöffnung für die Durchführung einer mit der Zuführleitung verbundenen Austrittsleitung aufweisen, wobei die Austrittsöffnung bevorzugt in einem Deckel des Druckbehälters ausgebildet sein kann. Das kontrollierte und kontaminationsfreie Ausbringen von Druckmasse aus dem Behälter sowie auch aus dem Innenraum des Druckbehälters wird auf diese Weise ermöglicht.

Gemäß einer noch weiter bevorzugten Ausgestaltung kann die Zuführleitung oder eine mit der Zuführleitung verbundene Austrittsleitung durch die Austrittsöffnung hindurch bis in den Innenraum des Druckbehälters geführt sein, insbesondere bis in den in dem Druckbehälter positionierten und mit Druckmasse befüllten Behälter. Durch Erhöhung des Innendrucks kann hierdurch auf einfache und sichere Weise Druckmasse in die Zuführleitung oder in eine mit der Zuführleitung verbundene Austrittsleitung gepresst und Druckmasse aus dem Druckbehälter herausbefördert werden.

Gemäß einer noch weiter bevorzugten Ausgestaltung kann die Zuführleitung zumindest abschnittsweise entlang ihrer Länge oder entlang ihrer gesamten Länge flexibel verformbar und/oder elastisch verformbar und/oder biegsam und/oder frei von plastischer Verformung biegsam ausgebildet sein. Zusätzlich oder alternativ kann die Zuführleitung flexibel einer Relativbewegung zwischen der Ausgabevorrichtung und dem Behälter folgen. Die konstruktive Ausgestaltung und/oder Anordnung des Behälters sowie der Ausgabevorrichtung kann hierdurch vereinfacht und flexibel im Hinblick auf die geometrischen Anforderungen angepasst sein. Eine solche Ausgestaltung vereinfacht zudem Relativbewegungen zwischen der Ausgabevorrichtung und dem Behälter im Betrieb und/oder bei Wartungs- und/oder Rüstarbeiten an der Vorrichtung beziehungsweise der Dosiereinrichtung.

Gemäß einer noch weiter bevorzugten Ausgestaltung kann die Zuführleitung zumindest abschnittsweise oder entlang der gesamten Länge aus einem Kunststoffmaterial erzeugt sein, insbesondere aus Polyamid und/oder Polyester. Eine derartige Zuführleitung ist besonders kostengünstig bereitzustellen, kann ein hohes Maß an geometrischer Flexibilität gewährleisten und erfüllt hohe Anforderungen an die Reinheit der darin zu fördernden Druckmasse. Zudem wird ein guter Schutz vor Kontaminationen geschaffen.

Gemäß einer noch weiter bevorzugten Ausgestaltung kann die Zuführleitung und/oder ein Abschnitt der Zuführleitung werkzeugfrei auswechselbar sein. Der Handhabungsaufwand für das Bedienpersonal kann hierdurch geringgehalten werden und ein Einsatz unterschiedlicher Zuführleitungen aufgrund des Einsatzes unterschiedlicher Druckmassen wird begünstigt.

Gemäß einer noch weiter bevorzugten Ausgestaltung kann die Zuführleitung eine Länge aufweisen von mindestens 10 cm, bevorzugt von mindestens 15 cm, weiter bevorzugt von mindestens 20 cm, weiter bevorzugt von mindestens 25 cm, weiter bevorzugt von mindestens 30 cm, weiter bevorzugt von mindestens 35 cm, weiter bevorzugt von mindestens 40 cm, weiter bevorzugt von mindestens 50 cm, weiter bevorzugt von mindestens 60 cm, weiter bevorzugt von mindestens 80 cm, weiter bevorzugt von mindestens 100 cm, weiter bevorzugt von mindestens 120 cm, weiter bevorzugt von mindestens 150 cm, weiter bevorzugt von mindestens 170 cm, weiter bevorzugt von mindestens 200 cm, weiter bevorzugt von mindestens 250 cm, noch weiter bevorzugt von mindestens 300 cm. Auf diese Weisen lassen sich der Behälter und die Ausgabevorrichtung in verhältnismäßig großem Abstand voneinander anordnen beziehungsweise können der Behälter und die Ausgabevorrichtung relativ zueinander entlang eines verhältnismäßig großen Bewegungsspielraums bewegt werden.

Gemäß einer noch weiter bevorzugten Ausgestaltung kann die Zuführleitung eine Länge aufweisen von bis zu 20 cm, bevorzugt von bis zu 30 cm, weiter bevorzugt von bis zu 40 cm, weiter bevorzugt von bis zu 50 cm, weiter bevorzugt von bis zu 70 cm, weiter bevorzugt von bis zu 100 cm, weiter bevorzugt von bis zu 150 cm, weiter bevorzugt von bis zu 200 cm, weiter bevorzugt von bis zu 250 cm, weiter bevorzugt von bis zu 300 cm, weiter bevorzugt von bis zu 400 cm, weiter bevorzugt von bis zu 500 cm, noch weiter bevorzugt von bis zu 1000 cm. Ein Druckabfall innerhalb beziehungsweise entlang der Zuführleitung lässt sich hierdurch effektiv begrenzen und ein für die Förderung durch die Zuführleitung aufzubringender Förderdruck kann geringgehalten werden.

Gemäß einer noch weiter bevorzugten Ausgestaltung kann die Ausgabevorrichtung eine Mehrzahl von Ausgabeöffnungen für die Ausgabe der Druckmasse auf das Drucksieb aufweisen, insbesondere eine Mehrzahl diskret zueinander ausgebildeter Ausgabeöffnungen. Diskret zueinander ausgebildete Ausgabeöffnungen sind mithin nicht zusammenhängend, sondern jeweils als einzelne und/oder gesonderte Ausgabeöffnungen gebildet und/oder angeordnet. Durch mehrere diskrete Ausgabeöffnungen kann eine besonders gut definierte Verteilung von Druckmasse auf dem Drucksieb erzielt werden. Die Ausgabe von Druckmasse an definierten Stellen auf dem Drucksieb und in präzise definierter Menge erhöht die Zuverlässigkeit und Genauigkeit der nachfolgenden Fertigungsabläufe.

Gemäß einer noch weiter bevorzugten Ausgestaltung können zumindest zwei Ausgabeöffnungen unterschiedlich dimensioniert sein und/oder zumindest zwei Ausgabeöffnungen können zueinander unterschiedlich dimensionierte Querschnittsgrößen aufweisen. Auf diese Weise kann ein etwaiger Druckunterschied an den unterschiedlichen Ausgabeöffnungen berücksichtigt werden und trotz unterschiedlicher Drücke kann eine gleichmäßige Ausgabe von Druckmassen über die jeweiligen Ausgabeöffnungen bewerkstelligt werden.

Gemäß einer noch weiter bevorzugten Ausgestaltung kann zumindest eine der Ausgabeöffnungen kleiner dimensioniert sein, als eine in Strömungsrichtung der

Druckmasse nachgelagerte Ausgabeöffnung, und/oder eine in Strömungsrichtung der Druckmasse nachgelagert angeordnete Ausgabeöffnung kann größer dimensioniert sein, als zumindest eine in Strömungsrichtung vorgelagerte Ausgabeöffnung oder sämtliche in Strömungsrichtung vorgelagerte Ausgabeöffnungen. Auf diese Weise kann ein Druckabfall entlang einer Strömungsrichtung in besonders bevorzugter Weise ausgeglichen und eine gleichmäßige Druckmassenausgabe durch unterschiedliche Ausgabeöffnungen sichergestellt werden.

Gemäß einer noch weiter bevorzugten Ausgestaltung kann die Mehrzahl von Ausgabeöffnungen dazu ausgebildet und/oder angeordnet sein, die Ausgabe der Druckmasse auf das Drucksieb in zueinander diskreten Druckmasseabschnitten vorzunehmen. Ein Druckmassenauftrag auf das Drucksieb kann hierdurch besonders kontrolliert erfolgen.

Gemäß einer noch weiter bevorzugten Ausgestaltung kann die Ausgabevorrichtung zur Ausgabe der Druckmasse auf einen geschlossenen Abschnitt des Drucksiebs und/oder auf einen Drucküberlaufabschnitt des Drucksiebs ausgebildet sein. Die Druckmasse kann dabei jedoch noch in einem Wirkbereich des jeweiligen Flutrakels auf das Drucksieb ausgebracht werden. Dies ermöglicht eine gute anschließende Verteilung der Druckmasse auf dem Drucksieb durch das jeweilige Flutrakel und gleichzeitig einen besonders kontrollierten Druckmassenaustrag. Zudem kann auf diese Weise die Ausgabe der Druckmasse in vorteilhafter Weise zwischen zwei Rakelvorgängen erfolgen, sodass eine besonders effiziente Druckabfolge realisiert werden kann.

Gemäß einer noch weiter bevorzugten Ausgestaltung kann die Druckeinrichtung ein Flutrakel zum Fluten des Drucksiebs mit Druckmasse und/oder ein Druckrakel zum Pressen von Druckmasse durch das Drucksieb und/oder zwei Druckrakel zum Pressen von Druckmasse durch das Drucksieb aufweisen, wobei die Ausgabevorrichtung bevorzugt zur Ausgabe der Druckmasse ausgehend von einer Stellung zwischen dem Flutrakel und dem Druckrakel ausgebildet ist. Ebenso kann die Ausgabevorrichtung bevorzugt zur Ausgabe der Druckmasse ausgehend von einer Stellung zwischen zwei Druckrakeln ausgebildet sein.

Ein Flutrakel ermöglicht in besonders vorteilhafter Weise die Verteilung von Druckmasse in dem jeweiligen Drucksieb beziehungsweise die Vermischung von neu aufgetragener Druckmasse mit bereits oder noch auf dem Drucksieb vorhandener Druckmasse. Ein Druckrakel erlaubt in zuverlässiger Weise, die aufgetragene und/oder verteilte Druckmasse durch das Drucksieb hindurchzupressen.

Bei einer Anordnung von zwei Druckrakeln oder bei der Nutzung von zwei vorgesehenen Rakeln als Druckrakel kann ein Fluten des Drucksiebs oder die Verteilung von Druckmasse in dem jeweiligen Drucksieb in einem gesonderten Schritt unterbleiben. Das Fluten des Drucksiebs oder die Verteilung von Druckmasse in dem jeweiligen Drucksieb beziehungsweise auch eine Vermischung von neu aufgetragener Druckmasse mit bereits oder noch auf dem Drucksieb vorhandener Druckmasse kann während der Durchführung eines Druckrakelvorgangs durchgeführt werden. Dabei kann bei der Anordnung zwei Druckrakeln sowohl einer Vorwärts- als auch eine Rückwärtsbewegung der beiden Druckrakeln in Rakelrichtung zum Drucken genutzt werden, nämlich in Vorwärtsrichtung mit einem Druckrakel und in Rückwärtsrichtung mit dem jeweils anderen Druckrakel. Ein Flutrakel kann in vorteilhafter Weise auch als Druckrakel einsetzbar sein.

Eine Anordnung der Ausgabevorrichtung zur Ausgabe der Druckmasse ausgehend von einer Stellung zwischen dem Flutrakel und dem Druckrakel oder zwischen zwei Druckrakeln erlaubt eine besonders platzsparende Ausgestaltung und eine effiziente Ausgabe der Druckmasse zeitlich zwischen einer Druckrakelbewegung und einer Flutrakelbewegung und/oder während einer Druckrakelbewegung und/oder einer Flutrakelbewegung in einer Rakelrichtung.

Gemäß einer noch weiter bevorzugten Ausgestaltung kann die Ausgabevorrichtung zumindest abschnittsweise oder vollständig zwischen dem Flutrakel und dem Druckrakel und/oder zwischen zwei Druckrakeln verlaufen, insbesondere in einer Richtung quer oder unter einem Winkel zur Rakelrichtung. Zusätzlich oder alternativ kann die Ausgabevorrichtung zumindest abschnittsweise parallel zu einer Rakelkante des Flutrakels und/oder des zumindest einen Druckrakels verlaufen und/oder die Ausgabevorrichtung kann bis in einen Zwischenraum zwischen dem Flutrakel und dem Druckrakel und/oder zwischen zwei Druckrakeln verlaufen. Eine solche Ausgestaltung lässt sich besonders kompakt konstruieren und gewährleistet gleichzeitig eine sichere und verhältnismäßig bewegungsarme Prozessabfolge in dem Ausbringen von Druckmasse, dem Fluten des Drucksiebs und/oder dem Drucken oder nachfolgenden Drucken der Druckpaste mittels einer Druckrakelbewegung.

Gemäß einer noch weiter bevorzugten Ausgestaltung können mehrere oder kann die Mehrzahl von Ausgabeöffnungen zwischen dem Flutrakel und dem Druckrakel verteilt und/oder zwischen zwei Druckrakeln angeordnet sein, insbesondere in einer Richtung quer oder unter einem Winkel zur Rakelrichtung verteilt angeordnet sein. Durch eine solche Ausgestaltung kann die jeweilige Druckmasse besonders gleichmäßig und im Hinblick auf nachfolgende Rakelbewegungen günstig verteilt werden. Die ausgetragene Druckmasse kann hierdurch insbesondere vorteilhaft entlang einer Längserstreckung des jeweiligen Rakels verteilt angeordnet sein, sodass mit einer Rakelbewegung eine verhältnismäßig gleichmäßige Erfassung der Druckmasse sichergestellt werden kann.

Unter Rakelrichtung kann oder soll hier eine Richtung verstanden werden, entlang der das jeweilige Rakel während des Flutens des Drucksiebs beziehungsweise während des Druckens oder des Hindurchpressens von Druckmasse durch das Drucksieb bewegt wird. Eine Absenkbewegung oder Hubbewegung des Flutrakels oder des Druckrakels wird mithin nicht als Rakelrichtung verstanden.

Gemäß einer noch weiter bevorzugten Ausgestaltung kann die Ausgabevorrichtung zumindest einen Ausgabeschlitz oder mehrere Ausgabeschlitze aufweisen, wobei der Ausgabeschlitz bevorzugt in einer Richtung quer oder unter einem Winkel zur Rakelrichtung verläuft. Durch einen Ausgabeschlitz kann die Gleichmäßigkeit der Ausgabe der Druckmasse noch weiter verbessert werden. Durch einen Verlauf eines Ausgabeschlitzes in einer Richtung quer oder unter einem Winkel zur Rakelrichtung kann die Druckmasse in besonders günstiger Weise im Hinblick auf nachfolgende Rakelbewegungen verteilt werden. Die ausgetragene Druckmasse kann vorteilhaft entlang einer Längserstreckung des jeweiligen Rakels verteilt angeordnet werden, sodass mit einer Rakelbewegung eine verhältnismäßig gleichmäßige Erfassung der Druckmasse sichergestellt werden kann

Gemäß einer noch weiter bevorzugten Ausgestaltung kann zumindest ein Ausgabeschlitz der Ausgabevorrichtung entlang der Längserstreckung eine sich verändernde Breite aufweisen. Eine solche Breitenveränderung kann kontinuierlich oder stufenlos erfolgen. Ein Druckabfall entlang des Ausgabeschlitzes kann hierdurch ausgeglichen werden und eine gleichmäßige Ausgabe der Druckmasse auch bei einem verhältnismäßig langen Ausgabeschlitz kann gewährleistet werden.

Gemäß einer noch weiter bevorzugten Ausgestaltung kann zumindest ein Ausgabeschlitz der Ausgabevorrichtung an voneinander in Längserstreckung des Ausgabeschlitzes beabstandeten Abschnitten unterschiedliche Breiten aufweisen. Unterschiedliche Breite in Längsrichtung können durch eine stufenweise oder auch durch eine stufenlose oder kontinuierliche Breitenveränderung realisiert sein. Auch auf diese Weise kann mit nur geringem konstruktiven Aufwand ein etwaiger Druckabfall entlang des Ausgabeschlitzes ausgeglichen und eine gleichmäßige Ausgabe der Druckmasse gewährleistet werden.

Gemäß einer noch weiter bevorzugten Ausgestaltung kann zumindest ein Ausgabeschlitz der Ausgabevorrichtung in einem in Strömungsrichtung der Druckmasse nachgelagert ausgebildeten Schlitzabschnitt größer und/oder breiter dimensioniert sein als zumindest ein in Strömungsrichtung vorgelagerter Schlitzabschnitt. Soweit in Strömungsrichtung der Druckmasse ein nennenswerter Druckabfall der Druckmasse zu erwarten ist oder vorliegen sollte, kann diesem durch eine solche Ausgestaltung in besonders vorteilhafter Weise entgegengewirkt werden.

Gemäß einer noch weiter bevorzugten Ausgestaltung kann zumindest ein Ausgabeschlitz der Ausgabevorrichtung entlang der Strömungsrichtung der Druckmasse eine zumindest abschnittsweise kontinuierlich zunehmende Größe und/oder Breite aufweisen. Durch eine zunehmende Größe und/oder Breite kann ein möglicher Druckabfall in Strömungsrichtung der Druckmasse besonders geeignet ausgeglichen werden, sodass auch ausreichend Druckmasse aus Bereichen des Ausgabeschlitzes erfolgen kann, die in Strömungsrichtung verhältnismäßig weit nachgelagert oder von dem Behälter weit weg gelagert sind.

Gemäß einer noch weiter bevorzugten Ausgestaltung kann die Ausgabevorrichtung mit dem Flutrakel und/oder mit dem Druckrakel und/oder mit den Druckrakeln mitfahrend angeordnet sein, insbesondere in einer Rakelrichtung mitfahrend angeordnet sein. Die Gefahr von Kollisionen zwischen einem Rakel und der Ausgabevorrichtung lässt sich hierdurch verringern. Zudem kann eine solche Ausgestaltung konstruktiv verhältnismäßig einfach bewerkstelligt werden. Insbesondere kann die Ausgabevorrichtung auf diese Weise frei von eigenen Aktoren angeordnet werden, da eine Bewegung stets zusammen mit den jeweiligen Rakeln erfolgt.

Ein von den Rakeln unabhängiges Bewegen der Ausgabevorrichtung ist nicht zwingend erforderlich.

Gemäß einer noch weiter bevorzugten Ausgestaltung kann die Dosiereinrichtung zur Ausgabe von Druckmasse über die Ausgabevorrichtung während einer Rakelbewegung in einer Rakelrichtung eingerichtet sein. Insbesondere kann die Dosiereinrichtung zur kontinuierlichen und/oder periodisch wiederkehrenden Ausgabe von Druckmasse über die Ausgabevorrichtung während einer Rakelbewegung in einer Rakelrichtung eingerichtet sein. Hierdurch kann eine besonders zeitsparende Druckmassenausgabe bewerkstelligt werden.

Gemäß einer noch weiter bevorzugten Ausgestaltung kann die Dosiereinrichtung zur Ausgabe von Druckmasse während einer gemeinsamen und/oder mitfahrenden Bewegung der Ausgabevorrichtung mit einem Flutrakel und/oder mit zumindest einem Druckrakel in einer Rakelrichtung eingerichtet sein, insbesondere aus einer in Rakelrichtung mitfahrenden und/oder mitbewegenden Position der Ausgabevorrichtung zwischen einem Flutrakel und einem Druckrakel und/oder zwischen zwei Druckrakeln. Dies gewährleistet eine besonders zeitsparende Prozessabfolge und damit eine hohe Produktivität bei gleichzeitig hoher Betriebssicherheit.

Gemäß einer noch weiter bevorzugten Ausgestaltung kann die Dosiereinrichtung zur Ausgabe von Druckmasse während einer stationären und/oder in Rakelrichtung stillstehenden Stellung eines Druckrakel und/oder eines Flutrakels eingerichtet sein. Die Ausgabe der Druckmasse kann auf diese Weise besonders kontrolliert erfolgen.

Gemäß einer noch weiter bevorzugten Ausgestaltung kann die Dosiereinrichtung zumindest einen Aktor zur Bewegung der Ausgabevorrichtung aufweisen, insbesondere zur Bewegung der Ausgabevorrichtung quer oder unter einem Winkel zur Rakelrichtung. Auf diese Weise kann eine von den jeweiligen Rakeln unabhängige Bewegung der Ausgabevorrichtung realisiert werden. Dies erlaubt eine besonders kompakte Anordnung der Flut- und Druckrakel, da die Ausgabevorrichtung lediglich bedarfsabhängig in einen Bewegungsbereich der Rakel hineinbewegt werden kann. Zusätzlich oder alternativ lässt sich die Ausgabevorrichtung auf diese Weise selbst kompakt ausbilden, da sich aufgrund der Beweglichkeit ein größerer Ausgabebereich abdecken lässt.

Gemäß einer noch weiter bevorzugten Ausgestaltung kann der Aktor zur Bewegung der Ausgabevorrichtung während der Ausgabe der Druckmasse auf das Drucksieb ausgebildet sein. Durch die Bewegung der Ausgabevorrichtung während der Ausgabe der Druckmasse auf das Drucksieb lässt sich eine verhältnismäßig gute Verteilung eines größeren Ausgabebereichs sicherstellen.

Gemäß einer noch weiter bevorzugten Ausgestaltung kann der Aktor zur Bewegung der Ausgabevorrichtung aus einer Wartestellung heraus in eine Ausgabestellung und/oder aus einer Ausgabestellung heraus in eine Wartestellung ausgebildet sein. In einer Wartestellung kann eine Kollision mit den Rakeln oder anderen Komponenten vermieden werden. In einer Ausgabestellung kann eine effiziente Ausgabe entlang eines verhältnismäßig großen Ausgabebereichs sichergestellt werden. Die Betriebssicherheit und Ausgabefunktionalität lässt sich hierdurch weiter verbessern.

Gemäß einer noch weiter bevorzugten Ausgestaltung kann die Ausgabevorrichtung zumindest einen Ausgaberohrabschnitt aufweisen, in dem wenigstens eine Ausgabeöffnung und/oder ein Ausgabeschlitz ausgebildet ist. Ein Ausgaberohrabschnitt kann kostengünstig bereitgestellt werden, eine verhältnismäßig große Länge zur guten Verteilung der Druckmasse aufweisen und gleichzeitig ein hohes Maß an Betriebssicherheit gewährleisten.

Gemäß einer noch weiter bevorzugten Ausgestaltung kann in dem Ausgaberohrabschnitt eine Mehrzahl von Ausgabeöffnungen vorgesehen und/oder entlang einer Strömungsrichtung der Druckmasse verteilt angeordnet sein. Zusätzlich oder alternativ kann in dem Ausgaberohrabschnitt zumindest ein Ausgabeschlitz in Strömungsrichtung der Druckmasse verlaufend ausgebildet sein. Dies lässt sich mit nur geringem Aufwand bewerkstelligen und gewährleitet ein hohes Maß an Funktionalität für die dosierte Ausgabe von Druckmasse entlang eines verhältnismäßig großen beziehungsweise längserstreckten Ausgabebereichs.

Gemäß einer noch weiter bevorzugten Ausgestaltung kann der Ausgaberohrabschnitt zwischen dem Flutrakel und dem Druckrakel verlaufen, insbesondere quer oder unter einem Winkel zur Rakelrichtung und/oder parallel zu einer Rakelkante des Flutrakels und/oder des Druckrakels. Hierdurch wird eine besonders platzsparende und kompakte Anordnung gewährleistet, bei gleichzeitig günstiger Verteilung der Druckmasse im Hinblick auf nachfolgende Rakelvorgänge.

Gemäß einer noch weiter bevorzugten Ausgestaltung kann die Ausgabevorrichtung mehrere Ausgaberohrabschnitte aufweisen, die bevorzugt fluchtend zueinander ausgerichtet sind und/oder die durch einen Aktor oder durch mehrere Aktoren gleichförmig miteinander beweglich angeordnet sind. Hierdurch kann eine weiter verbesserte Dosierung und Verteilung von Druckmasse realisiert werden. Insbesondere können mehrere Ausgaberohrabschnitte diskret zueinander oder zueinander getrennt ausgebildet sein. Derartige Ausgaberohrabschnitt können unabhängig voneinander angeordnet und montiert sein. Durch mehrere Ausgaberohrabschnitte kann die Gefahr eines großen Druckabfalls verringert werden.

Ferner kann die Ausgabevorrichtung mehrere Ausgaberohrabschnitte aufweisen, die miteinander zu einem Ausgaberohr verbunden und/oder einstückig miteinander als Ausgaberohr ausgebildet sind. Die Ausgaberohrabschnitte können dabei auch in Fluidverbindung miteinander stehen. Dabei besteht die Möglichkeit, dass Druckmasse über gegenüberliegende Enden in die beiden miteinander verbundenen Ausgaberohrabschnitte eingeleitet wird. Über Ausgabeöffnungen oder einen Ausgabeschlitz oder mehrere Ausgabeschlitze zwischen den gegenüberliegenden Enden kann die Druckmasse ausgebracht werden. Innerhalb der miteinander verbundenen oder einstückig miteinander ausgebildeten Ausgaberohrabschnitte lassen sich mithin gegenläufige Druckmassenströme realisieren.

Derartig miteinander verbundene oder einstückig miteinander ausgebildete Ausgaberohrabschnitte lassen sich kostengünstig fertigen, können einfach gereinigt werden und gewährleisten eine hohe Betriebssicherheit. Ebenso können derartig miteinander verbundene oder einstückig miteinander ausgebildete Ausgaberohrabschnitte fluchtend zueinander ausgerichtet sein und/oder durch einen Aktor oder durch mehrere Aktoren gleichförmig miteinander beweglich angeordnet sein.

Gemäß einer noch weiter bevorzugten Ausgestaltung kann die Zuführleitung wenigstens einen Verteiler, bevorzugt eine Mehrzahl von Verteilern, zur Verteilung eines Druckmassestroms auf mehrere parallelgeschaltete Zuführleitungsabschnitte und/oder für die Zuleitung eines Druckmassestroms zu mehreren Ausgabeöffnungen und/oder mehreren Ausgabeschlitzen und/oder mehreren Ausgaberohrabschnitten aufweisen. Eine solche Verzweigung verbessert die gezielte Dosierung unterschiedlicher Druckmasseströme an unterschiedliche Ausgabestellen beziehungsweise auf unterschiedliche Stellen auf dem Drucksieb. Die Verteilung lässt sich insgesamt verbessern. Zudem kann ein größerer Druckmasseabfall zwischen unterschiedlichen Ausgabeöffnungen oder Ausgabestellen entlang einer einzelnen Leitung vermieden werden.

Gemäß einer noch weiter bevorzugten Ausgestaltung kann die Zuführleitung wenigstens zwei durch einen Verteiler parallelgeschaltete Zuführleitungsabschnitte aufweisen. Von den parallelgeschalteten Zuführleitungsabschnitten kann zusätzlich oder alternativ zumindest ein Zuführleitungsabschnitt einen weiteren Verteiler zur Verteilung eines Druckmassestroms auf mehrere parallelgeschaltete Zuführleitungsteilabschnitte aufweisen. Hierdurch lässt sich mit nur geringem Installations- und Montageaufwand eine besonders günstige Verteilung eines Druckmassestroms bewerkstelligen.

Gemäß einer noch weiter bevorzugten Ausgestaltung kann die Ausgabevorrichtung dazu ausgebildet und/oder angeordnet sein, die Ausgabe der Druckmasse auf das Drucksieb in zumindest einem längserstreckten oder schnurförmig verlaufenden Druckmassenabschnitt vorzunehmen. Hiervon ausgehend kann eine besonders gleichmäßige Verteilung der Druckmasse auf dem Drucksieb beziehungsweise eine besonders gleichmäßige Vermischung mit noch auf dem Drucksieb vorhandener Druckmasse in nur einem Flutrakelvorgang bewerkstelligt werden.

Gemäß einer noch weiter bevorzugten Ausgestaltung kann die Dosiereinrichtung zumindest eine Absperrarmatur zur Absperrung eines Druckmassestroms aufweisen, wobei die Absperrarmatur bevorzugt als Teil der Zuführleitung und/oder zur Absperrung der Zuführleitung ausgebildet sein kann. Ein unerwünschtes Austragen von Druckmasse, beispielsweise während einer Druckrakelbewegung lässt sich hierdurch sicher vermeiden, sodass ein hohes Maß an Prozesssicherheit gewährleitet werden kann.

Gemäß einer noch weiter bevorzugten Ausgestaltung kann entlang des Verlaufs der Zuführleitung der Abstand der Absperrarmatur von dem Behälter mit Druckmasse größer sein als der Abstand der Absperrarmatur von der Ausgabevorrichtung und/oder von zumindest einer Ausgabeöffnung und/oder einem Ausgabeschlitz. Die Gefahr eines unerwünschten Nachlaufens der Druckmasse aus der Ausgabevorrichtung und/oder aus einer Ausgabeöffnung und/oder aus einem Ausgabeschlitz heraus lässt sich damit verringern. Das in Strömungsrichtung hinter der Absperrarmatur befindliche Volumen an Druckmasse kann dadurch insbesondere klein gehalten werden.

Gemäß einer noch weiter bevorzugten Ausgestaltung kann die Dosiereinrichtung eine Behälterwechselvorrichtung zum automatisierten Wechsel des jeweils Druckmasse spendenden Behälters, insbesondere des als Kartusche oder des als Eimer ausgebildeten Behälters, aufweisen. Die Produktivität der Vorrichtung kann auf diese Weise weiter verbessert und ein personalintensiver Einsatz verhindert werden. Die Gefahr manueller Fehlbedienungen lässt sich zudem verringern. Ferner kann auf diese Weise mit nur geringem Aufwand der Einsatz unterschiedlicher Druckmassen für die Herstellung eines Siebdruckwerkstücks ermöglicht werden.

Die Fertigungsflexibilität in Bezug auf ein einzelnes Siebdruckwerkstück wird damit weiter erhöht.

Gemäß einer noch weiter bevorzugten Ausgestaltung kann die Behälterwechselvorrichtung für den werkzeugfreien und/oder automatisierten oder halbautomatisierten Wechsel des jeweils Druckmasse spendenden Behälters ausgebildet sein. Dies gewährleistet eine besonders hohe Handhabungsfreundlichkeit und Betriebssicherheit sowie einen nur geringen Personaleinsatz im Betrieb der Vorrichtung.

Gemäß einer noch weiter bevorzugten Ausgestaltung kann die Behälterwechselvorrichtung einen Rundtakttisch für einen als Eimer ausgebildeten Behälter aufweisen. Dies gewährleistet einen platzsparenden Aufbau bei hoher Funktionssicherheit. Ein Rundtakttisch lässt sich zudem einfach bedienen und mit Behältern bestücken. Gleichermaßen können entleerte Behälter einfach wieder von einem Rundtaktisch zur erneuten Befüllung entnommen werden.

Gemäß einer noch weiter bevorzugten Ausgestaltung kann die Behälterwechselvorrichtung eine Anschlussplatte mit einem Durchlass für den Anschluss der Zuführleitung aufweisen. Der Durchlass kann für das Durchleiten von Druckmasse aus einem Behälter ausgebildet sein. Dabei kann bevorzugt in Abhängigkeit einer Relativstellung zwischen der Anschlussplatte und einer Mehrzahl von Behältern eine Fluidverbindung zwischen der Zuführleitung und einem von den mehreren Behältern herstellbar sein. Eine solche Fluidverbindung kann insbesondere über den Durchlass der Anschlussplatte hergestellt werden. Zusätzlich oder alternativ kann durch eine Verstellung der Relativstellung zwischen der Anschlussplatte und wenigstens einem Behälter eine Fluidverbindung zwischen der Zuführleitung und einem weiteren Behälter herstellbar sein. Hierdurch lässt sich ein effizienter und zeitsparender Wechsel des jeweils Druckmasse spendenden Behälters gewährleisten.

Gemäß einer noch weiter bevorzugten Ausgestaltung kann die Behälterwechselvorrichtung außerhalb eines Druckbereichs der Druckeinrichtung angeordnet sein.

Zusätzlich oder alternativ kann die Behälterwechselvorrichtung in horizontaler Richtung relativ zum Drucksieb beabstandet angeordnet sein oder in vertikaler Richtung unterhalb eines Drucktisches der Druckeinrichtung angeordnet sein. Geometrische Kollisionen zwischen Komponenten der Druckeinrichtung und der Behälterwechselvorrichtung lassen sich dadurch vermeiden. Die Anordnung der Behälterwechselvorrichtung kann im Hinblick auf etwaige geometrische Restriktionen der Druckeinrichtung besonders vorteilhaft arrangiert werden.

Gemäß einer noch weiter bevorzugten Ausgestaltung kann die Dosiereinrichtung und/oder der Aktor zur Förderung der Druckmasse aus dem Behälter zur volumetrischen Dosierung der Druckmasse ausgebildet sein. Die Genauigkeit der Dosierung lässt sich hierdurch besonders vorteilhaft und mit nur geringem Aufwand verbessern.

Gemäß einer noch weiter bevorzugten Ausgestaltung kann die Dosiereinrichtung und/oder der Aktor zur Förderung der Druckmasse aus dem Behälter zur hubbasierten und/oder volumetrischen Dosierung der Druckmasse ausgebildet sein. Zusätzlich oder alternativ kann der Aktor zur Förderung der Druckmasse zur volumetrischen Dosierung durch Hubregelung ausgebildet sein. Die Präzision der Dosierung lässt sich hierdurch weiter verbessern. Bei Einsatz eines Linearaktors oder eines Linearantriebs als Aktor kann die Hubposition in vorteilhafter Weise als Grundlage für die Bestimmung der dosierten Menge der Druckmasse verwendet werden.

Gemäß einer noch weiter bevorzugten Ausgestaltung kann die Dosiereinrichtung eine Aufnahmekavität zur Aufnahme einer Kartusche aufweisen, wobei die Aufnahmekavität bevorzugt für die zumindest abschnittsweise seitliche und/oder umlaufende Abstützung einer Kartuschen-Seitenwand ausgebildet sein kann. Dies gewährleistet eine sichere Positionierung der Kartusche. Zudem kann hierdurch auch eine Entlastung der Kartuschen-Seitenwand im Hinblick auf erhöhte Innendrücke der Kartusche ermöglicht werden.

Gemäß einer noch weiter bevorzugten Ausgestaltung kann der Aktor zur Bewegung der Ausgabevorrichtung als Portalachsensystem oder als Teil eines Portalachsensystems ausgebildet sein. Ein Portalachsensystem kann große Bewegungsräume abdecken und damit eine geeignete Verteilung der Druckmasse gewährleisten. Portalachsensysteme sind zudem einfach im Aufbau und können hohe Tragmassen mit hoher Genauigkeit und Sicherheit bewegen.

Gemäß einer noch weiter bevorzugten Ausgestaltung kann die Dosiereinrichtung eine Nachlaufstoppvorrichtung zur Vermeidung und/oder Verringerung eines Nachlaufens von Druckmasse aus der Dosiereinrichtung und/oder aus der Ausgabevorrichtung aufweisen. Die Prozesssicherheit der Dosierung von Druckmasse kann auf diese Weise weiter verbessert werden. Ein unerwünschtes Nachlaufen von Druckmasse aus der Ausgabevorrichtung, beispielsweise während einer Rakelbewegung, und/oder eine Verunreinigung von Vorrichtungskomponenten, die frei von Druckmasse bleiben sollen, lässt sich dadurch vermeiden oder eine etwaige Gefahr verringern.

Gemäß einer noch weiter bevorzugten Ausgestaltung kann die Nachlaufstoppvorrichtung durch die Absperrarmatur gebildet sein. Eine solche Nachlaufstoppvorrichtung kann mit nur geringem Aufwand bereitgestellt werden und gewährleistet ein verhältnismäßig großes Maß an Funktionssicherheit zur Nachlaufvermeidung.

Gemäß einer noch weiter bevorzugten Ausgestaltung kann die Nachlaufstoppvorrichtung zur Druckentlastung eines Kolbenbodens einer Kartusche ausgebildet sein. Zusätzlich oder alternativ kann die Nachlaufstoppvorrichtung zur Bewegungsumkehr eines Kolbenbodens einer Kartusche und/oder zur Bewegungsumkehr des Aktors zur Förderung der Druckmasse ausgebildet sein. Ein Nachlaufstopp kann hierdurch mit weiter erhöhter Sicherheit erreicht werden. Insbesondere kann eine solche Ausgestaltung auch ohne Absperrarmatur umgesetzt werden, sodass ein Nachlaufstopp mit einer nur geringen Anzahl an Komponenten oder Baugruppen realisiert werden kann.

Gemäß einer noch weiter bevorzugten Ausgestaltung kann die Nachlaufstoppvorrichtung dazu ausgebildet sein, den Wirkeingriff und/oder den Kontakt zwischen dem Aktor zur Förderung der Druckmasse, insbesondere dem Linearantrieb, sowie dem Kolbenboden einer Kartusche aufzuheben, insbesondere temporär aufzuheben. Durch das Aufheben des Wirkeingriffs und/oder des Kontakts kann ein Druck im Innenraum der Kartusche schnell und effizient wieder reduziert werden.

Durch eine Druckentspannung kann die in der Kartusche verbliebene Druckmasse entspannen und selbsttätig den Kolbenboden in verhältnismäßig geringem Umfang zurückverschieben in Richtung des Aktors beziehungsweise des Linearantriebs. Dies kann - wiederum in geringem Umfang - zu einem Zurücklaufen von Druckmasse aus der Zuführleitung in die Kartusche führen, sodass ein Nachlaufen aus der Ausgabevorrichtung verhältnismäßig sicher vermieden werden kann.

Gemäß einer noch weiter bevorzugten Ausgestaltung kann die Nachlaufstoppvorrichtung eine druckbasierte Regelung aufweisen und/oder zur Vermeidung und/oder Verringerung eines Nachlaufens von Druckmasse aus der Ausgabevorrichtung durch eine druckbasierte Regelung ausgebildet sein. Durch eine solche Regelung kann ein unerwünschtes Nachlaufen mit besonders hoher Sicherheit vermieden werden.

Gemäß einer noch weiter bevorzugten Ausgestaltung kann die druckbasierte Regelung zur Erfassung und/oder Verarbeitung eines Förderdrucks der Druckmasse und/oder eines durch einen Aktor zur Förderung der Druckmasse erzeugten und/oder auf einen Kolbenboden einer Kartusche wirkenden Drucks eingerichtet sein. Ein solche Erfassung und Verarbeitung eines Förderdrucks beziehungsweise eines durch einen Aktor erzeugten und/oder auf einen Kolbenboden einer Kartusche wirkenden Drucks lässt sich mit kostengünstigen und betriebssicher funktionierenden Komponenten, insbesondere Drucksensoren und/oder Datenverarbeitungsvorrichtungen, umsetzen. Eine druckbasierte Regelung lässt sich hierdurch besonders vorteilhaft und zu geringen Vorrichtungskosten realisieren.

Gemäß einer noch weiter bevorzugten Ausgestaltung kann die Ausgabevorrichtung eine Abstreifvorrichtung zum Abstreifen von Druckmasse aus einer Ausgabeöffnung oder aus einem Ausgabeschlitz aufweisen. Eine solche Abstreifvorrichtung kann ein unerwünschtes oder unkontrolliertes Nachtropfen von Druckmasse verhindern und die Gefahr der Verunreinigung von Vorrichtungskomponenten lässt sich effektiv verringern.

Gemäß einer noch weiter bevorzugten Ausgestaltung kann die Zuführleitung eine Rücklaufstoppvorrichtung zur Vermeidung und/oder Verringerung des Rücklaufens von Druckmasse entgegen einer Ausgabeströmungsrichtung aufweisen, wobei die Rücklaufstoppvorrichtung bevorzugt als Absperrarmatur ausgebildet ist.

Eine solche Absperrarmatur kann in bevorzugter Weise als Kugelhahn ausgebildet sein und/oder manuell betätigbar sein. Ebenso kann die Absperrarmatur auch als automatisch betätigtes oder betätigbares Sperrventil ausgebildet sein.

Durch eine solche Ausgestaltung kann ein Rücklauf der Druckmasse, beispielsweise aufgrund einer elastischen Verformung der Zuführleitung beziehungsweise einer in der Zuführleitung vorhandene innere Vorspannung der Druckmasse, sicher vermieden werden. Insbesondere lässt sich hierdurch vermeiden, dass die Druckmasse in der Zuführleitung bei einem Wechsel der jeweiligen Kartusche innerhalb der Zuführleitung zurückfließt in Richtung Behälter und aus einem behälterseitigen Ende der Zuführleitung herausgedrückt wird. Die Gefahr von Verunreinigungen im Bereich des Behälters oder einer Kartusche beziehungsweise einer etwaigen Behälteraufnahme lassen sich damit verringern.

Eine Rücklaufstoppvorrichtung kann in bevorzugter Weise vor dem Wechsel des jeweiligen Behälters betätigt werden, insbesondere manuell oder automatisch oder teilautomatisch betätigt werden.

Eine Rücklaufstoppvorrichtung ist ferner besonders dann von Vorteil, wenn die Dosiereinrichtung auch mit einer Nachlaufstoppvorrichtung ausgestattet ist, insbesondere mir einer als Absperrarmatur ausgebildeten Nachlaufstoppvorrichtung. Denn durch eine solche Nachlaufstoppvorrichtung kann ein Rest an Druckmasse in der Zuführleitung nicht mehr in Richtung Ausgabevorrichtung ausweichen, sondern würde bei flexibler Verformung der Zuführleitung tendenziell zurückfließen in Richtung Behälter. Dies kann mit einer Rücklaufstoppvorrichtung zuverlässig vermeiden werden.

Gemäß einer noch weiter bevorzugten Ausgestaltung kann entlang des Verlaufs der Zuführleitung der Abstand der Rücklaufstoppvorrichtung von dem Behälter mit Druckmasse geringer sein als der Abstand der Rücklaufstoppvorrichtung von der Ausgabevorrichtung. Die Gefahr eines Rücklaufs von Druckmasse in der Zuführleitung in Richtung Behälter und eines Heraustretens aus einem behälterseitigen Ende der Zuführleitung kann auf diese weiter verringert werden. Bei geringem Abstand zwischen der Rücklaufstoppvorrichtung und dem Behälter, verringert sich das Risiko, dass eine sich zwischen dem Behälter und der Rücklaufstoppvorrichtung in der Zuführleitung vorhandene innere Spannung der Druckmasse beziehungsweise eine flexible Verformung der Zuführleitung einen unkontrollierten Rücklauf und ein Heraustreten von Druckmasse aus dem behälterseitigen Ende der Zuführleitung verursacht.

Gemäß einer noch weiter bevorzugten Ausgestaltung kann die Zuführleitung zwischen dem Behälter und der Rücklaufstoppvorrichtung zumindest abschnittsweise als starre oder unflexible Leitung ausgebildet sein. Demgegenüber kann die Zuführleitung zwischen der Rücklaufstoppvorrichtung und der Ausgabevorrichtung zumindest abschnittsweise als flexible oder flexibel verformbare Leitung ausgebildet sein.

Ein weiterer unabhängiger Aspekt der vorliegenden Erfindung betrifft eine Vorrichtung zur Herstellung von dreidimensionalen Siebdruckwerkstücken, insbesondere eine 3D-Siebdruckanlage, mit einer ein Drucksieb aufweisenden Druckeinrichtung für die schichtweise Erzeugung zumindest eines Siebdruckwerkstücks in mehreren Druckvorgängen und mit einer Dosiereinrichtung zur dosierten Ausgabe einer pastösen Druckmasse auf das Drucksieb, wobei die Dosiereinrichtung wenigstens einen Behälter zur Aufbewahrung der pastösen Druckmasse und/oder eine Ausgabevorrichtung zur Ausgabe der Druckmasse auf das Drucksieb und wenigstens einen Aktor zur Bewegung des Behälters und/oder der Ausgabevorrichtung aufweist, wobei der Aktor als Portalachsensystem oder als Teil eines Portalachsensystems ausgebildet ist.

Eine derart ausgebildete Vorrichtung nach dem weiteren unabhängigen Aspekt der vorliegenden Erfindung kann in bevorzugter Weise mit einzelnen der voranstehend beschriebenen vorteilhaften Ausgestaltungen oder sämtlichen der voranstehend beschriebenen vorteilhaften Ausgestaltungen ausgebildet sein.

Ein noch weiterer unabhängiger Aspekt der vorliegenden Erfindung betrifft eine Vorrichtung zur Herstellung von dreidimensionalen Siebdruckwerkstücken, insbesondere eine 3D-Siebdruckanlage, mit einer ein Drucksieb aufweisenden Druckeinrichtung für die schichtweise Erzeugung zumindest eines Siebdruckwerkstücks in mehreren Druckvorgängen und mit einer Dosiereinrichtung zur dosierten Ausgabe einer pastösen Druckmasse auf das Drucksieb, wobei die Dosiereinrichtung eine Nachlaufstoppvorrichtung zur Vermeidung und/oder Verringerung des Nachlaufens von Druckmasse aus der Dosiereinrichtung aufweist.

Auch eine derart ausgebildete Vorrichtung nach dem noch weiteren unabhängigen Aspekt der vorliegenden Erfindung kann in bevorzugter Weise mit einzelnen der voranstehend beschriebenen vorteilhaften Ausgestaltungen oder sämtlichen der voranstehend beschriebenen vorteilhaften Ausgestaltungen ausgebildet sein.

Ein noch weiterer unabhängiger Aspekt der vorliegenden Erfindung betrifft ein Verfahren zur Herstellung von dreidimensionalen Siebdruckwerkstücken, insbesondere mit einer voranstehend beschriebenen Vorrichtung, bei dem in einer Druckeinrichtung mit einem Drucksieb ein Siebdruckwerkstücks schichtweise in mehreren Druckvorgängen erzeugt wird und bei dem mit einer Dosiereinrichtung eine pastöse Druckmasse dosiert auf das Drucksieb ausgegeben wird, wobei mittels der Dosiereinrichtung eine Druckmasse aus einem Behälter zur Aufbewahrung der pastösen Druckmasse herausbefördert und über eine Zuführleitung bis zu einer Ausgabevorrichtung zur Ausgabe der Druckmasse auf das Drucksieb hindurchbefördert wird.

Ein noch weiterer unabhängiger Aspekt der vorliegenden Erfindung betrifft ein Verfahren zur Herstellung von dreidimensionalen Siebdruckwerkstücken, insbesondere mit einer voranstehend beschriebenen Vorrichtung, bei dem in einer Druckeinrichtung mit einem Drucksieb ein Siebdruckwerkstücks schichtweise in mehreren Druckvorgängen erzeugt wird und bei dem mit einer Dosiereinrichtung eine pastöse Druckmasse dosiert auf das Drucksieb ausgegeben wird, wobei mittels einer Nachlaufstoppvorrichtung ein Nachlaufen von Druckmasse aus der Dosiereinrichtung vermieden oder verringert wird.

Die vorstehend in Bezug auf die Vorrichtung beschriebenen Einzelheiten und unabhängigen Aspekte, einschließlich der nebengeordneten Aspekte betreffend eine Vorrichtung, gelten in gleicher Weise für die vorstehend beschriebenen erfindungsgemäßen Verfahren gemäß den weiteren unabhängigen Aspekten.

Nachfolgend wird die Erfindung beispielhaft anhand vorteilhafter Ausführungsformen unter Bezugnahme auf die beigefügten Figuren beschrieben.

Es zeigen jeweils schematisch:
- Fig. 1: eine perspektivische Ansicht einer erfindungsgemäßen Vorrichtung gemäß einem Ausführungsbeispiel,
- Fig. 2: eine Seitenansicht der Vorrichtung von Fig. 1 mit offener Darstellung einer Druckeinrichtung ohne Einhausung,
- Fig. 3: eine perspektivische Ansicht einer Druckeinrichtung der Vorrichtung von Fig. 1,
- Fig. 4: eine perspektivische Ansicht einer Dosiereinrichtung der Vorrichtung von Fig. 1,
- Fig. 5: eine Seitenansicht der Dosiereinrichtung von Fig. 4,
- Fig. 6: eine Teilansicht der Dosiereinrichtung von Fig. 4 bei mit offener Darstellung einer Behälter-Einhausung,
- Fig. 7: eine Schnittdarstellung entlang der Schnittlinie A-A aus Fig. 6,
- Fig. 8: eine Detailansicht einer Ausgabevorrichtung gemäß einem Ausführungsbeispiel der vorliegenden Erfindung,
- Fig. 9: eine Detailansicht einer Ausgabevorrichtung gemäß einem weiteren Ausführungsbeispiel der vorliegenden Erfindung,
- Fig. 10: eine Detailansicht einer Ausgabevorrichtung gemäß einem noch weiteren Ausführungsbeispiel der vorliegenden Erfindung,
- Fig. 11: eine Teilansicht einer Druckeinrichtung sowie einer Dosiereinrichtung gemäß einem weiteren Ausführungsbeispiel,
- Fig. 12: eine Schnittdarstellung entlang der Schnittlinie A-A aus Fig. 11,
- Fig. 13: eine Detailansicht einer Ausgabevorrichtung gemäß dem Ausführungsbeispiel von Fig. 11 und 12,
- Fig. 14: eine perspektivische Ansicht einer Dosiereinrichtung gemäß einem weiteren Ausführungsbeispiel der vorliegenden Erfindung,
- Fig. 15: eine Seitenansicht der Dosiereinrichtung von Fig. 14,
- Fig. 16: eine perspektivische Ansicht einer erfindungsgemäßen Vorrichtung gemäß einem weiteren Ausführungsbeispiel,
- Fig. 17: eine Schnittdarstellung der Vorrichtung von Fig. 16,
- Fig. 18: eine Seitenansicht der Vorrichtung von Fig. 16,
- Fig. 19: eine perspektivische Ansicht einer Dosiereinrichtung gemäß einem Ausführungsbeispiel der vorliegenden Erfindung,
- Fig. 20: eine Seitenansicht der Dosiereinrichtung von Fig. 19,
- Fig. 21: eine perspektivische Ansicht einer Dosiereinrichtung gemäß einem weiteren Ausführungsbeispiel der vorliegenden Erfindung,
- Fig. 22: eine Seitenansicht der Dosiereinrichtung von Fig. 21,
- Fig. 23: eine perspektivische Teilansicht der Dosiereinrichtung von Fig. 22 mit dargestellter Ausgabevorrichtung sowie dargestelltem Drucksieb,
- Fig. 24: eine Detailseitenansicht der Ausgabevorrichtung von Fig. 23 mit dargestellten Rakeln,
- Fig. 25: eine Draufsicht auf ein Drucksieb einer erfindungsgemäßen Vorrichtung gemäß einem Ausführungsbeispiel der vorliegenden Erfindung,
- Fig. 26: eine Seitenansicht einer Behälterwechselvorrichtung gemäß einem Ausführungsbeispiel der vorliegenden Erfindung in einer ersten Betriebsstellung,
- Fig. 27: eine Seitenansicht der Behälterwechselvorrichtung von Fig. 26 in einer weiteren Betriebsstellung,
- Fig. 28: eine Detailansicht einer Behälterwechselvorrichtung gemäß einem Ausführungsbeispiel der vorliegenden Erfindung,
- Fig. 29: eine weitere Detailansicht der Behälterwechselvorrichtung gemäß Fig. 28,
- Fig. 30: eine Seitenansicht einer Dosiereinrichtung gemäß einem weiteren Ausführungsbeispiel der vorliegenden Erfindung,
- Fig. 31: eine Seitenansicht der Dosiereinrichtung von Fig. 30 während der Druckmassenzuführung,
- Fig. 32: eine Seitenansicht der Dosiereinrichtung von Fig. 30 während einer Siebflutung durch eine Flutrakelbewegung,
- Fig. 33: eine Seitenansicht der Dosiereinrichtung von Fig. 30 nach erfolgtem Behälterwechsel,
- Fig. 34: eine weitere perspektivische Ansicht einer Dosiereinrichtung gemäß dem Ausführungsbeispiel von Fig. 14 und 15,
- Fig. 35: eine Detailansicht von Fig. 34.

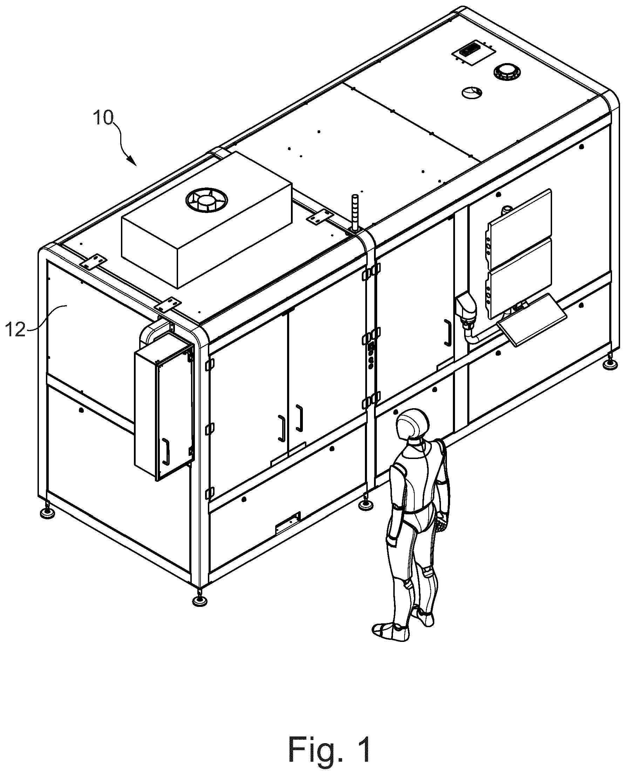

Die Fig. 1 zeigt eine perspektivische Ansicht einer Vorrichtung 10 zur Herstellung von dreidimensionalen Siebdruckwerkstücken gemäß einem Ausführungsbeispiel der vorliegenden Erfindung. Bei der Vorrichtung 10 kann es sich insbesondere um eine 3D-Siebdruckanlage handeln. Insbesondere kann es sich bei der Vorrichtung 10 um eine 3D-Siebdruckanlage für die Herstellung von Arzneimitteln handeln.

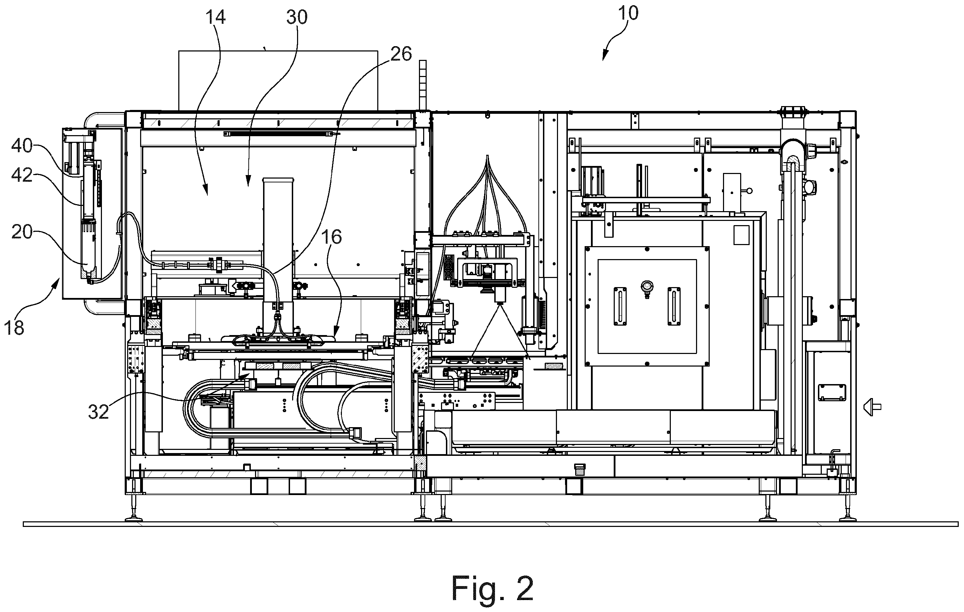

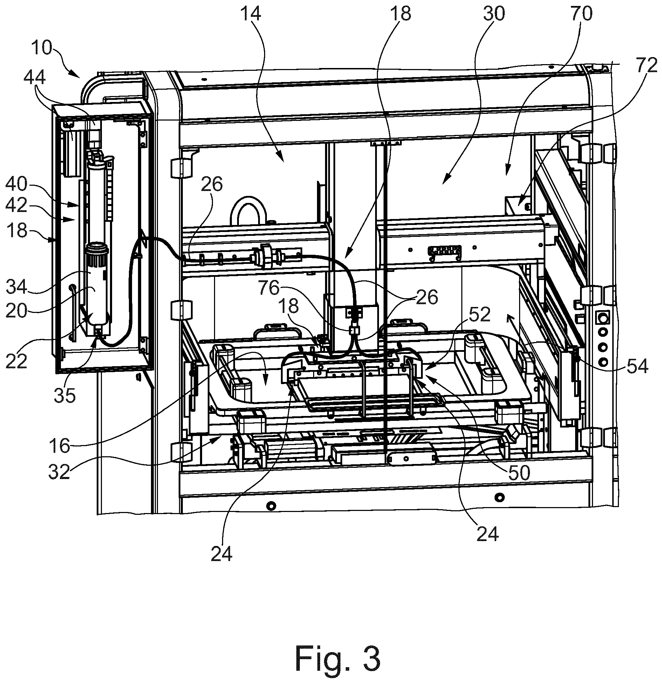

Figur 2 zeigt eine Seitenansicht der Vorrichtung 10 von Figur 1. Die Vorrichtung 10 kann eine Einhausung 12 aufweisen, die in Figur 2 zur besseren Darstellung nicht gezeigt ist. Ferner weist die Vorrichtung 10 eine Druckeinrichtung 14 auf, die in Figur 2 mithin offen dargestellt ist. Figur 3 zeigt ferner eine perspektivische Ansicht der Druckeinrichtung 14 der Vorrichtung 10 von Figur 1.

Die Druckeinrichtung 14 kann für die schichtweise Erzeugung zumindest eines hier nicht näher dargestellten Siebdruckwerkstücks in mehreren Druckvorgängen ausgebildet sein. Hierzu kann die Druckeinrichtung ein Drucksieb 16 aufweisen. Ferner kann die Druckeinrichtung 14 eine Dosiereinrichtung 18 zur dosierten Ausgabe einer pastösen Druckmasse auf das Drucksieb 16 aufweisen. Die Druckeinrichtung 14 kann beispielsweise angrenzend zu weiteren Funktionsbereichen der Vorrichtung 10 angeordnet sein, beispielsweise zu einem Inspektionsbereich für Siebdruckwerkstücke und/oder zu einem Trocknungsbereich für Siebdruckwerkstücke. Die Abmessungen der Druckeinrichtung 14 können im Wesentlichen durch das Drucksieb 16 und/oder durch eine Rahmenhalterung und/oder Aufhängung für das Drucksieb 16 bedingt und/oder durch einen Drucktisch 32 begrenzt sein.

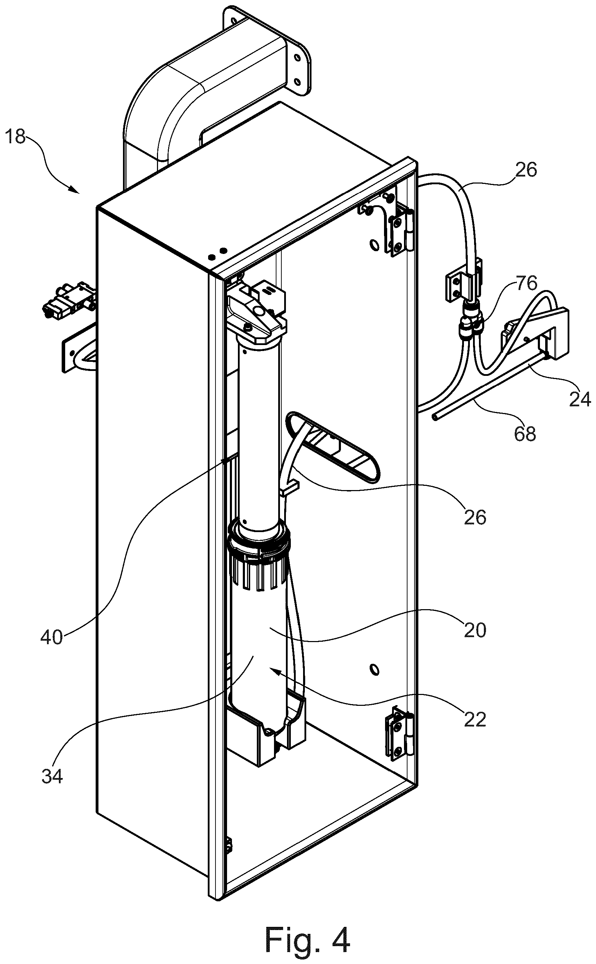

Ein Ausführungsbeispiel für eine Dosiereinrichtung 18 kann den Figuren 4 bis 8 entnommen werden. Eine solche Dosiereinrichtung 18 kann wenigstens einen Behälter 20 zur Aufbewahrung eine pastösen Druckmasse 22, eine Ausgabevorrichtung 24 zur Ausgabe der Druckmasse 22 auf das Drucksieb 16 und eine zwischen dem Behälter 20 und der Ausgabevorrichtung 24 verlaufende Zuführleitung 26 zur Zuführung der Druckmasse 22 aus dem Behälter 20 bis zur Ausgabevorrichtung 24 aufweisen.

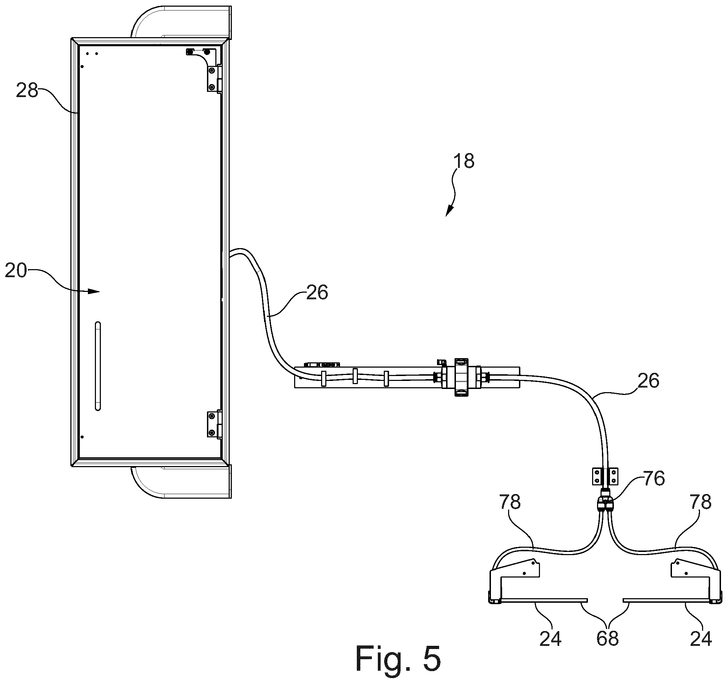

Wie in Figur 5 dargestellt, kann die Dosiereinrichtung 18 auch eine mehrteilig ausgebildete Ausgabevorrichtung 24 aufweisen, wie nachfolgend von näher dargelegt wird. Ebenso kann die Ausgabevorrichtung 24 einteilig ausgebildet sein.

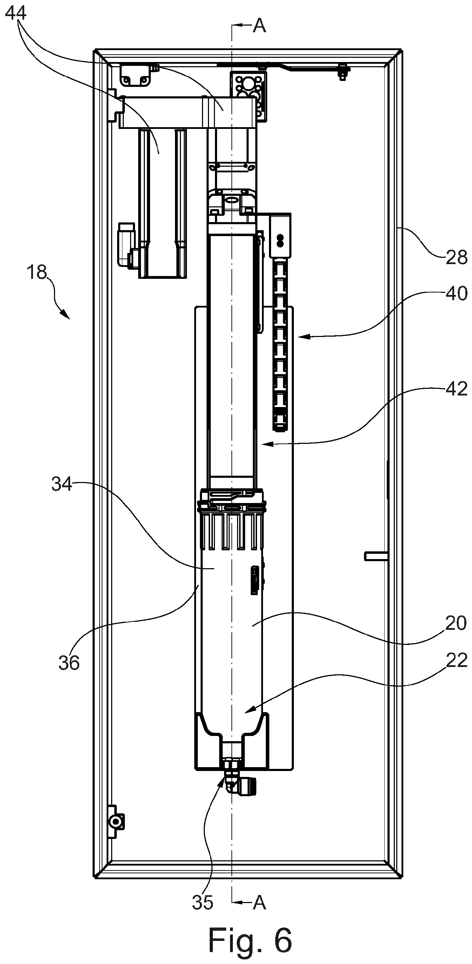

In Figur 5 ist der Behälter 20 innerhalb einer Einhausung 28 dargestellt und damit nicht näher erkennbar. Die Figur 6 zeigt eine Schnittdarstellung entlang der Linie A-A aus Figur 5. In Figur 6 ist der Behälter 20 in einem weitgehend entleerten Zustand dargestellt, sodass lediglich ein geringer Rest an Druckmasse 22 in dem Behälter 20 gezeigt ist.

Den Figuren 2 und 3 kann entnommen werden, dass der Behälter 20 außerhalb eines Druckbereichs 30 der Druckeinrichtung 14 angeordnet sein kann. Dabei kann der Behälter 20 in horizontaler Richtung relativ zum Drucksieb 16 beabstandet angeordnet sein.

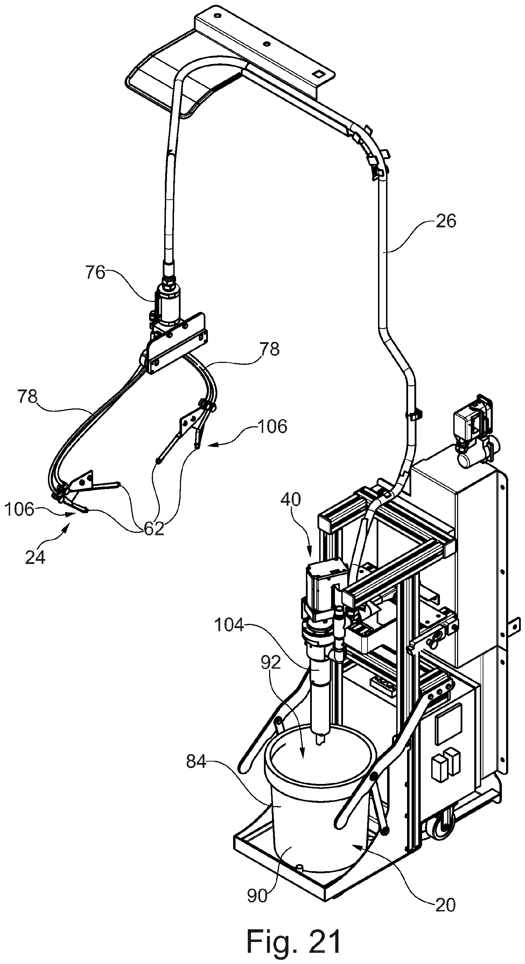

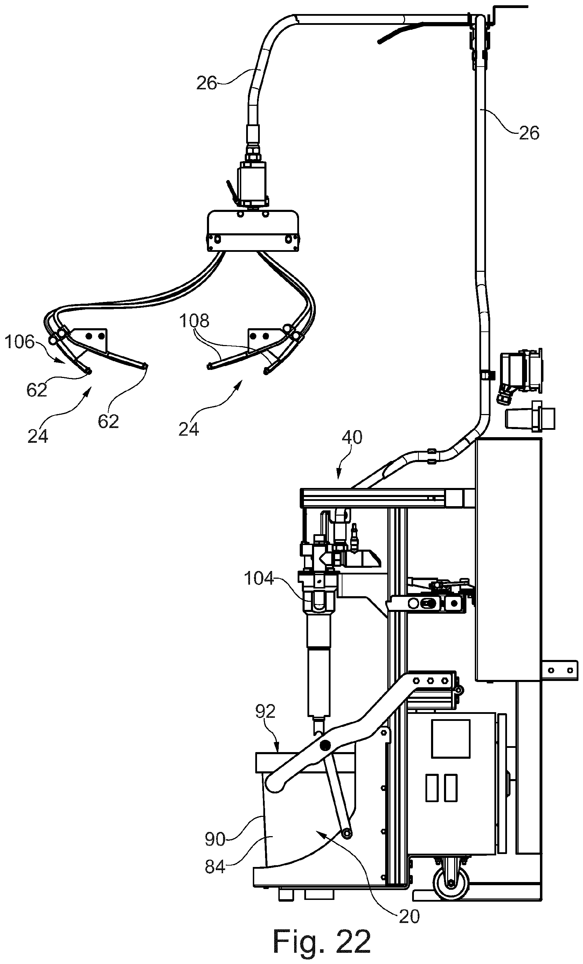

Zusätzlich oder alternativ kann der Behälter 20 in vertikaler Richtung unterhalb eines Drucktisches 32 der Druckeinrichtung 14 angeordnet sein, was in dem Ausführungsbeispiel gemäß Figuren 1 bis 4 nicht gezeigt ist jedoch beispielsweise in dem Ausführungsbeispiel gemäß Figuren 21 und 22 vorgesehen sein kann.

Den Figuren 2 und 3 kann ferner entnommen werden, dass der Behälter 20 insbesondere auch während der Ausgabe der Druckmasse 22 außerhalb eines Druckbereichs 30 der Druckeinrichtung 14 und/oder in horizontaler Richtung relativ zum Drucksieb 16 beabstandet angeordnet sein kann und bleiben kann.

Zusätzlich oder alternativ kann der Behälter 20 insbesondere auch während der Ausgabe der Druckmasse 22 in vertikaler Richtung unterhalb eines Drucktisches 32 der Druckeinrichtung 14 angeordnet sein und bleiben, was in dem Ausführungsbeispiel gemäß Figuren 1 bis 4 nicht gezeigt ist jedoch beispielsweise in dem Ausführungsbeispiel gemäß Figuren 21 und 22 vorgesehen sein kann.

Der Behälter 20 kann ferner während der Ausgabe der Druckmasse 22 stationär und/oder unbeweglich angeordnet sein und/oder bleiben.

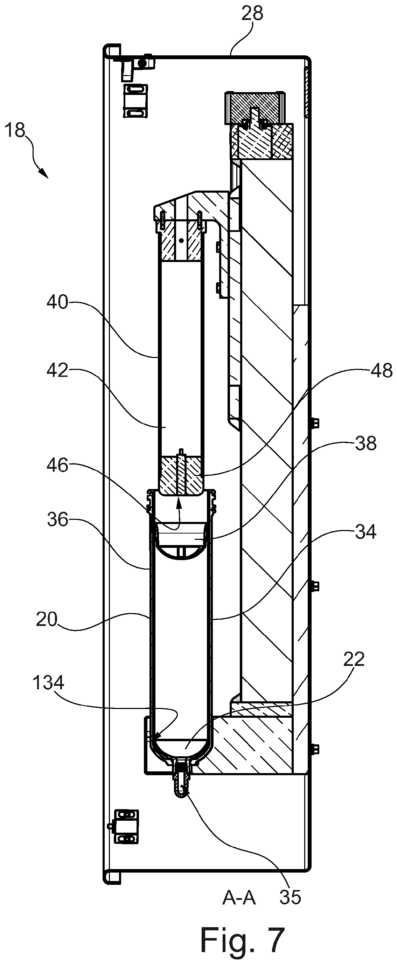

In dem Ausführungsbeispiel gemäß Figuren 1 bis 7 kann der Behälter 20 insbesondere als Kartusche 34 ausgebildet sein, beispielsweise als Einwegkartusche oder als Mehrwegkartusche. Eine solche Kartusche 34 kann geschlossen ausgebildet sein und/oder eine öffenbare und/oder geöffnete Auslassöffnung 35 aufweisen. Ferner kann eine solche Kartusche 34 einen relativ zu einer umlaufenden Kartuschen-Seitenwand 36 verschiebbaren Kolbenboden 38 aufweisen, wie näher in den Figuren 6 und 7 dargestellt ist.

Ein als Kartusche 34 ausgebildeter Behälter 20 kann ein Aufnahmevolumen von mindestens 50 cm³, bevorzugt von mindestens 100 cm³, weiter bevorzugt von mindestens 200 cm³, weiter bevorzugt von mindestens 300 cm³, weiter bevorzugt von mindestens 500 cm³, weiter bevorzugt von mindestens 800 cm³, weiter bevorzugt von mindestens 1000 cm³, weiter bevorzugt von mindestens 1200 cm³, weiter bevorzugt von mindestens 1500 cm³, noch weiter bevorzugt von mindestens 1800 cm³ und noch weiter bevorzugt von mindestens 2000 cm³ aufweisen.

Ferner kann ein als Kartusche 34 ausgebildeter Behälter 20 ein Aufnahmevolumen von bis zu 200 cm³, bevorzugt von bis zu 500 cm³, weiter bevorzugt von bis zu 700 cm³, weiter bevorzugt von bis zu 900 cm³, weiter bevorzugt von bis zu 1000 cm³, weiter bevorzugt von bis zu 1200 cm³, weiter bevorzugt von bis zu 1500 cm³, weiter bevorzugt von bis zu 1700 cm³, weiter bevorzugt von bis zu 2000 cm³, weiter bevorzugt von bis zu 2500 cm³, noch weiter bevorzugt von bis zu 3000 cm³und noch weiter bevorzugt von bis zu 4000 cm³ aufweisen.

Die Dosiereinrichtung 18 kann ferner wenigstens einen Aktor 40 zur Förderung der Druckmasse 22 aus dem Behälter 20 aufweisen.

In dem Ausführungsbeispiel gemäß Fig. 1 bis 7 kann der Aktor 40 zur Förderung der Druckmasse 22 als Druckerhöhungsvorrichtung 42 zur Druckbeaufschlagung der Druckmasse 22 in dem Behälter 20 und/oder zur druckbasierten Förderung der Druckmasse 22 aus dem Behälter 20 heraus ausgebildet sein.

Eine solche Druckerhöhungsvorrichtung 42 kann einen Linearantrieb 44 aufweisen, wobei ein Linearantrieb 44 bevorzugt als elektrischer oder elektromechanischer Linearantrieb 44 ausgebildet sein kann. Ebenso kann ein Linearantrieb 44 als elektrischer Spindelantrieb und/oder als Elektrozylinder und/oder als Linearaktor ausgebildet sein.

Eine Druckerhöhungsvorrichtung kann ferner als pneumatischer und/oder hydraulischer Linearantrieb oder Linearzylinder ausgebildet sein, was in dem Ausführungsbeispiel gemäß Figuren 1 bis 7 jedoch nicht näher dargestellt ist.

Die Druckerhöhungsvorrichtung 42 kann dazu ausgebildet und/oder eingerichtet sein, den Kolbenboden 38 einer mit Druckmasse 22 gefüllten Kartusche 34 mit einer Druckkraft zu beaufschlagen und/oder den Kolbenboden 38 einer Kartusche 34 relativ zu der jeweiligen Kartuschen-Seitenwand 36 in einer Längsrichtung zu verschieben, um den Innendruck der Kartusche 34 zu erhöhen. Auf diese Weise kann die Druckmasse 22 in besonders vorteilhafter Weise aus der Auslassöffnung 35 herausgepresst und in die Zuführleitung 26 bis hin zur Ausgabevorrichtung 24 geleitet werden.

Weiterhin kann die Dosiereinrichtung 18 wenigstens einen Sensor 46 zur Positionsbestimmung eines Kolbenbodens 38 einer Kartusche 34 aufweisen, wie in Fig. 7 schematisch gezeigt ist.

Der Sensor 46 kann dazu eingerichtet sein, eine Relativposition zwischen einem Kolbenboden 38 und dem Aktor 40 zur Förderung der Druckmasse 22 zu bestimmen. Insbesondere kann der Sensor 46 dazu eingerichtet sein, eine Relativposition zwischen einem Kolbenboden 38 und einem freien Ende eines Stößels 48 des Aktors 40 zu bestimmen.

Ein solcher Stößel 48 kann Teil des Linearantriebs 44 sein oder mit dem Linearantrieb 44 zur Übertragung einer Antriebskraft verbunden sein.

Ferner kann der Sensor 46 dazu eingerichtet sein, eine Absolut-Position des Kolbenbodens 38 einer Kartusche 34 zu bestimmen.

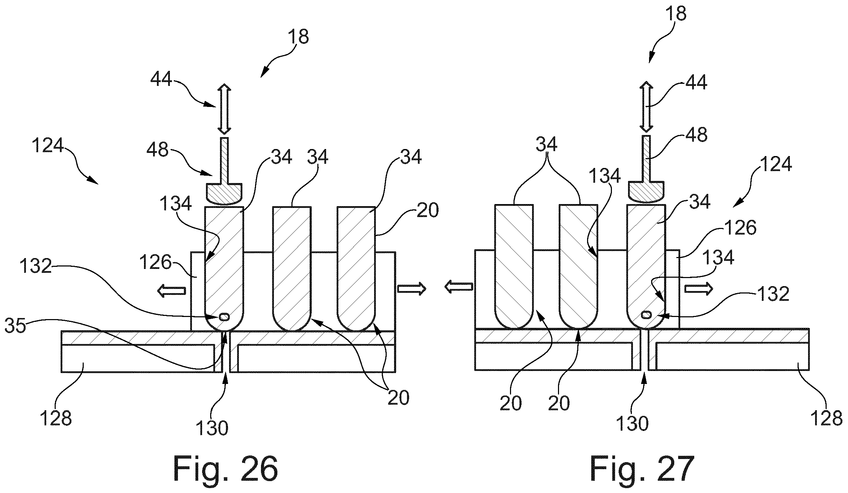

Es können ferner mehrere Sensoren vorgesehen sein, die unterschiedliche Funktionen und/oder zumindest teilweise redundante Funktionen bereitstellen. Beispielsweise kann ein Sensor zur Überwachung eines Füllstandes des Behälters 20 vorgesehen sein, wie nachfolgend in Bezug auf die Ausführungsbeispiele in Figuren 26 bis 33 noch näher beschrieben wird.

Ein Sensor zur Überwachung eines Füllstandes des Behälters 20 kann gesondert von dem Sensor 46 vorgesehen sein. Ebenso kann ein Sensor zur Überwachung eines Füllstandes durch den Sensor 46 gebildet sein, der wiederum zur Bestimmung einer Absolut-Position des Kolbenbodens 38 einer Kartusche 34 und/oder zur Bestimmung einer Relativposition zwischen einem Kolbenboden 38 und dem Aktor 40 zur Förderung der Druckmasse 22 eingerichtet sein kann. Aus einer solchen Absolut-Position und/oder Relativposition kann ein Füllstand des Behälters 20 ermittelt werden.

Der Sensor 46 zur Positionsbestimmung des Kolbenbodens 38 kann insbesondere als induktiver Sensor und/oder als kapazitiver Sensor und/oder als mechanischer Sensor ausgebildet sein.

Wie in Figur 7 schematisch angedeutet worden ist, kann der Sensor 46 an dem Aktor 40 zur Förderung der Druckmasse 22 angeordnet sein. Insbesondere kann der Sensor 46 an dem Linearantrieb 44 beziehungsweise an einem Stößel 48 angeordnet sein, wobei der Stößel 48 als Teil des Aktors 40 und/oder des Linearantriebs 44 ausgebildet oder mit dem Linearantrieb 44 gekoppelt sein kann.

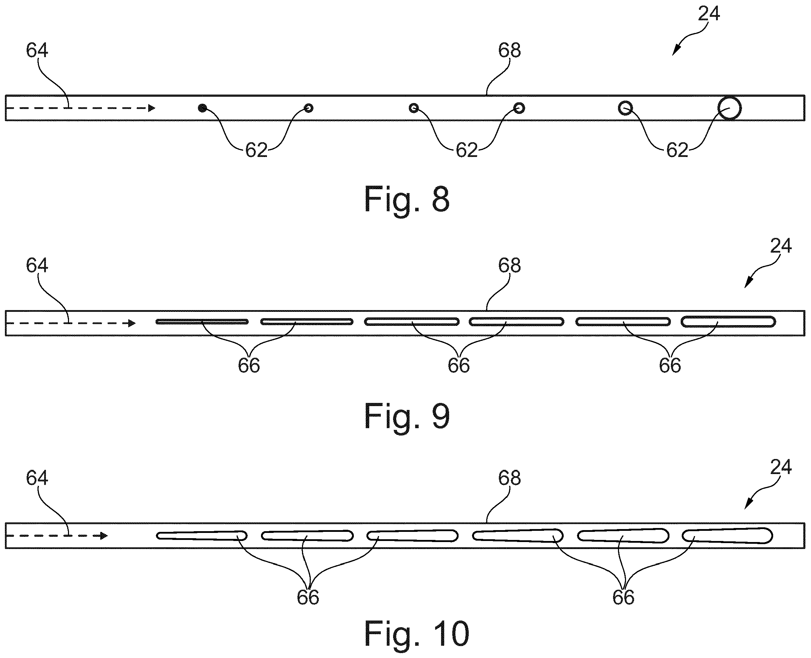

Die Zuführleitung 26 kann zumindest abschnittsweise entlang ihrer Länge oder entlang ihrer gesamten Länge flexibel verformbar und/oder elastisch verformbar und/oder biegsam und/oder frei von plastischer Verformung biegsam ausgebildet sein. Ebenso kann die Zuführleitung 26 flexibel einer Relativbewegung zwischen der Ausgabevorrichtung 24 und dem Behälter 20 folgen. Eine solche Relativbewegung zwischen der Ausgabevorrichtung 24 und dem Behälter 20 kann beispielsweise durch eine Rakelbewegung erfolgen, wie nachstehend beispielsweise bezugnehmend auf die Figuren 10 und 11 sowie 29 bis 33 noch näher erläutert wird.

Weiterhin kann die Zuführleitung 26 zumindest abschnittsweise oder entlang der gesamten Länge aus einem Kunststoffmaterial erzeugt sein. Insbesondere kann die Zuführleitung 26 zumindest abschnittsweise oder entlang der gesamten Länge aus Polyamid und/oder Polyester ausgebildet sein oder einen solchen Kunststoff aufweisen, beispielsweise als Beschichtung und/oder Umhüllung.

Ferner kann die Zuführleitung 26 und/oder ein Abschnitt der Zuführleitung 26 werkzeugfrei auswechselbar sein. Durch eine solche Auswechselbarkeit wird der Einsatz unterschiedlicher und/oder abwechselnd zu verwendender Druckmassen vereinfacht und eine unerwünschte Verunreinigung von Druckmassen durch Reste in der Zuführleitung 26 wird verhindert.

Die Zuführleitung 26 kann eine Länge aufweisen von mindestens 10 cm, bevorzugt von mindestens 15 cm, weiter bevorzugt von mindestens 20 cm, weiter bevorzugt von mindestens 25 cm, weiter bevorzugt von mindestens 30 cm, weiter bevorzugt von mindestens 35 cm, weiter bevorzugt von mindestens 40 cm, weiter bevorzugt von mindestens 50 cm, weiter bevorzugt von mindestens 60 cm, weiter bevorzugt von mindestens 80 cm, weiter bevorzugt von mindestens 100 cm, weiter bevorzugt von mindestens 120 cm, weiter bevorzugt von mindestens 150 cm, weiter bevorzugt von mindestens 170 cm, weiter bevorzugt von mindestens 200 cm, weiter bevorzugt von mindestens 250 cm, noch weiter bevorzugt von mindestens 300 cm.

Ebenso kann die Zuführleitung eine Länge aufweisen von bis zu 20 cm, bevorzugt von bis zu 30 cm, weiter bevorzugt von bis zu 40 cm, weiter bevorzugt von bis zu 50 cm, weiter bevorzugt von bis zu 70 cm, weiter bevorzugt von bis zu 100 cm, weiter bevorzugt von bis zu 150 cm, weiter bevorzugt von bis zu 200 cm, weiter bevorzugt von bis zu 250 cm, weiter bevorzugt von bis zu 300 cm, weiter bevorzugt von bis zu 400 cm, weiter bevorzugt von bis zu 500 cm, noch weiter bevorzugt von bis zu 1000 cm.

Die Figuren 8 bis 10 zeigen Detailansichten einer Ausgabevorrichtung 24 gemäß unterschiedlichen Ausführungsbeispielen der vorliegenden Erfindung.

In dem Ausführungsbeispiel gemäß Figur 8 kann die Ausgabevorrichtung 24 eine Mehrzahl von Ausgabeöffnungen 62 für die Ausgabe der Druckmasse 22 auf das Drucksieb 16 aufweisen. Insbesondere kann die Ausgabevorrichtung 24 eine Mehrzahl diskret zueinander ausgebildete Ausgabeöffnungen 62 aufweisen. Zumindest zwei Ausgabeöffnungen 62 können unterschiedlich zueinander dimensioniert sein. Insbesondere können sämtliche Ausgabeöffnungen 62 unterschiedlich zueinander dimensioniert sein. Mithin kann jede Ausgabeöffnung 62 anders dimensioniert sein, als jede der anderen Ausgabeöffnung 62 der jeweiligen Ausgabevorrichtung 24.

Hierzu können zumindest zwei Ausgabeöffnungen 62 zueinander unterschiedlich dimensionierte Querschnittsgrößen aufweisen. Insbesondere kann jede Ausgabeöffnung 62 eine Querschnittsgröße aufweisen, die anders dimensioniert ist, als die Querschnittsgröße jeder anderen Ausgabeöffnung 62. In dem Ausführungsbeispiel gemäß Figur 8 können die Ausgabeöffnungen 62 rund, insbesondere kreisrund, ausgebildet sein. Eine Ausgabevorrichtung 24 kann auch unterschiedlich geformte Ausgabeöffnungen 62 aufweisen.

In bevorzugter Weise kann zumindest eine der Ausgabeöffnungen 62 kleiner dimensioniert sein als eine in Strömungsrichtung 64 der Druckmasse 22 nachgelagerte Ausgabeöffnung 62. Ebenso kann eine in Strömungsrichtung 64 der Druckmasse 22 nachgelagert angeordnete Ausgabeöffnung 62 größer dimensioniert sein als zumindest eine in Strömungsrichtung 64 vorgelagerte Ausgabeöffnung 62 oder sämtliche in Strömungsrichtung 64 vorgelagerte Ausgabeöffnungen 62.

Je weiter die jeweilige Druckmasse 22 in der Ausgabevorrichtung 24 entlang der Strömungsrichtung 64 fließt, desto eher wird die Druckmasse 22 durch eine verhältnismäßig groß dimensionierte Ausgabeöffnung 62 herausgeleitet oder ausgepresst. Ein sich in Strömungsrichtung 64 einstellender Druckabfall innerhalb der Ausgabevorrichtung 24 kann hierdurch gut ausgeglichen werden und durch die unterschiedlich dimensionierten Ausgabeöffnungen 62 kann dennoch ein gleichmäßiger oder gleich beziehungsweise verhältnismäßig gut verteilter Druckmassenaustritt sichergestellt werden.

Die Mehrzahl von Ausgabeöffnungen 62 der Ausgabevorrichtung 24 kann ferner dazu ausgebildet und/oder angeordnet sein, die Ausgabe der Druckmasse 22 auf das jeweilige Drucksieb 16 in zueinander diskreten Druckmasseabschnitten vorzunehmen. Die jeweils auf einem Drucksieb 16 aufbrachten Druckmasseabschnitte können bei einer solchen Ausgestaltung klar voneinander differenziert werden und eine besonders kontrollierte Ausgabe lässt sich hierdurch gewährleisten.

Mehrere oder die Mehrzahl von Ausgabeöffnungen 62 können zwischen einem Flutrakel 50 und einem Druckrakel 52 verteilt angeordnet sein, insbesondere in einer Richtung quer oder unter einem Winkel zu einer Rakelrichtung 54 verteilt angeordnet sein. Mithin kann eine beispielsweise in Figur 8 dargestellte Ausgabevorrichtung 24 derart zwischen dem Flutrakel 50 und dem Druckrakel 52 verlaufend angeordnet sein, dass zumindest mehrere oder sämtliche der Ausgabeöffnungen 62 zwischen dem Flutrakel 50 und dem Druckrakel 52 verteilt angeordnet sind.

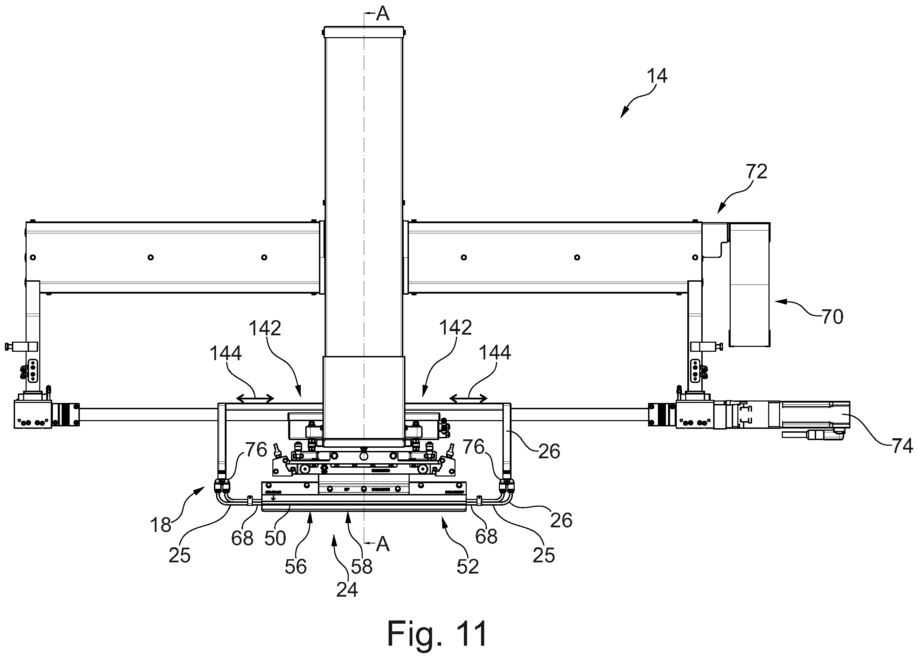

Die Anordnung einer Ausgabevorrichtung 24 zwischen einem Flutrakel 50 und einen Druckrakel 52 oder zwischen zwei Druckrakeln wird nachfolgend noch näher in Bezug auf das Ausführungsbeispiel in den Figuren 11 bis 13 näher erläutert.

Figur 9 zeigt eine Detailansicht einer Ausgabevorrichtung 24 gemäß einem weiteren Ausführungsbeispiel der vorliegenden Erfindung. Das Ausführungsbeispiel in Figur 9 unterscheidet sich von dem Ausführungsbeispiel in Figur 8 betreffend die Form der Ausgabeöffnungen 62.

Die Ausgabevorrichtung 24 gemäß Figur 9 weist zumindest einen Ausgabeschlitz 66 oder mehrere Ausgabeschlitze 66 auf. Dabei kann zumindest ein Ausgabeschlitz 66 bevorzugt in einer Richtung quer oder unter einem Winkel zur Rakelrichtung 54 verlaufen. Insbesondere kann eine Längserstreckung des zumindest einen Ausgabeschlitzes 66 bevorzugt in einer Richtung quer oder unter einem Winkel zur Rakelrichtung 54 verlaufen. Ferner kann die Längserstreckung des zumindest einen Ausgabeschlitzes 66 zumindest abschnittsweise in Strömungsrichtung 64 der Druckmasse 22 innerhalb der jeweiligen Ausgabevorrichtung 24 verlaufen.

Sämtliche Ausgabeschlitze 66 können in ihrer Längserstreckung in Strömungsrichtung 64 und/oder quer oder unter einem Winkel zur Rakelrichtung 54 verlaufen. Zumindest zwei oder sämtliche Ausgabeschlitze 66 können in ihrer Längserstreckung fluchtend zueinander ausgebildet sein.

Zumindest zwei Ausgabeschlitze 66 können unterschiedlich zueinander dimensioniert sein. Insbesondere können sämtliche Ausgabeschlitze 66 unterschiedlich zueinander dimensioniert sein. Mithin kann jeder Ausgabeschlitz 66 anders dimensioniert sein, als jeder der anderen Ausgabeschlitze 66 der jeweiligen Ausgabevorrichtung 24.

Hierzu können zumindest zwei Ausgabeschlitze 66 zueinander unterschiedlich dimensionierte Schlitzbreiten aufweisen. Insbesondere jeder Ausgabeschlitz 66 kann eine Schlitzbreite aufweisen, die anders dimensioniert ist, als die Schlitzbreite jedes anderen Ausgabeschlitzes 66.

In bevorzugter Weise kann zumindest einer der Ausgabeschlitze 66 kleiner dimensioniert sein als einer in Strömungsrichtung 64 der Druckmasse 22 nachgelagerter Ausgabeschlitz 66. Ebenso kann ein in Strömungsrichtung 64 der Druckmasse 22 nachgelagert angeordneter Ausgabeschlitz 66 größer beziehungsweise breiter dimensioniert sein als zumindest einer in Strömungsrichtung 64 vorgelagerter Ausgabeschlitz 66 oder sämtliche in Strömungsrichtung 64 vorgelagerte Ausgabeschlitze 66. Ein sich in Strömungsrichtung 64 einstellender Druckabfall innerhalb der Ausgabevorrichtung 24 kann hierdurch geeignet ausgeglichen werden und durch die unterschiedlich dimensionierten Ausgabeschlitze 66 kann dennoch ein gleichmäßiger oder gleich beziehungsweise verhältnismäßig gut verteilter Druckmassenaustritt sichergestellt werden.

In dem Ausführungsbeispiel gemäß Figur 9 kann zumindest einen Ausgabeschlitz 66 der Ausgabevorrichtung 24 entlang der Strömungsrichtung 64 der Druckmasse 22 eine zumindest abschnittsweise gleichbleibende Größe und/oder Breite aufweisen.

Ferner kann vorgesehen sein, dass die Ausgabeschlitze 66 einer Ausgabevorrichtung unterschiedlich dimensionierte Schlitzlängen aufweisen, was hier nicht näher gezeigt ist.

Figur 10 zeigt eine Detailansicht einer Ausgabevorrichtung 24 gemäß einem noch weiteren Ausführungsbeispiel der vorliegenden Erfindung. Das Ausführungsbeispiel in Figur 10 unterscheidet sich von dem Ausführungsbeispiel in Figur 9 betreffend die Form der Ausgabeschlitze 66. Die unterschiedlichen Dimensionierungen der Ausgabeschlitze 66, wie voranstehend in Bezug auf Figur 9 beschrieben, können auch in dem Ausführungsbeispiel gemäß Figur 10 vorgesehen sein.

Darüber hinaus kann in dem Ausführungsbeispiel gemäß Figur 10 vorgesehen sein, dass zumindest ein Ausgabeschlitz 66 der Ausgabevorrichtung 24 entlang der Längserstreckung eine sich verändernde Breite aufweist. Bevorzugt kann dies bei sämtlichen Ausgabeschlitzen 66 vorgesehen sein.

Zumindest ein Ausgabeschlitz 66 der Ausgabevorrichtung 24 kann an voneinander in Längserstreckung des Ausgabeschlitzes 66 beabstandeten Abschnitten unterschiedliche Breiten aufweisen. Bevorzugt können sämtliche Ausgabeschlitze 66 der Ausgabevorrichtung 24 an voneinander in Längserstreckung des jeweiligen Ausgabeschlitzes 66 beabstandeten Abschnitten unterschiedliche Breiten aufweisen.

Dabei kann zumindest ein Ausgabeschlitz 66 der Ausgabevorrichtung 24 in einem in Strömungsrichtung 64 der Druckmasse 22 nachgelagert ausgebildeten Schlitzabschnitt größer und/oder breiter dimensioniert sein als zumindest ein in Strömungsrichtung 64 vorgelagerter Schlitzabschnitt. Dies kann wiederum bevorzugt bei sämtlichen Ausgabeschlitzen 66 vorgesehen sein.

In dem Ausführungsbeispiel gemäß Figur 10 kann zumindest einen Ausgabeschlitz 66 der Ausgabevorrichtung 24 entlang der Strömungsrichtung 64 der Druckmasse 22 eine zumindest abschnittsweise kontinuierlich zunehmende Größe und/oder Breite aufweisen. Dies kann bevorzugt bei sämtlichen Ausgabeschlitzen 66 der Ausgabevorrichtung 24 gemäß Figur 10 vorgesehen sein.

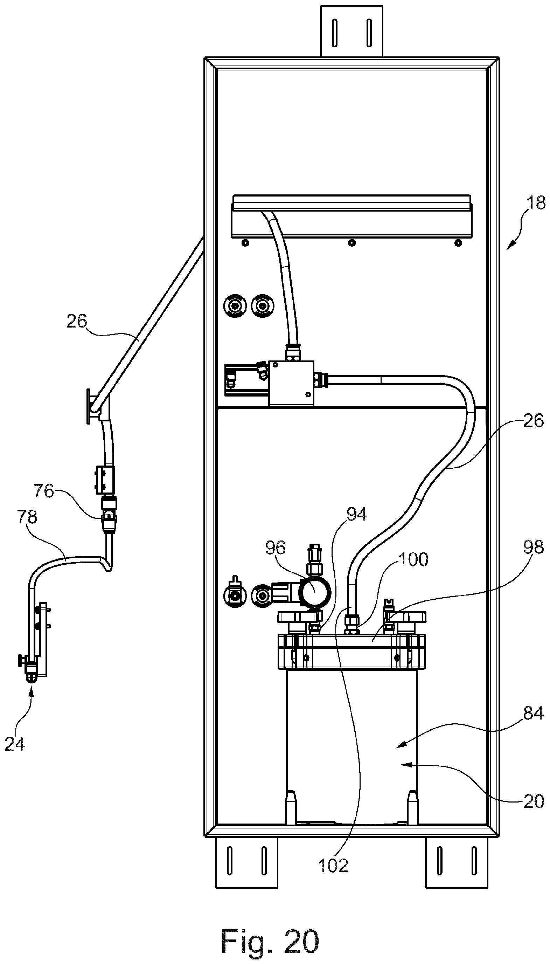

In den Ausführungsbeispielen gemäß Figuren 1 bis 10 sowie auch in den nachfolgend noch näher erläuterten Ausführungsbeispielen gemäß Figuren 11 bis 25 kann die Ausgabevorrichtung 24 zumindest einen Ausgaberohrabschnitt 68 oder eine Mehrzahl von Ausgaberohrabschnitten 68 aufweisen.

Die voranstehend unter Bezugnahme auf die Figuren 8 bis 10 gezeigten Ausgabevorrichtungen 24 können jeweils als Ausgaberohrabschnitt 68 ausgebildet sein beziehungsweise kann eine Ausgabevorrichtung 24 zumindest einen entsprechend der Ausführungsbeispiele in den Figuren 8 bis 10 ausgebildeten Ausgaberohrabschnitt 68 aufweisen. Ebenso kann eine Ausgabevorrichtung 24 mehrere solche Ausgaberohrabschnitte 68 aufweisen.

In einem solchen Ausgaberohrabschnitt 68 kann wenigstens eine Ausgabeöffnung 62 und/oder ein Ausgabeschlitz 66 oder eine Mehrzahl von Ausgabeöffnungen 62 und/oder Ausgabeschlitze 66 ausgebildet sein. Eine in einem Ausgaberohrabschnitt 68 vorgesehener Ausgabeöffnung 62 und/oder ein in einem Ausgaberohrabschnitt 68 vorgesehener Ausgabeschlitz 66 kann wie voranstehend näher unter Bezugnahme auf die Figuren 8 bis 10 beschrieben ausgebildet sein.

Insbesondere kann in einem Ausgaberohrabschnitt 68 eine Mehrzahl von Ausgabeöffnungen 62 vorgesehen und entlang einer Strömungsrichtung 64 der Druckmasse 22 verteilt angeordnet sein. Ebenso kann in einem Ausgaberohrabschnitt 68 zumindest ein Ausgabeschlitz 66 in Strömungsrichtung der Druckmasse 22 verlaufend ausgebildet sein.

Ebenso kann ein Ausgaberohrabschnitt 68 auch eine Ausgabeöffnung 62 an einem freien Ende aufweisen. Insbesondere kann ein solcher Ausgaberohrabschnitt 68 auch lediglich mit einer Ausgabeöffnung 62 an einem freien Ende versehen sein, wie nachfolgend noch näher beschrieben wird.

Ein voranstehend beschriebener Ausgaberohrabschnitt 68 kann zwischen dem jeweiligen Flutrakel 50 und dem jeweiligen Druckrakel 52 verlaufen, insbesondere quer oder unter einem Winkel zur Rakelrichtung 54 und/oder parallel zu einer Rakelkante 56 des Flutrakels 50 und/oder parallel zu einer Rakelkante 58 des Druckrakels 52.

Wie beispielsweise in Figur 5 näher dargestellt ist, kann die Ausgabevorrichtung 24 mehrere Ausgaberohrabschnitte 68 aufweisen, die bevorzugt fluchtend zueinander ausgerichtet sind. Die Ausgabevorrichtung 24 kann durch einen Aktor 70 beweglich angeordnet sein. Insbesondere können die Ausgaberohrabschnitte 68 der Ausgabevorrichtung 24 durch einen Aktor 70 oder durch mehrere Aktoren gleichförmig miteinander beweglich angeordnet sein.

Bei dem Aktor 70 kann es sich um ein Portalachsensystem 72, wie in Figur 3 dargestellt ist, handeln. Ein Portalachsensystem 72 kann einen elektrischen Antrieb 74 aufweisen, der beispielsweise in der Figur 11 näher dargestellt ist. Das Portalachsensystem 72 kann auch das Flutrakel 50 und das Druckrakel 52 tragen und eine Rakelbewegung in Rakelrichtung 54 realisieren.

In den Ausführungsbeispielen gemäß Figuren 1 bis 10 sowie auch in den nachfolgend noch näher erläuterten Ausführungsbeispielen gemäß Figuren 11 bis 33 kann die jeweilige Zuführleitung 26 wenigstens einen Verteiler 76 aufweisen. Ein solcher Verteiler 76 kann insbesondere zur Verteilung eines Druckmassestroms 22 auf mehrere parallelgeschaltete Zuführleitungsabschnitte 78 und/oder für die Zuleitung eines Druckmassestroms 22 zu mehreren Ausgabeöffnungen 62 und/oder zu mehreren Ausgabeschlitzen 66 und/oder zu mehreren Ausgaberohrabschnitten 68 ausgebildet und/oder angeordnet sein.

Die Zuführleitung 26 kann mithin wenigstens zwei durch einen Verteiler 76 parallelgeschaltete Zuführleitungsabschnitte 78 aufweisen.

Es ist ferner möglich, dass von parallelgeschalteten Zuführleitungsabschnitten 78 zumindest ein Zuführleitungsabschnitt 78 einen weiteren Verteiler 76 zur Verteilung eines Druckmassestroms 22 auf mehrere weitere parallelgeschaltete Zuführleitungsteilabschnitte 78 aufweist. Mithin kann die jeweilige Zuführleitung 26 eine Mehrzahl von Verteilern 76 aufweisen.

Durch die Anordnung eines Verteilers 76 kann die Zuführleitung 26 mithin verzweigt ausgebildet sein. Bei den voranstehend angegebenen Längen oder Längenbereichen der Zuführleitung 26 kann es sich jeweils um eine Länge oder einen Längenbereich der Zuführleitung 26 ausgehend von dem jeweiligen Behälter 20 bis an das Ende einer einzelnen Verzweigung handeln. Ebenso kann es sich bei den voranstehend angegebenen Längen oder Längenbereichen der Zuführleitung 26 jeweils um eine Länge oder einen Längenbereich der gesamten Zuführleitung 26, einschließlich aller Verzweigungen, handeln.

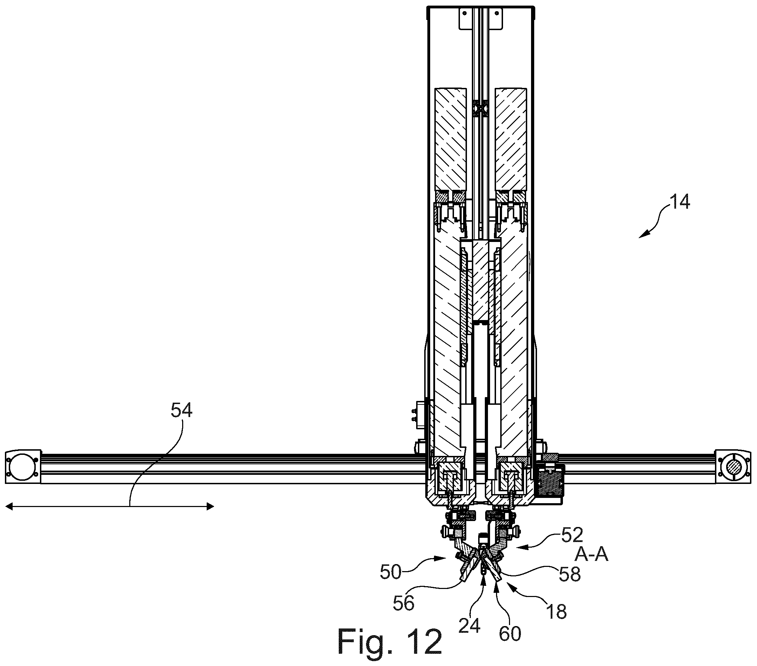

Die Figur 11 zeigt eine Teilansicht einer Druckeinrichtung 14 sowie einer Dosiereinrichtung 18 gemäß einem noch weiteren Ausführungsbeispiel. Figur 12 zeigt eine Schnittdarstellung entlang der Schnittlinie A-A aus Figur 11.

Den Figuren 11 und 12 kann in näher detaillierter Darstellung entnommen werden, dass die Druckeinrichtung 14 ein Flutrakel 50 zum Fluten des Drucksiebs 16 mit Druckmasse 22 aufweisen kann. Ebenso kann den Figuren 11 und 12 in näher detaillierter Darstellung entnommen werden, dass die Druckeinrichtung 14 ein Druckrakel 52 zum Pressen von Druckmasse 22 durch das Drucksieb 16 aufweisen kann.

Anstelle des Flutrakels 50 kann ebenso ein Druckrakel vorgesehen sein beziehungsweise kann das Flutrakel 50 auch als Druckrakel betrieben werden. Mithin kann die Druckeinrichtung 14 mit zwei Druckrakeln ausgestattet sein beziehungsweise können zwei angeordnete Rakel beide als Druckrakel betrieben werden.

Wie in dem Ausführungsbeispiel gemäß Figuren 11 und 12 gezeigt ist, kann die Ausgabevorrichtung 24 bevorzugt zur Ausgabe der Druckmasse 22 ausgehend von einer Stellung zwischen dem Flutrakel 50 und dem Druckrakel 52 oder zwischen zwei Druckrakeln ausgebildet und/oder angeordnet sein. Dies ist insbesondere in Figur 12 näher dargestellt. Nachfolgend wird näher auf eine Anordnung mit einem Flutrakel 50 und einem Druckrakel 52 eingegangen und die jeweiligen Einzelheiten gelten auch für eine Anordnung mit zwei Druckrakeln.

Die Ausgabevorrichtung 24 kann zumindest abschnittsweise oder vollständig zwischen dem Flutrakel 50 und dem Druckrakel 52 verlaufen. Insbesondere kann die Ausgabevorrichtung 24 zumindest abschnittsweise in einer Richtung quer oder unter einem Winkel zur Rakelrichtung 54 verlaufen. Bei der Rakelrichtung 54 kann es sich um eine Richtung handeln, entlang der das Flutrakel 50 während des Flutens des Drucksiebs 16 beziehungsweise das Druckrakel 52 während des Druckens oder des Hindurchpressens von Druckmasse 22 durch das Drucksieb 16 bewegt wird. Eine Absenkbewegung oder Hubbewegung des Flutrakels 50 und/oder des Druckrakels 52 wird mithin nicht als Rakelrichtung verstanden.

Die voranstehend beschriebene Anordnung zwischen einer Ausgabevorrichtung 24 und dem Flutrakel 50 und/oder dem Druckrakel 52 kann auch in den Ausführungsbeispielen gemäß Figuren 1 bis 10 sowie 13 bis 25 vorgesehen sein. Im Übrigen ist die Rakelrichtung 54 auch in Figur 3 eingezeichnet.

Die Ausgabevorrichtung 24 kann ferner zumindest abschnittsweise parallel zu einer Rakelkante 56 des Flutrakels 50 verlaufen. Ebenso kann die Ausgabevorrichtung 24 zumindest abschnittsweise parallel zu einer Rakelkante 58 des Druckrakels 52 verlaufen. Dabei kann die Ausgabevorrichtung 24 zumindest abschnittsweise bis in einen Zwischenraum 60 zwischen dem Flutrakel 50 und dem Druckrakel 52 verlaufen. Es kann hierdurch eine Ausgabe der jeweiligen Druckpaste 22 durch die Ausgabevorrichtung 24 aus einer Stellung innerhalb des Zwischenraums 60 zwischen dem Flutrakel 50 und dem Druckrakel 52 erfolgen.

Während einer Rakelbewegung des Flutrakels 50 und/oder des Druckrakels 52 entlang einer Rakelrichtung 54 kann, insbesondere bei einer Ausgestaltung gemäß Figuren 11 und 12, aber auch gemäß Figuren 1 bis 10 und 13 bis 25, die Ausgabevorrichtung 24 zusammen mit dem Flutrakel 50 und/oder dem Druckrakel 52 bewegt werden. Eine solche Bewegung der Ausgabevorrichtung 24 entlang der Rakelrichtung 54 kann mithin auch relativ zum jeweiligen Behälter 20 erfolgen.

Mithin kann gemäß einem Ausführungsbeispiel der vorliegenden Erfindung, wie beispielsweise in den Figuren 1 bis 25 gezeigt, die Ausgabevorrichtung 24 mit dem Flutrakel 50 und/oder mit dem Druckrakel 52 mitfahrend angeordnet sein, insbesondere in einer Rakelrichtung 54 mitfahrend angeordnet sein.

Die Dosiereinrichtung 18 kann gemäß einem Ausführungsbeispiel der vorliegenden Erfindung, wie beispielsweise in den Figuren 1 bis 25 gezeigt, zur Ausgabe von Druckmasse 22 über die Ausgabevorrichtung 24 während einer Rakelbewegung in einer Rakelrichtung 54 eingerichtet sein. Insbesondere kann die Dosiereinrichtung 18 zur kontinuierlichen und/oder periodisch wiederkehrenden Ausgabe von Druckmasse 22 über die Ausgabevorrichtung 24 während einer Rakelbewegung in einer Rakelrichtung 54 eingerichtet sein.

Ferner kann die Dosiereinrichtung 18 gemäß einem Ausführungsbeispiel der vorliegenden Erfindung, wie beispielsweise in den Figuren 1 bis 25 gezeigt, zur Ausgabe von Druckmasse 22 während einer gemeinsamen und/oder mitfahrenden Bewegung der Ausgabevorrichtung 24 mit einem Flutrakel 50 und/oder mit zumindest einem Druckrakel 52 in einer Rakelrichtung 54 eingerichtet sein, insbesondere aus einer in Rakelrichtung mitfahrenden und/oder sich mitbewegenden Position der Ausgabevorrichtung 24 zwischen einem Flutrakel 50 und einem Druckrakel 52 und/oder zwischen zwei Druckrakeln.

Dabei kann die Dosiereinrichtung 18 gemäß einem Ausführungsbeispiel der vorliegenden Erfindung, wie beispielsweise in den Figuren 1 bis 25 gezeigt, zur Ausgabe von Druckmasse 22 während einer durch den Aktor 70 und/oder durch das Portalachsensystem 72 ausgeführten Rakelbewegung entlang der Rakelrichtung 54 eingerichtet sein.

Schließlich kann die Dosiereinrichtung 18 gemäß einem Ausführungsbeispiel der vorliegenden Erfindung, wie beispielsweise in den Figuren 1 bis 25 gezeigt, zur Ausgabe von Druckmasse 22 während einer stationären und/oder in Rakelrichtung 54 stillstehenden Stellung eines Druckrakels 52 und/oder eines Flutrakels 50 eingerichtet sein.

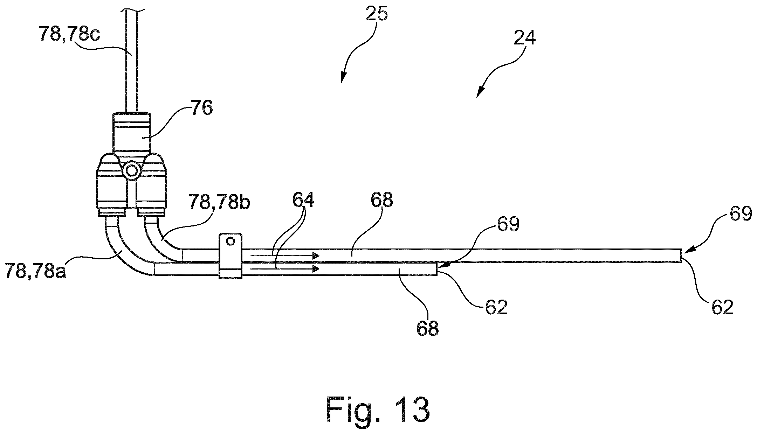

Zusätzlich oder alternativ kann die Dosiereinrichtung 18 gemäß einem Ausführungsbeispiel der vorliegenden Erfindung, wie beispielsweise in den Figuren 1 bis 25 gezeigt, zur Ausgabe von Druckmasse 22 während einer Bewegung der Ausgabevorrichtung 24 relativ zu einem Flutrakel 50 und/oder relativ zu einem Druckrakel 52 und/oder während einer Bewegung zwischen einem Flutrakel 50 und einem Druckrakel 52 und/oder zur Ausgabe von Druckmasse 22 während einer Bewegung der Ausgabevorrichtung 24 quer oder unter einem Winkel zur Rakelrichtung 54 eingerichtet sein, insbesondere bei stationärer und/oder in Rakelrichtung 54 stillstehender Stellung eines Druckrakels 52 und/oder eines Flutrakels 50. Die Figur 13 zeigt eine Detailansicht einer Ausgabevorrichtung 24 gemäß dem Ausführungsbeispiel in den Figuren 11 und 12. Insbesondere zeigt die Detailansicht gemäß Figur 13 eine Ausgabeteilanordnung 25 der Ausgabevorrichtung 24.

Die Ausgabevorrichtung 24 beziehungsweise die Ausgabeteilanordnung 25 gemäß Figur 13 weist zwei zumindest abschnittsweise zueinander parallel oder nebeneinander verlaufende Ausgaberohrabschnitte 68 auf. Der parallele oder nebeneinander angeordnete Verlauf der beiden Ausgaberohrabschnitte 68 kann überlappend sein. Mithin können die beiden Ausgaberohrabschnitte 68 nur abschnittsweise parallel oder nebeneinander verlaufen. Einer der Ausgaberohrabschnitte 68 kann relativ zu dem jeweils anderen Ausgaberohrabschnitt 68 entlang einer Längsrichtung vorstehen oder länger ausgebildet sein.

Die Ausgaberohrabschnitte 68 gemäß Figur 13 können jeweils von einem Zuführleitungsabschnitt 78 mit Druckmasse 22 gespeist werden, wobei die unmittelbar an die Ausgaberohrabschnitte 68 angrenzenden Zuführleitungsabschnitte 78a, 78b parallelgeschaltet und an den Verteiler 76 angeschlossen sind. Die Strömungsrichtung 64 der Druckmasse 22 ist in Figur 13 schematisch angedeutet.

Stromaufwärts des Verteilers 76 kann wiederum ein Zuführleitungsabschnitt 78c verlaufen, der bevorzugt ebenfalls parallelgeschaltet sein kann und mit einem weiteren - hier nicht näher dargestellten - Verteiler 76 in Verbindung stehen kann. Die Parallelschaltung des Zuführleitungsabschnitts 78c kann mit einem hier ebenfalls nicht näher dargestellten weiteren Zuführleitungsabschnitt 78 erfolgt sein.

Eine Dosiereinrichtung 18 beziehungsweise eine Ausgabevorrichtung 24 gemäß dem Ausführungsbeispiel in Figuren 11 und 12 kann mithin beispielsweise zwei Ausgabeteilanordnungen 25 mit jeweils zwei parallelgeschalteten Ausgaberohrabschnitten 68, wie beispielsweise in Figur 13 gezeigt, aufweisen. Mithin kann eine Ausgabevorrichtung 24 zwei gegenüberliegende Ausgabeteilanordnungen 25 aufweisen, die beispielsweise jeweils gemäß Figur 13 ausgebildet sein und folglich jeweils zwei parallelgeschaltete Ausgaberohrabschnitten 68 aufweisen können.

Die in Figur 13 gezeigten Ausgaberohrabschnitte 68 können ferner jeweils an ihren freien Ende 69 eine Ausgabeöffnung 62 aufweisen. Insbesondere können die Ausgaberohrabschnitte 68 gemäß dem Ausführungsbeispiel in Figur 13 ausschließlich an den freien Enden 69 eine Ausgabeöffnung 62 aufweisen.

In der Ausführungsform gemäß Figuren 11 bis 13 kann die Dosiereinrichtung 18 ferner zumindest einen Aktor 142 zur Bewegung der Ausgabevorrichtung 24 beziehungsweise der Ausgabeteilanordnungen 25 - wie beispielsweise in Figur 13 gezeigt - relativ zum Flutrakel 50 und/oder relativ zum Druckrakel 52 aufweisen. Dabei kann die Dosiereinrichtung 18 gemäß Figuren 11 bis 13 zur Ausgabe von Druckmasse 22 während einer Bewegung der Ausgabevorrichtung 24 beziehungsweise der Ausgabeteilanordnungen 25 mittels des Aktors 142 ausgebildet und/oder angeordnet sein.

Ferner kann je Ausgabeteilanordnung 25 ein gesonderter Aktor vorgesehen sein, was hier nicht näher dargestellt ist. Hierdurch können die Ausgabeteilanordnungen 25 unabhängig voneinander und/oder gegenläufig zueinander bewegt werden.

Der Aktor 142 kann zur Bewegung der Ausgabevorrichtung 24 und/oder der Ausgabeteilanordnungen 25 quer oder unter einem Winkel zur Rakelrichtung 54 ausgebildet und/oder angeordnet sein. Insbesondere kann der Aktor 142 zur Bewegung der Ausgabevorrichtung 24 entlang einer Querrichtung 144 ausgebildet sein, die quer oder unter einem Winkel zur Rakelrichtung 54 verläuft. Dabei kann der Aktor 142 zur Bewegung der Ausgabevorrichtung 24 entlang des Zwischenraums 60 zwischen Flutrakel 50 und Druckrakel 52 und/oder in einer Richtung parallel zu einer Rakelkante 56 des Flutrakels 50 und/oder parallel zu einer Rakelkante 58 des Druckrakels 52 ausgebildet und/oder angeordnet sein.

Der Aktor 142 kann als pneumatischer und/oder elektrischer Aktor und/oder als Linearaktor ausgebildet sein, insbesondere als pneumatischer und/oder elektrischer Linearaktor.

Der Aktor 142 kann dazu ausgebildet und/oder angeordnet sein, die jeweilige Ausgabeteilanordnung 25 entlang einer Querrichtung 144 zu bewegen, insbesondere um eine Wegstrecke beziehungsweise Dosierlänge, die weniger als 50% der sich in Querrichtung 144 erstreckenden Rakelbreite beträgt. Der Aktor 142 kann ferner dazu ausgebildet und/oder angeordnet sein, die jeweilige Ausgabeteilanordnung 25 entlang einer Querrichtung 144 um eine Wegstrecke beziehungsweise Dosierlänge zu bewegen, die weniger als 30% und/oder mehr als 20%, bevorzugt 25% oder etwa 25%, der sich in Querrichtung 144 erstreckenden Rakelbreite beträgt.

Aus einem der Ausgaberohrabschnitte 68 kann mithin die Ausgabe einer Druckmasse 22 entlang einer Dosierlänge beziehungsweise entlang einer Wegstrecke erfolgt, die etwa 25% oder etwa 25% der sich in Querrichtung 144 erstreckenden Rakelbreite entspricht. Durch die Anordnung von insgesamt zwei gegenüberliegenden Ausgabeteilanordnungen 25 und damit insgesamt vier Ausgaberohrabschnitten 68 kann die gesamte sich in Querrichtung 144 erstreckende Rakelbreite abgedeckt werden.

Somit kann aufgrund der Bewegung mittels des Aktors 142 durch jeden Ausgaberohrabschnitt 68 entlang einer Dosierbreite und/oder Wegstrecke, die etwa 25% oder etwa 25% der sich in Querrichtung 144 erstreckenden Rakelbreite entspricht, ein Druckmassenteilabschnitt auf das jeweilige Drucksieb 16 aufgetragen werden.

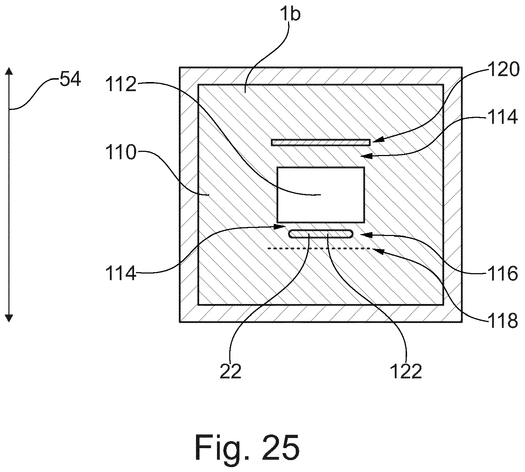

Vier derart über die jeweiligen Ausgaberohrabschnitte 68 aufgetragene Druckmassenteilabschnitte können sich zu einem zusammenhängenden Druckmassenabschnitt 122 - wie beispielsweise in Figur 25 gezeigt - ergänzen. Ein solcher zusammenhängender Druckmassenabschnitt 122 kann sich mithin entlang der gesamten oder im Wesentlichen entlang der gesamten Rakelbreite erstrecken, wobei die Rakelbreite ihrerseits in Querrichtung 144 verläuft.

Dabei kann der Aktor 144 Vor- und Rückbewegungen entlang der Rakelrichtung 144 vornehmen, wobei beispielsweise während einer Vorbewegung eine Ausgabe der Druckmasse 22 aus den Ausgaberohrabschnitten 68 einer Ausgabeteilanordnung 25 erfolgen und bei einer Rückbewegung eine Ausgabe der Druckmasse 22 aus den Ausgaberohrabschnitten 68 der jeweils anderen Ausgabeteilanordnung 25 erfolgen kann. Die Vor- und Rückbewegungen entlang der Rakelrichtung 144 erfolgen in der Darstellung gemäß Figur 11 nach links und nach rechts.

Sofern mehrere Aktoren vorgesehen sind oder der Aktor 144 mehrere Einzel-Aktoren aufweist - hier nicht näher dargestellt - können die Ausgabeteilanordnungen 25 während der Ausgabe der Druckmasse 22 aufeinander zubewegt und/oder voneinander wegbewegt werden.

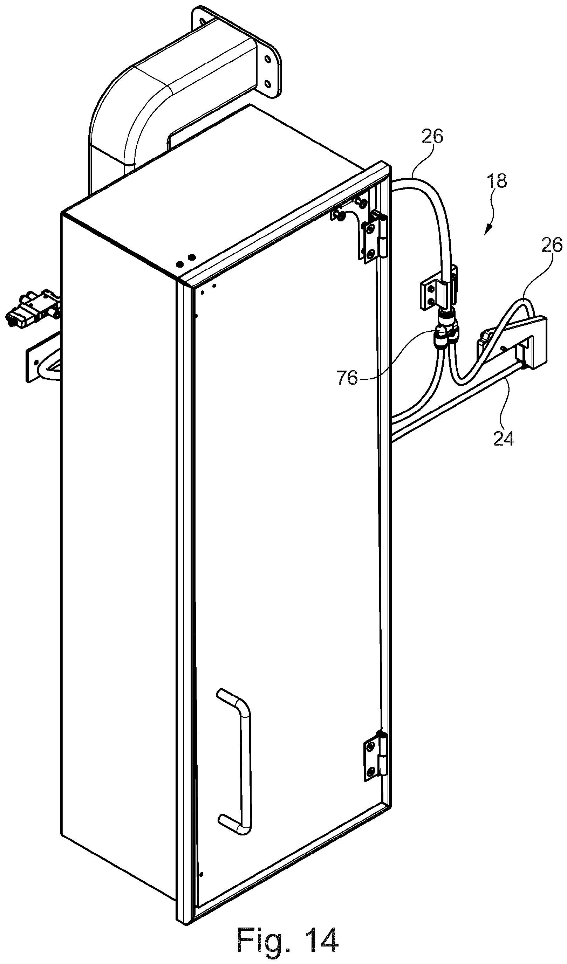

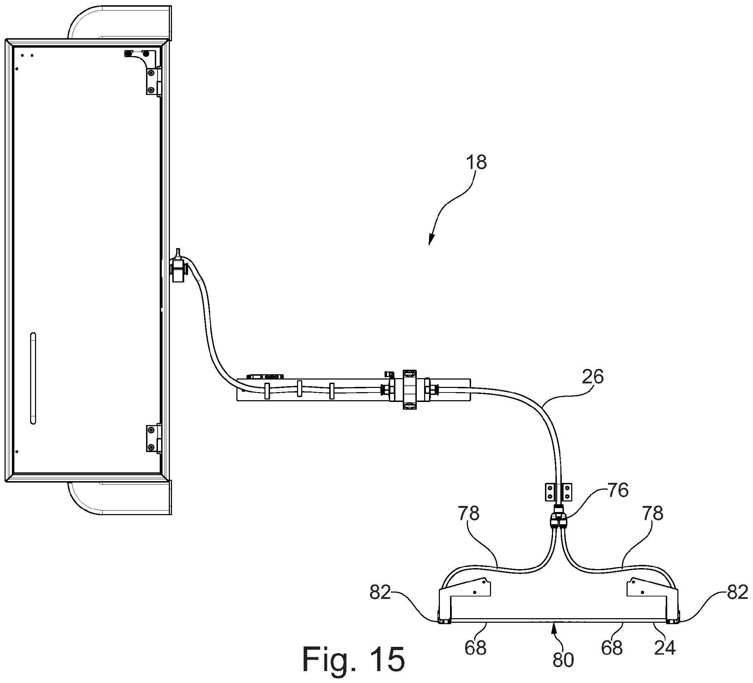

Die Figur 14 zeigt eine perspektivische Ansicht einer Dosiereinrichtung 18 gemäß einem weiteren Ausführungsbeispiel der vorliegenden Erfindung und Figur 15 zeigt eine Seitenansicht der Dosiereinrichtung 18 von Figur 14. In dem Ausführungsbeispiel gemäß Figuren 14 und 15 kann die Ausgabevorrichtung 24 mehrere Ausgaberohrabschnitte 68 aufweisen, die miteinander zu einem Ausgaberohr 80 verbunden und/oder einstückig miteinander als Ausgaberohr 80 ausgebildet sein können.

Die Ausgaberohrabschnitte 68 gemäß Figuren 14 und 15 können dabei auch in Fluidverbindung miteinander stehen. Es besteht die Möglichkeit, dass Druckmasse 22 über gegenüberliegende Enden 82 in die beiden miteinander verbundenen Ausgaberohrabschnitte 68 eingeleitet wird. Über Ausgabeöffnungen 62 oder einen Ausgabeschlitz 66 oder mehrere Ausgabeschlitze 66 zwischen den gegenüberliegende Enden 82 kann die Druckmasse 22 ausgebracht werden. Innerhalb der miteinander verbundenen oder einstückig miteinander ausgebildeten Ausgaberohrabschnitte 68 lassen sich mithin gegenläufige Druckmassenströme realisieren.

Gegenläufige Druckmassenströme können etwa mittig des die Ausgaberohrabschnitte 68 aufweisenden Ausgabeohrs aufeinandertreffen.

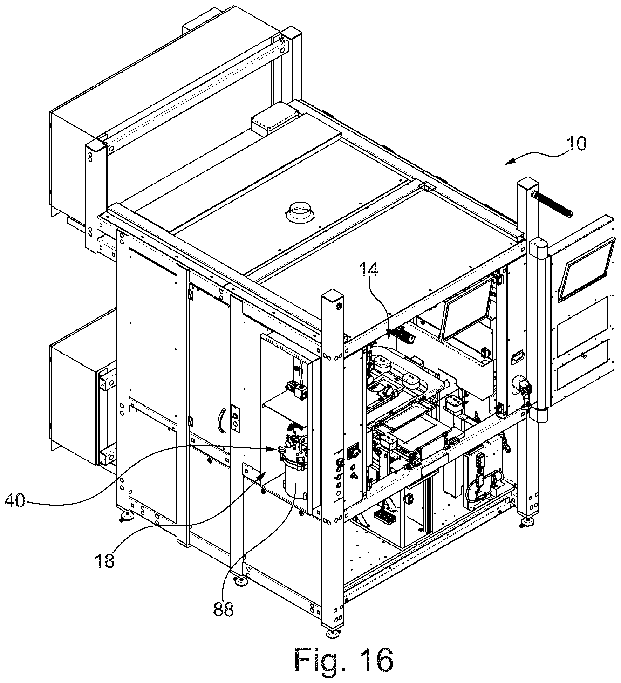

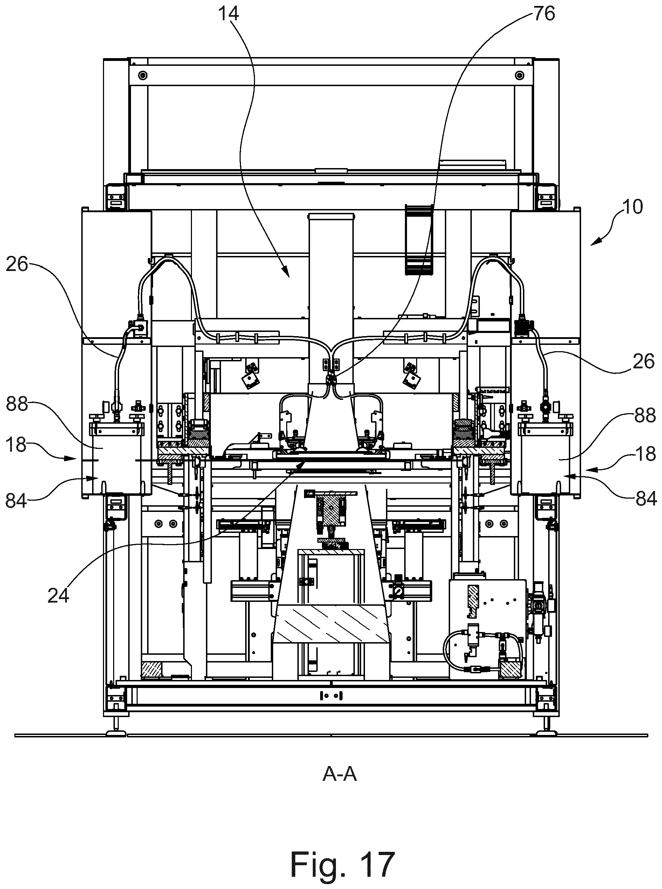

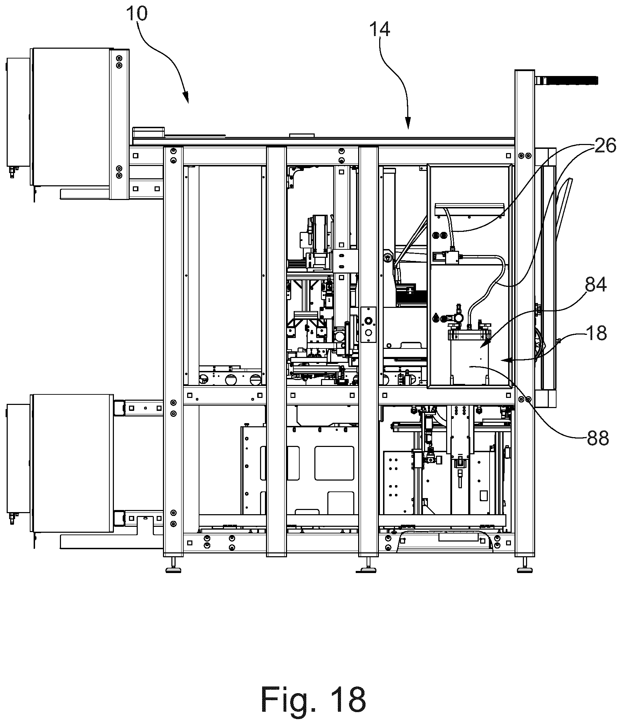

Die Figur 16 zeigt eine perspektivische Ansicht einer erfindungsgemäßen Vorrichtung 10 gemäß einem weiteren Ausführungsbeispiel. Figur 17 zeigt eine Schnittdarstellung der Vorrichtung 10 von Figur 16 und Figur 18 zeigt eine Seitenansicht der Vorrichtung 10 von Figur 16.

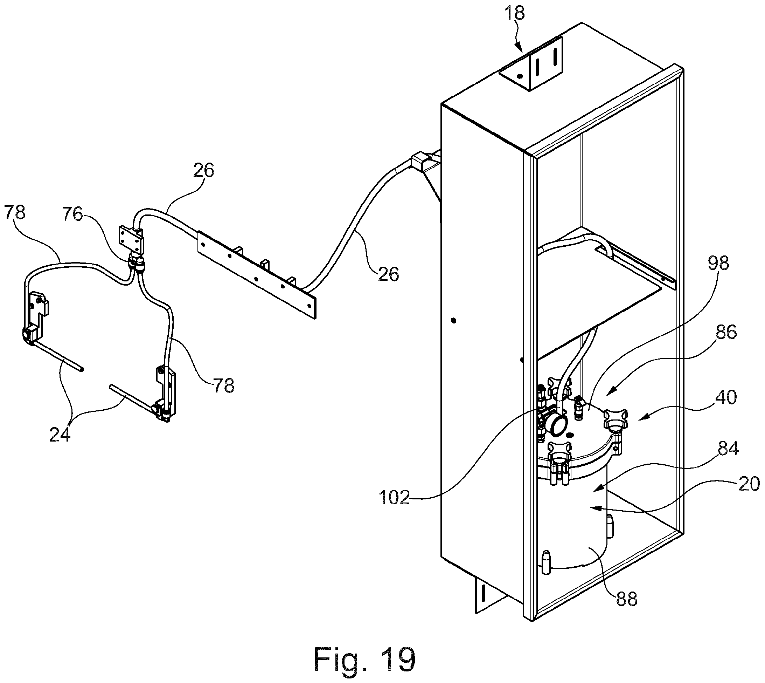

Die Ausführungsform der Vorrichtung 10 gemäß Figuren 16 bis 18 unterscheidet sich von der Ausführungsform gemäß Figuren 1 bis 7 wiederum in Bezug auf die Dosiereinrichtung 18. Die Figur 19 zeigt eine perspektivische Ansicht einer Dosiereinrichtung 18 der Vorrichtung 10 aus Figuren 16 bis 18 und Figur 20 zeigt eine Seitenansicht der Dosiereinrichtung 18 von Figur 19.

Die in den Figuren 18 und 19 dargestellte Dosiereinrichtung 18 weist einen Behälter 20 auf, der als Eimer 84 ausgebildet sein kann. Ferner weist die Dosiereinrichtung 18 gemäß Figuren 18 und 19 eine Druckerhöhungsvorrichtung 86 mit einem Druckbehälter 88 auf, der druckdicht verschließbar sein kann.

Der als Eimer 84 ausgebildete Behälter 20 zur Aufbewahrung der pastösen Druckmasse 22 ist in dem Druckbehälter 88 der Druckerhöhungsvorrichtung 86 angeordnet. Mithin ist der als Eimer 84 ausgebildete Behälter 20 in Figuren 18 und 19 nur angedeutet, jedoch nicht näher dargestellt.

Bei der Druckerhöhungsvorrichtung 86 kann es sich im weiteren Sinne beziehungsweise im Sinne der vorliegenden Erfindung ebenfalls um einen Aktor 40 zur Förderung der Druckmasse 22 aus dem Behälter 20 handeln.

Ein als Eimer 84 ausgebildeter Behälter 20 zur Aufbewahrung der pastösen Druckmasse 22 kann im Übrigen dem Ausführungsbeispiel in den Figuren 21 und 22 entnommen werden, auf das nachfolgend noch eingegangen wird.

Ein als Eimer 84 ausgebildeter Behälter 20 kann mit einer zylindrisch oder konisch umlaufenden Seitenwand 90 und/oder mit einer oberseitig ausgebildeten und/oder verschließbaren Öffnung 92 ausgestattet sein. Ebenso kann ein als Eimer 84 ausgebildeter Behälter 20 auch mit einem unterseitig ausgebildeten Druckmassenauslass versehen sein, was hier nicht näher gezeigt ist.

In der Ausführungsform gemäß Figuren 16 bis 19 kann der Druckbehälter 88 eine Anschlussöffnung 94 für eine Druckluftzufuhr aufweisen. An die Anschlussöffnung 94 kann eine Druckluftleitung 96 druckdicht angeschlossen oder anschließbar sein. Die Anschlussöffnung 94 ist bevorzugt in einem Deckel 98 des Druckbehälters 84 ausgebildet.

Der Druckbehälter 88 weist ferner eine Austrittsöffnung 100 für die Durchführung der Zuführleitung 26 oder eine Austrittsöffnung 100 für die Durchführung einer mit der Zuführleitung 26 verbundenen Austrittsleitung 102 auf, wobei die Austrittsöffnung 100 bevorzugt in dem Deckel 98 des Druckbehälters 88 ausgebildet sein kann.

Die Zuführleitung 26 oder eine mit der Zuführleitung 26 verbundene Austrittsleitung 102 kann durch die Austrittsöffnung 100 hindurch bis in den Innenraum des Druckbehälters 88 geführt sein, insbesondere bis in den in dem Druckbehälter 88 positionierten und mit Druckmasse 22 befüllten Behälter 20, der vorliegend bevorzugt als Eimer 84 ausgebildet sein kann.

Durch die Zuführung von Druckluft über die Druckluftleitung 96 und die Anschlussöffnung 94 kann innerhalb des Druckbehälters 88 eine Druckerhöhung erzeugt werden, die auf die Druckmasse 22 im Behälter 20 wirkt. Dadurch kann die Druckmasse 22 im Behälter 20, der in dem Druckbehälters 88 angeordnet ist, über eine Austrittsleitung 102 aus dem Druckbehälter 88 herausgepresst und in die Zuführleitung 26 und weiter bis zur Ausgabevorrichtung 24 befördert werden, durch die eine Ausgabe der Druckmasse 22 auf ein Drucksieb 16 erfolgen kann.

Wie der Figur 17 zu entnehmen ist, kann die Vorrichtung 10 eine Mehrzahl von Dosiereinrichtungen 18 aufweisen und/oder kann die Dosiereinrichtung 18 mehrere Druckerhöhungseinrichtungen 86 beziehungsweise mehrere Druckbehälter 88 aufweisen.

Die Figur 21 zeigt eine perspektivische Ansicht einer Dosiereinrichtung 18 gemäß einem weiteren Ausführungsbeispiel der vorliegenden Erfindung und die Figur 22 zeigt eine Seitenansicht der Dosiereinrichtung 18 von Figur 21. Wie voranstehend bereits erwähnt, kann gemäß der Ausführungsform in den Figuren 21 und 22 der Behälter 20 der Dosiervorrichtung 18 als Eimer 84 ausgebildet sein.

In dem Ausführungsbeispiel gemäß Figuren 21 und 22 kann die Dosiereinrichtung 18 einen Aktor 40 zur Förderung der Druckmasse 22 aufweisen, wobei der Aktor 40 als Saugvorrichtung 104 zum Ansaugen der Druckmasse 22 aus dem Behälter 20 ausgebildet sein kann. Die Saugvorrichtung 104 kann insbesondere als Schneckenpumpe und/oder Exzenterschneckenpumpe ausgebildet sein.

Die Saugvorrichtung 104 kann zumindest abschnittsweise in den Behälter 20 und/oder in die im Behälter 20 befindliche Druckmasse 22 eingetaucht sein und/oder eintauchbar angeordnet sein. Hierzu kann eine Relativbewegung zwischen der Saugvorrichtung 104 und dem Behälter 20 realisiert werden, beispielsweise durch eine Hubvorrichtung für den Behälter 20.

Die Saugvorrichtung 104 kann auch außerhalb des Behälters 20 angeordnet sein und/oder über eine Ansaugleitung - hier nicht näher dargestellt - mit dem Behälter 20 in Fluidverbindung stehen. Ebenso kann eine mit der Saugvorrichtung 104 in Verbindung stehende Ansaugleitung - hier ebenfalls nicht näher dargestellt - in den Behälter 20 und/oder in die im Behälter 20 befindliche Druckmasse 22 eingetaucht sein.

Die Saugvorrichtung 104 kann insbesondere dazu ausgebildet und/oder angeordnet sein, aus dem Behälter 20 angesaugte Druckmasse 22 in die Zuführleitung 26 und bis zur Ausgabevorrichtung 24 zu befördern, durch die schließlich eine Ausgabe von Druckmasse 22 auf das jeweilige Drucksieb 16 erfolgen kann.

In der Ausführungsform gemäß Figuren 21 und 22 kann die Ausgabevorrichtung 24 eine Mehrzahl von Ausgabeöffnungen 62 aufweisen, die an freien Leitungsenden 106 ausgebildet sind. Die freien Leitungsenden 106 können jeweils an einem Leitungsendabschnitt 108 ausgebildet sein, der mit der Zuführleitung 26 in Fluidverbindung steht oder als Teil der Zuführleitung 26 ausgebildet sein kann.

Der als Eimer 84 ausgebildete Behälter 20, wie in den Ausführungsformen gemäß Figuren 16 bis 21 eingesetzt, kann ein Aufnahmevolumen von mindestens 1 dm³, bevorzugt von mindestens 3 dm³, weiter bevorzugt von mindestens 4 dm³, weiter bevorzugt von mindestens 5 dm³, weiter bevorzugt von mindestens 7 dm³, weiter bevorzugt von mindestens 9 dm³, weiter bevorzugt von mindestens 10 dm³, weiter bevorzugt von mindestens 15 dm³, weiter bevorzugt von mindestens 20 dm³, noch weiter bevorzugt von mindestens 25 dm³ und noch weiter bevorzugt von mindestens 35 dm³ aufweisen.

Ebenso kann der als Eimer 84 ausgebildete Behälter 22, wie in den Ausführungsformen gemäß Figuren 16 bis 21 eingesetzt, ein Aufnahmevolumen von bis zu 5 dm³, bevorzugt von bis zu 7 dm³, weiter bevorzugt von bis zu 9 dm³, weiter bevorzugt von bis zu 10 dm³, weiter bevorzugt von bis zu 15 dm³, weiter bevorzugt von bis zu 20 dm³, weiter bevorzugt von bis zu 25 dm³, weiter bevorzugt von bis zu 30 dm³, weiter bevorzugt von bis zu 35 dm³, weiter bevorzugt von bis zu 45 dm³, noch weiter bevorzugt von bis zu 50 dm³ und noch weiter bevorzugt von bis zu 100 dm³ aufweisen.

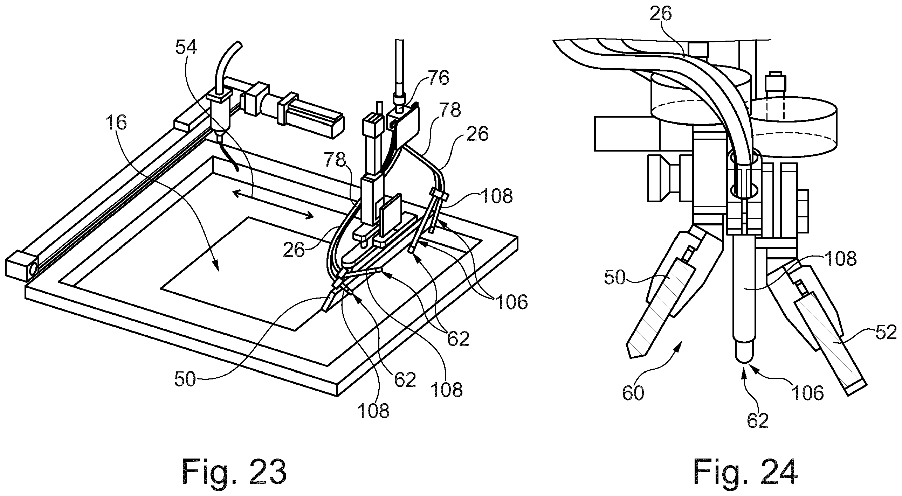

Die Figur 23 zeigt eine perspektivische Teilansicht der Dosiereinrichtung 18 von Figur 22 mit dargestellter Ausgabevorrichtung 24 sowie dargestelltem Drucksieb 16. Die Figur 24 zeigt eine seitliche Detailansicht der Ausgabevorrichtung 24 von Figur 21 mit dargestelltem Flutrakel 50 und Druckrakel 52. In der Figur 23 ist zur besseren Übersichtlichkeit nur das Flutrakel 50 gezeigt. Die Leitungsendabschnitte 108 ragen in den Zwischenraum 60 zwischen dem Flutrakel 50 und dem Druckrakel 52, sodass auch die Ausgabeöffnungen 62 an den freien Leitungsenden 106 in dem Zwischenraum 60 angeordnet sind. Dabei können die Ausgabeöffnungen 62 in dem Zwischenraum 60 verteilt angeordnet sein, nämlich in einer Richtung quer zur Rakelrichtung 54.

Figur 25 zeigt eine Draufsicht auf ein Drucksieb 16 einer erfindungsgemäßen Vorrichtung 10 gemäß einem Ausführungsbeispiel der vorliegenden Erfindung. Das Drucksieb 16 weist einen geschlossenen Abschnitt 110 sowie einen offenen Abschnitt 112 auf. Durch den offenen Abschnitt 112 kann eine pastöse Druckmasse 22 zumindest abschnittsweise hindurchgepresst werden, nämlich zur Erzeugung von Druckschichten mit der jeweils gewünschten Formgebung. Der geschlossene Abschnitt 110 umgibt den offenen Abschnitt 112 und ermöglicht hingegen kein Hindurchpressen von Druckmasse 22.

Die Ausgabevorrichtung 24 kann in bevorzugter Weise zur Ausgabe der Druckmasse 22 auf einen geschlossenen Abschnitt 110 des Drucksiebs 16 ausgebildet sein. Insbesondere kann die Ausgabevorrichtung 24 in bevorzugter Weise zur Ausgabe der Druckmasse 22 auf einen Drucküberlaufabschnitt 114 des Drucksiebs 16 ausgebildet sein. Der Drucküberlaufabschnitt 114 kann insbesondere beabstandet vom offenen Abschnitt 112 und/oder auf dem geschlossenen Abschnitt 110 angeordnet sein. Das jeweils einzusetzende Flutrakel 50 und/oder das jeweils einzusetzende Druckrakel 52 kann bei der Ausführung einer Rakelbewegung in einer Rakelbewegungsrichtung 54 zumindest bis in den Drucküberlaufabschnitt 114 hineinbewegt werden.

Bevorzugt kann beidseitig des offenen Abschnitts 112, in Draufsicht gemäß Figur 25 gesehen, ein Drucküberlaufabschnitt 114 vorgesehen sein.

Eine Dosierposition 116 für die ausgegebene Druckmasse 22 auf dem Drucksieb 16 ist in Figur 25 dargestellt. Die Dosierposition 116 ist in dem Drucküberlaufabschnitt 114 angeordnet, insbesondere beabstandet vom offenen Abschnitt 112 und/oder auf dem geschlossenen Abschnitt 110 des Drucksiebs 16.

Ferner ist in Figur 25 eine Flutrakelstartposition 118 dargestellt. Die Dosierposition 116 kann in der Draufsicht gemäß Figur 25 insbesondere zwischen dem offenen Abschnitt 112 und der Flutrakelstartposition 118 angeordnet sein.

Schließlich ist in Figur 25 eine sichere Rakelposition 120 dargestellt. Die sichere Rakelposition 120 befindet sich oberhalb beziehungsweise auf einem geschlossenen Abschnitt 110 des Drucksiebs. Dabei kann, in der Draufsicht gemäß Figur 25 gesehen, der offene Abschnitt 112 zwischen der Dosierposition 116 und der sicheren Rakelposition 120 angeordnet sein. Eine solche sichere Rakelposition 120 kann insbesondere dann von Vorteil sein, wenn eine Bewegung der Ausgabevorrichtung 24 unabhängig oder mittels eines eigenen Aktors und relativ zu dem Flutrakel 50 und/oder relativ zum Druckrakel 52 erfolgt. Durch die Positionierung des Flutrakels 50 und/oder des Druckrakels 52 in einer sicheren Rakelposition 120 kann ohne Gefahr von Kollisionen eine Dosierung von Druckmasse 22 auf der Dosierposition 116 oder entlang der Dosierposition 116 vorgenommen werden.

Die Ausgabevorrichtung 24 kann insbesondere dazu ausgebildet und/oder angeordnet sein, die Ausgabe der Druckmasse 22 auf das Drucksieb 16 in zumindest einem längserstreckten oder schnurförmig verlaufenden Druckmassenabschnitt 122 vorzunehmen. Ein solcher schnurförmig verlaufender Druckmassenabschnitt 122 kann beispielsweise der Figur 25 entnommen werden. Ein schnurförmig verlaufender Druckmassenabschnitt 122 kann beispielsweise durch eine Ausgabevorrichtung 24 mit einem Ausgabeschlitz 66 erzeugt werden.

Die Figur 26 zeigt eine Seitenansicht einer Behälterwechselvorrichtung 124 gemäß einem Ausführungsbeispiel der vorliegenden Erfindung in einer ersten Betriebsstellung. Eine weitere Betriebsstellung der Behälterwechselvorrichtung 124 ist in Figur 27 gezeigt. Eine Behälterwechselvorrichtung 124 kann als Teil einer Dosiereinrichtung 18 ausgebildet und/oder angeordnet sein.

Die Behälterwechselvorrichtung 124 kann zum automatisierten Wechsel des jeweils Druckmasse 22 spendenden Behälters 20, insbesondere eines als Kartusche 34 ausgebildeten Behälters 20, ausgebildet und/oder angeordnet sein. Ebenso kann eine Behälterwechselvorrichtung 124 auch zum automatisierten Wechsel eines als Eimer 84 ausgebildeten Behälters 20 ausgebildet und/oder angeordnet sein, was hier nicht näher dargestellt ist.

Zusätzlich oder alternativ kann die Behälterwechselvorrichtung 124 für den werkzeugfreien und/oder automatisierten oder halbautomatisierten Wechsel des jeweils Druckmasse 22 spendenden Behälters 20 ausgebildet und/oder angeordnet sein.

Die Behälterwechselvorrichtung 124 kann ein Behältermagazin 126 zur Aufnahme einer Mehrzahl von Behältern 20 aufweisen. Das Behältermagazin 126 kann insbesondere als Kartuschenmagazin zur Aufnahme einer Mehrzahl von als Kartuschen 34 ausgebildeten Behältern 20 ausgebildet sein.

Die Behälterwechselvorrichtung 124 kann ferner eine Anschlussplatte 128 aufweisen, die mit einem Durchlass 130 für das Durchleiten von Druckmasse 22 aus einem Behälter 20 ausgestattet sein kann. An den Durchlass 130 kann eine hier nicht näher dargestellte Zuführleitung 26 angeschlossen werden.

Das Behältermagazin 126 kann relativ zur Anschlussplatte 128 beweglich beziehungsweise verschiebbar angeordnet sein, wie in den Figuren 26 und 27 schematisch dargestellt ist. Ebenso könnte auch die zur Anschlussplatte 128 relativ zum Behältermagazin 126 beweglich beziehungsweise verschiebbar angeordnet sein.

Die Auslassöffnung 35 einer Kartusche 34 kann in Fluidverbindung mit dem Durchlass 130 Anschlussplatte 128 gebracht werden, um dadurch ein Herausleiten von Druckmasse 22 aus dieser Kartusche 34 zu ermöglichen. In Figur 26 steht die Auslassöffnung 35 der links dargestellten Kartusche 34 mit dem Durchlass 130 Anschlussplatte 128 in Fluidverbindung.

Die Figur 27 zeigt eine Seitenansicht der Behälterwechselvorrichtung 124 von Figur 26 in einer weiteren Betriebsstellung. In Figur 27 ist das Behältermagazin 126 relativ zur Anschlussplatte 128 verschoben worden, sodass nunmehr die Auslassöffnung 35 der rechts dargestellten Kartusche 34 mit dem Durchlass 130 Anschlussplatte 128 in Fluidverbindung steht. Die beiden weiteren Kartuschen 34 gemäß Figur 27 können beispielsweise entleert worden sein.

Mithin kann in Abhängigkeit einer Relativstellung zwischen der Anschlussplatte 128 und der Mehrzahl von Behältern 20, insbesondere der Kartuschen 34, eine Fluidverbindung zwischen der Zuführleitung 24 - hier nicht näher dargestellt - und einem von den mehreren Behältern 20, insbesondere Kartuschen 34, herstellbar sein. Durch eine Verstellung der Relativstellung zwischen der Anschlussplatte 128 und wenigstens einem Behälter 20, insbesondere Kartusche 34, kann eine Fluidverbindung zwischen der Zuführleitung 24 und einem weiteren Behälter 20, insbesondere Kartusche 34, herstellbar sein.

In den Figuren 26 und 27 ist ein Stößel 48 beziehungsweise auch ein Linearantrieb 44 schematisch dargestellt. Der Stößel 48 kann Teil des Linearantriebs 44 sein oder mit dem Linearantrieb 44 zur Übertragung einer Antriebskraft verbunden sein. Durch den Stößel 48 soll ein hier nicht näher dargestellter Kolbenboden der jeweiligen Kartusche 34 kontaktiert und bewegt werden.

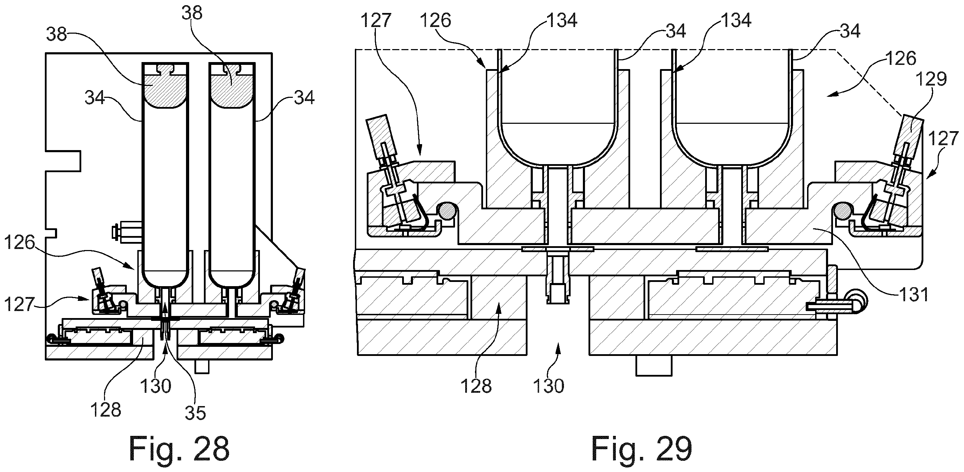

Weitere Detailansichten der Behälterwechselvorrichtung 124 sind in den Figuren 28 und 29 gezeigt. Der Kolbenboden 38 der Kartuschen 34 ist näher in Figur 28 dargestellt. Den Figuren 28 und 29 kann zudem die nähere Aufnahme der Kartuschen 34 in dem Behältermagazin 126 entnommen werden.

Den Figuren 26 und 27 kann ferner ein schematisch dargestellter Füllstandsensor 132 entnommen werden, über den ein Füllstand der Druckmasse 22 in der jeweiligen Kartusche 34 ermittelt werden kann.

Eine Dosiereinrichtung 18 gemäß einem Ausführungsbeispiel der vorliegenden Erfindung kann ferner eine Aufnahmekavität 134 zur Aufnahme einer Kartusche 34 aufweisen, wobei die Aufnahmekavität 134 bevorzugt für die zumindest abschnittsweise seitliche und/oder umlaufende Abstützung einer Kartuschen-Seitenwand 36 ausgebildet sein kann. In dem Ausführungsbeispiel gemäß Figuren 26 bis 29 ist die Aufnahmekavität 134 beziehungsweise die Mehrzahl an Aufnahmekavitäten 134 in dem Behältermagazin 126 vorgesehen.

Ebenso kann dem in der Figur 7 dargestellten Ausführungsbeispiel eine Aufnahmekavität 134 für eine Kartusche 34 entnommen werden.

In den Figuren 28 und 29 ist ferner eine Schnellwechselvorrichtung 127 für das Behältermagazin 126 gezeigt. Die Schnellwechselvorrichtung 127 kann händisch und/oder werkzeugfrei betätigbare Befestigungselemente 127 aufweisen. Mittels der Befestigungselemente 127 lässt sich eine Tragplatte 131 des Behältermagazins 126 einspannen beziehungsweise in einer Betriebsstellung, wie in Figuren 28 und 29 gezeigt, fixieren. Durch manuelles oder werkzeugfreies Lösen der Befestigungselemente 127 lässt sich eine Tragplatte 131 des Behältermagazins 126 aus der Vorrichtung 10 entnehmen und ein anderes Behältermagazins 126 kann wiederum eingesetzt und eingespannt beziehungsweise fixiert werden. Hierdurch kann mit nur geringem Aufwand eine gruppenweise Entnahme von beispielsweise entleerten Behältern 20 bewerkstelligt werden und diese können wiederum durch ein neu bestücktes Behältermagazins 126 mit einer Mehrzahl an vollen oder neu befüllten Behältern 20 ersetzt werden.

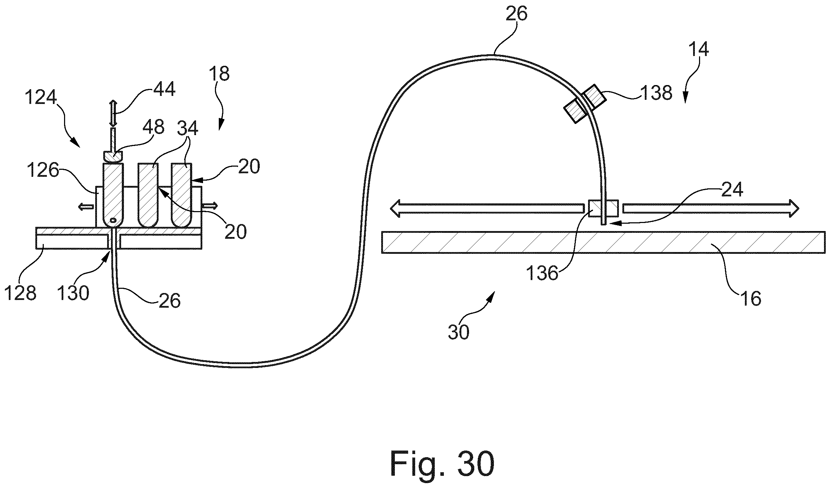

Die Figur 30 zeigt eine Seitenansicht einer Dosiereinrichtung 18 gemäß einem Ausführungsbeispiel der vorliegenden Erfindung. Die in Figur 30 dargestellte Dosiereinrichtung 18 kann mit einer Behälterwechselvorrichtung 124, wie in den Figuren 26 bis 29 näher gezeigt und voranstehend beschrieben worden ist, ausgestattet sein.

Die Behälterwechselvorrichtung 124 kann insbesondere außerhalb des Druckbereichs 30 der Druckeinrichtung 14 angeordnet sein. Ferner kann die Behälterwechselvorrichtung 124 in horizontaler Richtung relativ zum Drucksieb 16 beabstandet angeordnet sein. Ebenso kann die Behälterwechselvorrichtung 124 in vertikaler Richtung unterhalb eines Drucktisches der Druckeinrichtung 14 angeordnet sein, was hier nicht näher dargestellt ist.

Die Zuführleitung 24 kann insbesondere werkzeugfrei und/oder automatisiert oder teilautomatisiert auswechselbar angeordnet und/oder ausgebildet sein.

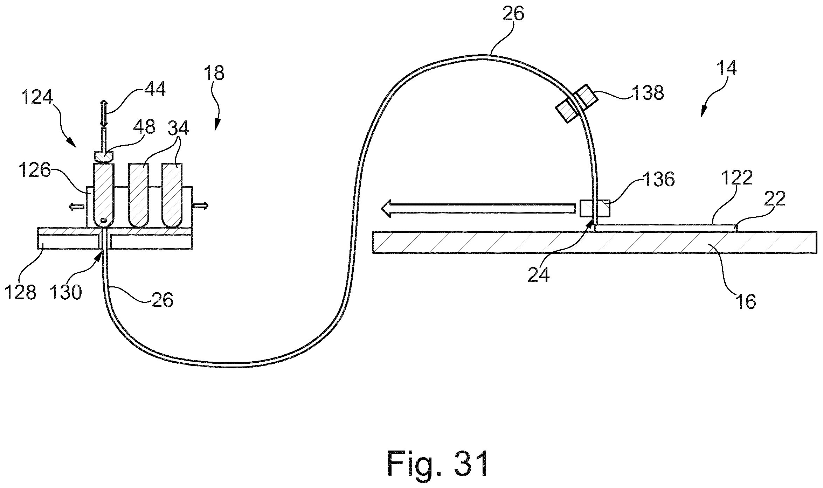

Die Dosiereinrichtung 18 gemäß Figur 30 kann zumindest einen Aktor 136 zur Bewegung der Ausgabevorrichtung 24 aufweisen. Der Aktor 136 kann insbesondere zur Bewegung der Ausgabevorrichtung 24 quer oder unter einem Winkel zur Rakelrichtung 54 ausgebildet und/oder angeordnet sein. Die Rakelrichtung 54 verläuft in der Darstellung gemäß Figur 30 orthogonal zur Zeichenebene. Mithin kann in dem Ausführungsbeispiel gemäß Figuren 30 und 31 über den Aktor 136 eine Bewegung der Ausgabevorrichtung 24 unabhängig von einer Bewegung des Flutrakels 50 und/oder des Druckrakels 52 erfolgen.

Die Figur 31 zeigt eine Seitenansicht der Dosiereinrichtung 18 von Figur 30 während Ausgabe der Druckmasse 22 auf das Drucksieb 16. Der Aktor 136 kann dabei zur Bewegung der Ausgabevorrichtung 24 während der Ausgabe der Druckmasse 22 auf das Drucksieb 16 ausgebildet sein. Auf diese Weise kann ebenfalls ein schnurförmig verlaufender Druckmassenabschnitt 122 erzeugt werden, nämlich aufgrund der sich während der Druckmassenausgabe bewegenden Ausgabevorrichtung 24.

Während der Ausgabe der Druckmasse 22 und der Bewegung der Ausgabevorrichtung 24 durch den Aktor 136 können das Flutrakel 50 und das Druckrakel 52 - hier nicht näher dargestellt - in einer sicheren oder von dem Aktor 136 entfernten Stellung positioniert sein, wie bezugnehmend auf Figur 25 bereits ausgeführt.

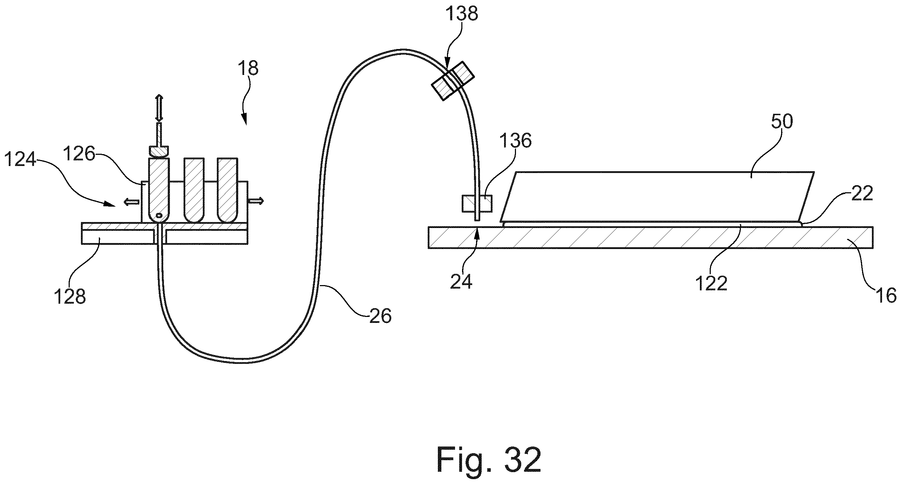

Die Figur 32 zeigt eine Seitenansicht der Dosiereinrichtung 18 von Figur 30 während einer Flutung des Drucksiebs 16 durch ein Flutrakel 50 beziehungsweise durch eine Flutrakelbewegung in Rakelrichtung 54. Die Ausgabevorrichtung 24 kann während der Flutung des Drucksiebs 16 durch das Flutrakel 50 in einer Wartestellung positioniert sein.

Mithin kann der Aktor 136 zur Bewegung der Ausgabevorrichtung 24 aus einer Wartestellung, wie in Figur 32 gezeigt, heraus in eine Ausgabestellung, wie in Figur 31 gezeigt, ausgebildet sein. Ebenso kann der Aktor 136 zur Bewegung der Ausgabevorrichtung 24 aus einer Ausgabestellung, wie in Figur 31 gezeigt, heraus in eine Wartestellung, wie in Figur 32 gezeigt, ausgebildet sein.

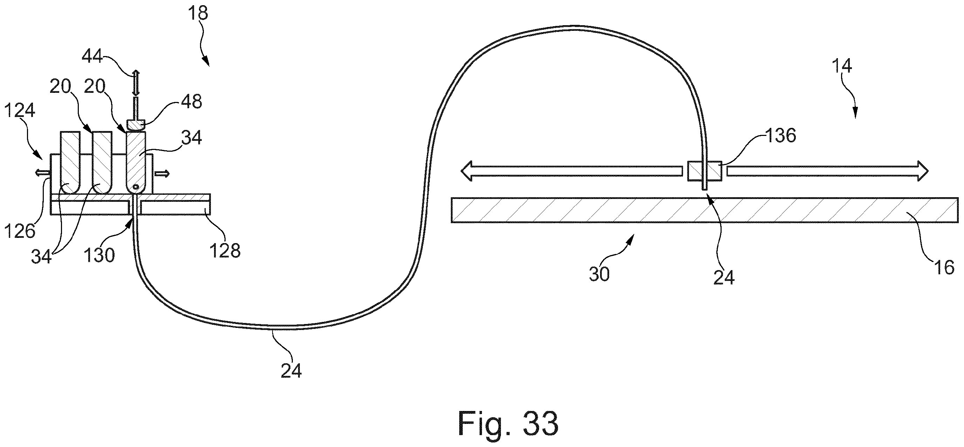

Die Figur 33 zeigt eine Seitenansicht der Dosiereinrichtung 18 von Figur 30 nach erfolgtem Behälterwechsel durch die Behälterwechselvorrichtung 136. Nach erfolgten Behälterwechsel kann nunmehr Druckmasse 22 aus dem in der Figur 30 rechts dargestellten Behälter 20, insbesondere der rechts dargestellten Kartusche 34, erfolgen.

Ein Behälterwechsel kann bei entleertem Behälter 20 und/oder bei einem gewünschten oder geplanten Wechsel der zu verwendenden Druckmasse 22 vorgenommen werden. Nach oder zusammen mit einem Behälterwechsel kann auch ein Austausch und/oder eine Reinigung der Zuführleitung 24 und/oder der Anschlussplatte 128 und/oder des Stößels 48 und/oder jeder weiteren mit Druckmasse 22 in Kontakt kommenden Komponente erfolgen, um Verunreinigungen mit einer zuvor verwendeten Druckmasse 22 zu vermeiden.

In sämtlichen oder zumindest einigen Ausführungsbeispielen, wie voranstehend bezugnehmend auf die Figuren 1 bis 33 beschrieben, kann die Dosiereinrichtung 18 zumindest eine Absperrarmatur 138 zur Absperrung eines Druckmassestroms aufweisen. Die Absperrarmatur 138 kann bevorzugt als Teil der Zuführleitung 24 und/oder zur Absperrung der Zuführleitung 24 ausgebildet sein.

Eine solche Absperrarmatur 138 kann insbesondere als Absperrventil, als Absperr- und/oder Drosselklappe, als Absperrhahn und/oder als Absperrklappe ausgebildet sein. Eine solche Absperrarmatur 138 kann insbesondere mechanisch und/oder pneumatisch und/oder elektrisch und/oder manuell und/oder automatisch und/oder ferngesteuert betätigbar sein. Eine solche Absperrarmatur 138 kann insbesondere als Quetschventil ausgebildet sein.

In sämtlichen oder zumindest einigen Ausführungsbeispielen, wie voranstehend bezugnehmend auf die Figuren 1 bis 33 beschrieben, kann entlang des Verlaufs der Zuführleitung 24 der Abstand der Absperrarmatur 138 von dem Behälter 20 mit Druckmasse 22 größer sein als der Abstand der Absperrarmatur 138 von der Ausgabevorrichtung 24 und/oder von zumindest einer Ausgabeöffnung 62 und/oder einem Ausgabeschlitz 66 einer Ausgabevorrichtung 24.

Ferner kann in sämtlichen oder zumindest einigen Ausführungsbeispielen, wie voranstehend bezugnehmend auf die Figuren 1 bis 33 beschrieben, die Dosiereinrichtung 18 und/oder der Aktor f zur Förderung der Druckmasse 22 aus dem Behälter 20 zur volumetrischen Dosierung der Druckmasse 22 ausgebildet sein.

Ferner kann in sämtlichen oder zumindest einigen Ausführungsbeispielen, wie voranstehend bezugnehmend auf die Figuren 1 bis 33 beschrieben, die Dosiereinrichtung 18 und/oder der jeweilige Aktor 40 zur Förderung der Druckmasse 22 zur hubbasierten und/oder volumetrischen Dosierung der Druckmasse 22 ausgebildet sein. Zusätzlich oder alternativ kann ein Aktor 40 zur Förderung der Druckmasse 22 zur volumetrischen Dosierung durch Hubregelung ausgebildet sein.

Ferner kann in den Ausführungsbeispielen, wie voranstehend bezugnehmend auf die Figuren 1 bis 25 beschrieben, der Aktor 70 zur Bewegung der Ausgabevorrichtung 24 als Portalachsensystem 72, wie näher in Figuren 3, 10 und 11 gezeigt, oder als Teil eines Portalachsensystems 72 ausgebildet sein. Ein solches Portalachsensystem 72 kann mit einem elektrischen Antrieb 74 ausgestattet sein und das Portalachsensystem 72 kann das Flutrakel 50 und das Druckrakel 52 tragen und eine Rakelbewegung in Rakelrichtung 54 realisieren, wie voranstehend beschrieben.

Der Antrieb 74 kann für die Ausführung der Rakelbewegung in Rakelrichtung 54 vorgesehen sein. Bei einer solchen Ausgestaltung erfolgt die Bewegung der Ausgabevorrichtung 24 entlang der Rakelrichtung 54 zusammen mit dem Flutrakel 50 und/oder mit dem Druckrakel 52.

Das Flutrakel 50 und/oder das Druckrakel 52 können relativ zum Portalachsensystem 72 absenkbar sein in eine Rakelstellung und/oder aus einer Rakelstellung relativ zum Portalachsensystem 72 wieder angehoben werden. Das Absenken und Anheben des Flutrakels 50 und/oder des Druckrakels 52 erfolgt mit gesonderten Antrieben und in einer Richtung quer oder unter einem Winkel zu einer Horizontalebene.

Das Portalachsensystem 72, wie näher in Figuren 3, 10 und 11 gezeigt, kann derart ausgebildet sein, dass eine Bewegung des Flutrakels 50 und/oder des Druckrakels 52 und/oder der Ausgabevorrichtung 24 entlang einer Horizontalebene lediglich in Rakelrichtung 54 ermöglicht wird. Das Portalachsensystem 72 kann insbesondere frei von weiteren Bewegungsachsen entlang einer Horizontalebene ausgebildet sein, insbesondere frei von Bewegungsachsen, die sich entlang einer Horizontalebene und quer oder unter einem Winkel zur Rakelrichtung 54 erstrecken.

Ferner kann in sämtlichen oder zumindest einigen Ausführungsbeispielen der Vorrichtung 10, wie voranstehend bezugnehmend auf die Figuren 1 bis 33 beschrieben, die jeweilige Dosiereinrichtung 18 eine Nachlaufstoppvorrichtung 140 zur Vermeidung und/oder Verringerung eines Nachlaufens von Druckmasse 22 aus der Ausgabevorrichtung 24 aufweisen.

In sämtlichen oder zumindest einigen Ausführungsbeispielen, wie voranstehend bezugnehmend auf die Figuren 1 bis 33 beschrieben, kann die Nachlaufstoppvorrichtung 140 durch eine Absperrarmatur 138 gebildet sein und/oder die Absperrarmatur 138 aufweisen.

Ferner kann die Nachlaufstoppvorrichtung 140, insbesondere in Form einer Absperrarmatur 138, in bevorzugter Weise als Absperrventil, als Absperr- und/oder Drosselklappe, als Absperrhahn und/oder als Absperrklappe ausgebildet sein oder eine solche Komponente aufweisen.

Zusätzlich oder alternativ kann die Nachlaufstoppvorrichtung 140, insbesondere in Form einer Absperrarmatur 138 oder eine solche Absperrarmatur 138 aufweisend, mechanisch und/oder pneumatisch und/oder elektrisch und/oder manuell und/oder automatisch und/oder ferngesteuert betätigbar sein. Eine solche Nachlaufstoppvorrichtung 140, insbesondere in Form einer Absperrarmatur 138, kann schließlich als Quetschventil ausgebildet sein oder ein Quetschventil aufweisen.

Zusätzlich oder alternativ kann die Nachlaufstoppvorrichtung 140 zur Druckentlastung eines Kolbenbodens 38 einer Kartusche 34 ausgebildet sein. Ferner kann die Nachlaufstoppvorrichtung 140 zur Bewegungsumkehr eines Kolbenbodens 38 einer Kartusche 34 und/oder zur Bewegungsumkehr des Aktors 40 zur Förderung der Druckmasse 22 ausgebildet sein.

Die Nachlaufstoppvorrichtung 140 kann dazu ausgebildet sein, den Wirkeingriff und/oder Kontakt zwischen dem Aktor 40 zur Förderung der Druckmasse 22 sowie dem Kolbenboden 38 einer Kartusche 34 aufzuheben, insbesondere temporär aufzuheben. Insbesondere kann die Nachlaufstoppvorrichtung 140 dazu ausgebildet sein, den Wirkeingriff und/oder Kontakt zwischen dem Linearantrieb 44 und/oder dem Stößel 48 einerseits sowie dem Kolbenboden 38 einer Kartusche 34 andererseits aufzuheben, insbesondere temporär aufzuheben.

Die Nachlaufstoppvorrichtung 140 kann hierzu insbesondere durch den Aktor 40 beziehungsweise durch eine hier nicht näher dargestellte Steuerung und/oder Regelung das Aktors 40 gebildet sein oder den Aktor 40 beziehungsweise eine hier nicht näher dargestellte Steuerung und/oder Regelung des Aktors 40 aufweisen.

Durch das Aufheben des Kontakts zwischen dem Aktor 40 und dem Kolbenboden 38 einer Kartusche 34, insbesondere zwischen dem Linearantrieb 44 und/oder dem Stößel 48 einerseits sowie dem Kolbenboden 38 einer Kartusche 34 andererseits, kann eine Druckentlastung in der Kartusche 34 erzeugt werden. Durch die Druckentlastung in der Kartusche 34 kann es zu einer Entspannung der Druckmasse 22 innerhalb der Kartusche 34 und/oder innerhalb der stromabwärts angeordneten Zuführleitung 24 kommen.

Der Kolbenboden 38 kann in der Folge eine Rückstellbewegung ausführen, insbesondere eine selbsttägige Rückstellbewegung. Hierdurch kann ein unerwünschtes Nachlaufen von Druckmasse 22 sicher vermieden oder verringert werden.

Die Nachlaufstoppvorrichtung 140 kann zusätzlich oder alternativ eine druckbasierte Regelung aufweisen und/oder zur Vermeidung und/oder Verringerung eines Nachlaufens von Druckmasse 22 aus der Ausgabevorrichtung 24 durch eine druckbasierte Regelung ausgebildet sein. Eine solche druckbasierte Regelung kann bei den Dosiereinrichtungen 18 sämtlicher oder einiger Ausführungsbeispiele, wie voranstehend bezugnehmend auf die Figuren 1 bis 33 beschrieben worden, vorgesehen sein.

Eine solche druckbasierte Regelung der Nachlaufstoppvorrichtung 140 kann in besonders vorteilhafter Weise zur Erfassung und/oder Verarbeitung eines Förderdrucks und/oder Fluiddrucks der Druckmasse 22 und/oder eines durch einen Aktor 40 zur Förderung der Druckmasse 22 erzeugten und/oder auf einen Kolbenboden 38 einer Kartusche 34 wirkenden Drucks und/oder eines innerhalb eines Druckbehälters 88 vorherrschenden Drucks eingerichtet sein.

Gemäß einem Ausführungsbeispiel kann ein hier nicht näher dargestellter Drucksensor vorgesehen sein, beispielsweise in der Zuführleitung 26 und/oder in dem Behälter 20 und/oder in und/oder an der Ausgabevorrichtung 24 und/oder in einem Druckbehälter 88. Durch einen solchen Drucksensor kann der Förderdruck und/oder Fluiddruck der Druckmasse 22 in der Zuführleitung 26 und/oder in dem Behälter 20 in und/oder an der Ausgabevorrichtung 24 ermittelt werden.

Ebenso kann beispielhaft ein hier nicht näher dargestellter Drucksensor an dem Stößel 48 und/oder an dem Kolbenboden 38 einer Kartusche 34 vorgesehen sein, über den ein Druck zwischen dem Stößel 48 und dem Kolbenboden 38 einer Kartusche 34 ermittelt werden kann.

Ebenso kann beispielhaft ein hier nicht näher dargestellter Drucksensor in einem Druckbehälter 88 einer Druckerhöhungseinrichtungen 86 vorgesehen sein, über den ein Gasdruck in dem Druckbehälter 88 ermittelt werden kann. Ebenso kann beispielhaft ein hier nicht näher dargestellter Drucksensor in der Druckluftleitung 96 und/oder in und/oder an der Anschlussöffnung 94 des Druckbehälters 88 vorgesehen sein, über den ein Gasdruck in der Druckluftleitung 96 und/oder in und/oder an der Anschlussöffnung 94 des Druckbehälters 88 ermittelt werden kann.

Die Nachlaufstoppvorrichtung 140 kann zur Vermeidung eines Nachlaufens von Druckmasse 22 aus der Ausgabevorrichtung 24 in Abhängigkeit des durch den jeweiligen Drucksensor ermittelten Drucks, insbesondre des jeweiligen Fluiddrucks, Förderdrucks und/oder Gasdrucks, den jeweiligen Aktor 40 ansteuern und/oder betätigen.

Wird durch den Sensor ein verhältnismäßig hoher Druck ermittelt und soll die Ausgabe von Druckmasse 22 durch die Ausgabevorrichtung 24 beendet werden, kann der jeweilige Aktor 40 zügig und/oder in verhältnismäßig großem Umfang zur Reduzierung eines Förderdrucks der Druckmasse 22 angesteuert werden. Gegebenenfalls kann ein Förderdruck der Druckmasse 22 durch entsprechende Ansteuerung des jeweiligen Aktors auch vollständig abgebaut werden. Ebenso ist es möglich, den jeweiligen Förderdruck der Druckmasse 22 nur teilweise abzubauen, insbesondere unter Verwendung von Drucksensordaten druckgeregelt abzubauen.

Ein unnötig starker Abbau des Förderdrucks lässt sich hierdurch vermeiden, sodass für eine Ausgabe von Druckmasse 22 aus der Ausgabevorrichtung 24 in einer nachfolgenden Ausgabesequenz eine nur verhältnismäßig geringe Erhöhung des Förderdrucks durch den jeweiligen Aktor 40 erforderlich ist. Das Ansprechverhalten und/oder die Genauigkeit der Dosiereinrichtung 18 lässt sich hierdurch weiter verbessern.

Ebenso ist es möglich, den jeweiligen Aktor zur Erzeugung eines negativen Förderdrucks beziehungsweise zum Ansaugen der Druckmasse 22 in eine entgegensetzte Strömungsrichtung anzusteuern. Die Druckmasse 22 kann hierdurch in einer zum Ausbringen der Druckmasse 22 über die Ausgabevorrichtung 24 entgegengesetzten Strömungsrichtung gefördert werden, mithin weg von der Ausgabevorrichtung 24. Die Gefahr des Nachlaufens von Druckmasse 22 lässt sich damit weiter reduzieren.

Beispielsweise kann der Stößel 48 mit dem Kolbenboden 38 einer Kartusche formschlüssig in Eingriff gebracht werden, sodass über eine Aufwärtsbewegung beziehungsweise eine dem Ausbringen von Druckmasse 22 aus der Kartusche entgegengesetzten Rückwärtsbewegung des Stößels 48 auch der Kolbenboden 38 zusammen mit dem Stößel bewegt werden kann. Hierdurch lässt sich in einer Kartusche 34 ein negativer Förderdruck beziehungsweise ein Ansaugen der Druckmasse 22 aus der Zuführleitung 26 und mithin auch aus der Ausgabevorrichtung zurück in die Kartusche 34 bewerkstelligen.

Eine druckbasierte Regelung der Nachlaufstoppvorrichtung 140 kann insbesondere zusätzlich oder alternativ zu einer Absperrarmatur 138 zur Vermeidung und/oder Verringerung eines Nachlaufens der Druckmasse 22 vorgesehen sein.

Die Ausgabevorrichtung 24 kann schließlich eine hier nicht näher dargestellte Abstreifvorrichtung zum Abstreifen von Druckmasse 22 aus einer Ausgabeöffnung 62 und/oder aus einem Ausgabeschlitz 66 aufweisen. Soweit ein Nachlaufen nicht vollständig vermieden werden kann, lassen sich hierdurch Reste von Druckmasse 22 zuverlässig von der jeweiligen Ausgabeöffnung 62 und/oder dem jeweiligen Ausgabeschlitz 66 der Ausgabevorrichtung 24 entfernen, sodass ein unkontrolliertes Tropfen und damit verbundenes Verunreinigen von Vorrichtungskomponenten vermeiden werden kann.

Bei einem erfindungsgemäßen Verfahren zur Herstellung von dreidimensionalen Siebdruckwerkstücken, insbesondere mit einer voranstehend beschriebenen Vorrichtung 10, kann in der Druckeinrichtung 14 mit dem Drucksieb 16 ein Siebdruckwerkstück schichtweise in mehreren Druckvorgängen erzeugt werden. Ferner kann bei dem Verfahren mit der Dosiereinrichtung 18 eine pastöse Druckmasse 22 dosiert auf das Drucksieb 16 ausgegeben werden, wobei mittels der Dosiereinrichtung 18 eine Druckmasse 22 aus einem Behälter 20 zur Aufbewahrung der pastösen Druckmasse 22 herausbefördert und über die jeweilige Zuführleitung 26 bis zu einer Ausgabevorrichtung 24 zur Ausgabe der Druckmasse 22 auf das Drucksieb 22 hindurchbefördert wird.

Zusätzlich oder alternativ kann bei einem erfindungsgemäßen Verfahren zur Herstellung von dreidimensionalen Siebdruckwerkstücken, insbesondere mit einer voranstehend beschriebenen Vorrichtung 10, in einer Druckeinrichtung 14 mit einem Drucksieb 16 ein Siebdruckwerkstück schichtweise in mehreren Druckvorgängen erzeugt werden. Ferner kann bei dem Verfahren mit einer Dosiereinrichtung 18 eine pastöse Druckmasse dosiert auf das Drucksieb 16 ausgegeben werden, wobei mittels einer Nachlaufstoppvorrichtung 140 ein Nachlaufen von Druckmasse 22 aus der Dosiereinrichtung 18 vermieden oder verringert werden kann.

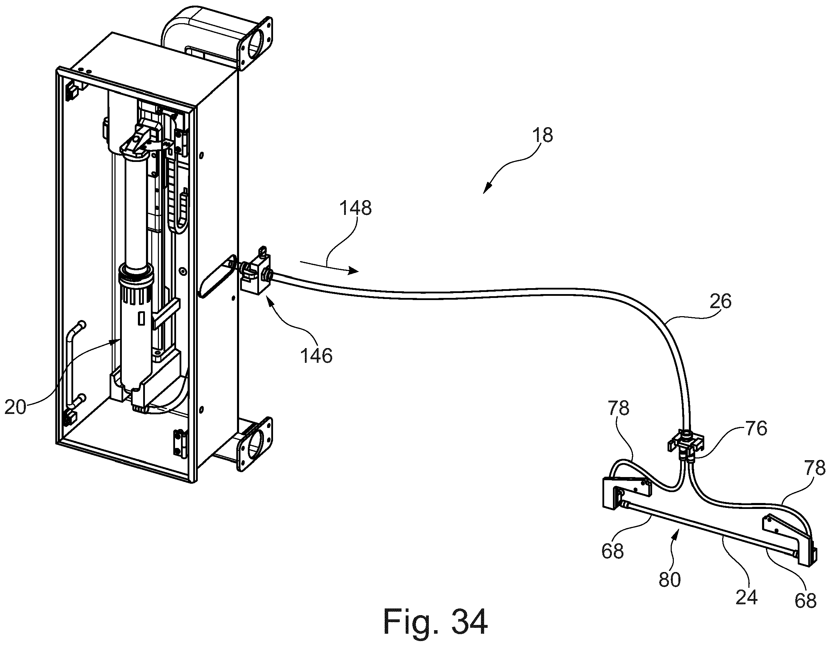

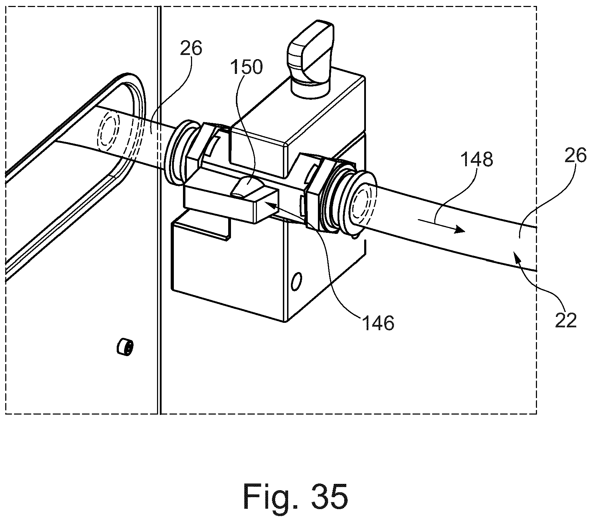

Die Figur 34 zeigt eine weitere perspektivische Ansicht einer Dosiereinrichtung gemäß dem Ausführungsbeispiel von Figuren 14 und 15. Die Figur 35 zeigt eine Detailansicht von Figur 34.

In dem Ausführungsbeispiel gemäß Figuren 14 und 15 sowie 34 und 35 kann die Zuführleitung 26 eine Rücklaufstoppvorrichtung 146 zur Vermeidung und/oder Verringerung des Rücklaufens von Druckmasse 22 entgegen einer Ausgabeströmungsrichtung 148 aufweisen. Die Rücklaufstoppvorrichtung 146 kann bevorzugt als Absperrarmatur 150 ausgebildet sein, insbesondere als Kugelhahn.

Eine solche Absperrarmatur 150 kann mithin manuell betätigbar sein. Ebenso kann die Absperrarmatur 150 auch als automatisch betätigtes oder betätigbares Sperrventil ausgebildet sein.

Durch eine solche Ausgestaltung kann ein Rücklauf der Druckmasse 22, beispielsweise aufgrund einer elastischen Verformung der Zuführleitung 26 beziehungsweise einer in der Zuführleitung 26 vorhandene innere Vorspannung der Druckmasse 22, sicher vermieden werden. Es lässt sich hierdurch vermeiden, dass die Druckmasse 22 in der Zuführleitung 26 bei einem Wechsel der jeweiligen Kartusche 34 innerhalb der Zuführleitung 26 zurückfließt in Richtung Behälter 20 beziehungsweise in Richtung Kartusche 34 und aus einem behälterseitigen Ende der Zuführleitung 26 herausgedrückt wird. Die Rücklaufstoppvorrichtung 146 kann in bevorzugter Weise vor dem Wechsel des jeweiligen Behälters 20 betätigt werden, insbesondere manuell oder automatisch oder teilautomatisch betätigt werden.

Weiterhin kann entlang des Verlaufs der Zuführleitung 26 der Abstand der Rücklaufstoppvorrichtung 146 von dem Behälter 20 mit Druckmasse 22 geringer sein als der Abstand der Rücklaufstoppvorrichtung 146 von der Ausgabevorrichtung 24. Die Gefahr eines Rücklaufs von Druckmasse 22 in der Zuführleitung 26 in Richtung Behälter 20 und eines Heraustretens aus einem behälterseitigen Ende der Zuführleitung 26 kann auf diese weiter verringert werden. Bei geringem Abstand zwischen der Rücklaufstoppvorrichtung 146 und dem Behälter 20, verringert sich das Risiko, dass eine sich zwischen dem Behälter 20 und der Rücklaufstoppvorrichtung 146 in der Zuführleitung 26 vorhandene innere Spannung der Druckmasse 22 beziehungsweise eine flexible Verformung der Zuführleitung 26 einen unkontrollierten Rücklauf und ein Heraustreten von Druckmasse 22 aus dem behälterseitigen Ende der Zuführleitung 26 verursacht.

Weiterhin kann die Zuführleitung 26 zwischen dem Behälter 20 und der Rücklaufstoppvorrichtung 146 zumindest abschnittsweise als starre oder unflexible Leitung ausgebildet sein. In den Figuren 34 und 35 ist die zwischen dem Behälter 20 und der Rücklaufstoppvorrichtung 146 verlaufende Zuführleitung 26 teilweise durch die gezeigte Einhausung verdeckt. Ferner kann die Zuführleitung 26 zwischen der Rücklaufstoppvorrichtung 146 und der Ausgabevorrichtung 24 zumindest abschnittsweise als flexible oder flexibel verformbare Leitung ausgebildet sein.

Die Vorrichtung 10 kann insbesondere für die Entwicklung und/oder für die Herstellung großer Stückzahlen von Arzneimitteln ausgebildet und/oder eingerichtet sein. Ebenso kann ein voranstehend beschriebenes Verfahren für die Herstellung großer Stückzahlen von Arzneimitteln ausgeführt werden.

### BEZUGSZEICHENLISTE

- 10: Vorrichtung
- 12: Einhausung
- 14: Druckeinrichtung
- 16: Drucksieb
- 18: Dosiereinrichtung
- 20: Behälter
- 22: Druckmasse
- 24: Ausgabevorrichtung
- 25: Ausgabeteilanordnung der Ausgabevorrichtung
- 26: Zuführleitung
- 28: Einhausung
- 30: Druckbereich
- 32: Drucktisch
- 34: Kartusche
- 36: Kartuschen-Seitenwand
- 38: Kolbenboden
- 40: Aktor zur Förderung der Druckmasse 22
- 42: Druckerhöhungsvorrichtung
- 44: Linearantrieb
- 46: Sensor
- 48: Stößel
- 50: Flutrakel
- 52: Druckrakel
- 54: Rakelrichtung
- 56: Rakelkante des Flutrakels 50
- 58: Rakelkante des Druckrakels 52
- 60: Zwischenraum
- 62: Ausgabeöffnung
- 64: Strömungsrichtung der Druckmasse 22
- 66: Ausgabeschlitz
- 68: Ausgaberohrabschnitt
- 69: freies Ende des Ausgaberohrabschnitts
- 70: Aktor
- 72: Portalachsensystem
- 74: Antrieb
- 76: Verteiler
- 78: Zuführleitungsabschnitt
- 80: Ausgaberohr
- 82: Enden
- 84: Eimer
- 86: Druckerhöhungsvorrichtung
- 88: Druckbehälter
- 90: Seitenwand
- 92: Öffnung
- 94: Anschlussöffnung
- 96: Druckluftleitung
- 98: Deckel
- 100: Austrittsöffnung
- 102: Austrittsleitung
- 104: Saugvorrichtung
- 106: freies Leitungsende
- 108: Leitungsendabschnitt
- 110: geschlossener Abschnitt
- 112: offener Abschnitt
- 114: Drucküberlaufabschnitt
- 116: Dosierposition
- 118: Flutrakelstartposition
- 120: sichere Rakelposition
- 122: Druckmassenabschnitt
- 124: Behälterwechselvorrichtung
- 126: Behältermagazin
- 127: Schnellwechselvorrichtung
- 128: Anschlussplatte
- 129: Befestigungselement
- 130: Durchlass
- 131: Tragplatte
- 132: Füllstandsensor
- 134: Aufnahmekavität
- 136: Aktor
- 138: Absperrarmatur
- 140: Nachlaufstoppvorrichtung
- 142: Aktor
- 144: Querrichtung
- 146: Rücklaufstoppvorrichtung
- 148: Ausgabeströmungsrichtung
- 150: Absperrarmatur

## Patentansprüche

1. Vorrichtung (10) zur Herstellung von dreidimensionalen Siebdruckwerkstücken, insbesondere 3D-Siebdruckanlage, mit einer ein Drucksieb (16) aufweisenden Druckeinrichtung (14) für die schichtweise Erzeugung zumindest eines Siebdruckwerkstücks in mehreren Druckvorgängen und mit einer Dosiereinrichtung (18) zur dosierten Ausgabe einer pastösen Druckmasse (22) auf das Drucksieb (16), wobei die Dosiereinrichtung (18) wenigstens einen Behälter (20) zur Aufbewahrung der pastösen Druckmasse, eine Ausgabevorrichtung (24) zur Ausgabe der Druckmasse (22) auf das Drucksieb (16) und eine zwischen dem Behälter (20) und der Ausgabevorrichtung (24) verlaufende Zuführleitung (26) zur Zuführung der Druckmasse (22) aus dem Behälter (20) bis zur Ausgabevorrichtung (24) aufweist.

2. Vorrichtung (10) nach Anspruch 1, **dadurch gekennzeichnet, dass** der Behälter (20) während der Ausgabe der Druckmasse (22) außerhalb eines Druckbereichs (30) der Druckeinrichtung (14) und/oder außerhalb eines Drucktisches (32) der Druckeinrichtung (14) und/oder in horizontaler Richtung relativ zum Drucksieb (16) und/oder Drucktisch (32) beabstandet oder in vertikaler Richtung unterhalb oder oberhalb eines Drucktisches (32) der Druckeinrichtung (14) angeordnet ist und/oder bleibt.

3. Vorrichtung (10) nach einem der voranstehenden Ansprüche, **dadurch gekennzeichnet, dass** die Dosiereinrichtung (18) wenigstens einen Aktor (40) zur Förderung der Druckmasse (22) aus dem Behälter (20) aufweist.

4. Vorrichtung (10) nach Anspruch 3, **dadurch gekennzeichnet, dass** der Aktor (40) zur Förderung der Druckmasse (22) als Saugvorrichtung (104) zum Ansaugen der Druckmasse (22) aus dem Behälter (20) ausgebildet ist, insbesondere als Schneckenpumpe und/oder Exzenterschneckenpumpe, und/oder dass die Saugvorrichtung (104) zumindest abschnittsweise in den Behälter (20) und/oder in die im Behälter (20) befindliche Druckmasse (22) eingetaucht ist.

5. Vorrichtung (10) nach Anspruch 3, **dadurch gekennzeichnet, dass** der Aktor (40) zur Förderung der Druckmasse (22) als Druckerhöhungsvorrichtung (42, 86) zur Druckbeaufschlagung der Druckmasse (22) in dem Behälter (20) und/oder zur druckbasierten Förderung der Druckmasse (22) aus dem Behälter (20) heraus ausgebildet ist und/oder dass die Druckerhöhungsvorrichtung (42) einen Linearantrieb (44) aufweist, wobei der Linearantrieb (44) bevorzugt als elektrischer oder elektromechanischer Linearantrieb (44) und/oder als elektrischer Spindelantrieb und/oder als Elektrozylinder und/oder als Linearaktor ausgebildet ist.

6. Vorrichtung (10) nach einem der voranstehenden Ansprüche, **dadurch gekennzeichnet, dass** die Dosiereinrichtung (18) wenigstens einen Sensor (46) zur Positionsbestimmung eines Kolbenbodens (38) einer Kartusche (34) aufweist und/oder dass der Sensor (46) dazu eingerichtet ist, eine Relativposition zwischen einem Kolbenboden (38) und einem Aktor (40) zur Förderung der Druckmasse (22), insbesondere eine Relativposition zwischen einem Kolbenboden (38) und einem Linearantrieb (44), zu bestimmen.

7. Vorrichtung (10) nach einem Anspruch 5, **dadurch gekennzeichnet, dass** die Druckerhöhungsvorrichtung (86) einen Druckbehälter (88) aufweist, der druckdicht verschließbar ist und in dem der Behälter (20) zur Aufbewahrung der pastösen Druckmasse (22) positionierbar ist und/oder dass der Druckbehälter (88) eine Anschlussöffnung (94) für eine Druckluftzufuhr aufweist und an die Anschlussöffnung (94) eine Druckluftleitung (96) druckdicht angeschlossen oder anschließbar ist, wobei die Anschlussöffnung (94) bevorzugt in einem Deckel (98) des Druckbehälters (88) ausgebildet ist, und/oder dass der Druckbehälter (88) eine Austrittsöffnung (100) für die Durchführung der Zuführleitung (26) oder Austrittsöffnung (100) für die Durchführung einer mit der Zuführleitung (26) verbundenen Austrittsleitung (102) aufweist, wobei die Austrittsöffnung (100) bevorzugt in einem Deckel (98) des Druckbehälters (88) ausgebildet ist.

8. Vorrichtung (10) nach einem der voranstehenden Ansprüche, **dadurch gekennzeichnet, dass** die Zuführleitung (26) zumindest abschnittsweise entlang ihrer Länge oder entlang ihrer gesamten Länge flexibel verformbar und/oder elastisch verformbar und/oder biegsam und/oder frei von plastischer Verformung biegsam ausgebildet ist und/oder dass die Zuführleitung (26) flexibel einer Relativbewegung zwischen der Ausgabevorrichtung (24) und dem Behälter (20) folgt.

9. Vorrichtung (10) nach einem der voranstehenden Ansprüche, **dadurch gekennzeichnet, dass** die Zuführleitung (26) eine Länge aufweist von mindestens 10 cm, bevorzugt von mindestens 15 cm, weiter bevorzugt von mindestens 20 cm, weiter bevorzugt von mindestens 25 cm, weiter bevorzugt von mindestens 30 cm, weiter bevorzugt von mindestens 35 cm, weiter bevorzugt von mindestens 40 cm, weiter bevorzugt von mindestens 50 cm, weiter bevorzugt von mindestens 60 cm, weiter bevorzugt von mindestens 80 cm, weiter bevorzugt von mindestens 100 cm, weiter bevorzugt von mindestens 120 cm, weiter bevorzugt von mindestens 150 cm, weiter bevorzugt von mindestens 170 cm, weiter bevorzugt von mindestens 200 cm, weiter bevorzugt von mindestens 250 cm, noch weiter bevorzugt von mindestens 300 cm.

10. Vorrichtung (10) nach einem der voranstehenden Ansprüche, **dadurch gekennzeichnet, dass** die Ausgabevorrichtung (24) eine Mehrzahl von Ausgabeöffnungen (62) für die Ausgabe der Druckmasse (22) auf das Drucksieb (16) aufweist, insbesondere eine Mehrzahl diskret zueinander ausgebildete Ausgabeöffnungen (62), und/oder dass zumindest zwei Ausgabeöffnungen (62) unterschiedlich dimensioniert sind und/oder dass zumindest zwei Ausgabeöffnungen (62) zueinander unterschiedlich dimensionierte Querschnittsgrößen aufweisen.

11. Vorrichtung (10) nach einem der voranstehenden Ansprüche, **dadurch gekennzeichnet, dass** die Druckeinrichtung (14) ein Flutrakel (50) zum Fluten des Drucksiebs (16) mit Druckmasse (22) und/oder zumindest ein Druckrakel (52) zum Pressen von Druckmasse (22) durch das Drucksieb (16) und/oder zwei Druckrakel (52) zum Pressen von Druckmasse (22) durch das Drucksieb (16) aufweist, wobei die Ausgabevorrichtung (24) bevorzugt zur Ausgabe der Druckmasse (22) ausgehend von einer Stellung zwischen dem Flutrakel (50) und dem Druckrakel (52) und/oder zwischen zwei Druckrakeln (52) ausgebildet ist.

12. Vorrichtung (10) nach einem der voranstehenden Ansprüche, **dadurch gekennzeichnet, dass** die Ausgabevorrichtung (24) zumindest einen Ausgabeschlitz (66) oder mehrere Ausgabeschlitze (66) aufweist, wobei der Ausgabeschlitz (66) bevorzugt in einer Richtung quer oder unter einem Winkel zur Rakelrichtung (54) verläuft und/oder dass zumindest ein Ausgabeschlitz (66) der Ausgabevorrichtung (24) entlang der Längserstreckung eine sich verändernde Breite aufweist.

13. Vorrichtung (10) nach Anspruch 11, **dadurch gekennzeichnet, dass** die Ausgabevorrichtung (24) mit dem Flutrakel (50) und/oder mit dem Druckrakel (52) und/oder mit den Druckrakeln (52) mitfahrend angeordnet ist, insbesondere in einer Rakelrichtung (54) mitfahrend angeordnet ist und/oder dass die Dosiereinrichtung (18) zur Ausgabe von Druckmasse (22) über die Ausgabevorrichtung (24) während einer Rakelbewegung in einer Rakelrichtung (54) eingerichtet ist und/oder dass die Dosiereinrichtung (18) zur kontinuierlichen und/oder periodisch wiederkehrenden Ausgabe von Druckmasse (22) über die Ausgabevorrichtung (24) während einer Rakelbewegung in einer Rakelrichtung (54) eingerichtet ist.

14. Vorrichtung (10) nach einem der voranstehenden Ansprüche, **dadurch gekennzeichnet, dass** die Zuführleitung (26) wenigstens einen Verteiler (76), bevorzugt eine Mehrzahl von Verteilern (76), zur Verteilung eines Druckmassestroms auf mehrere parallelgeschaltete Zuführleitungsabschnitte (78) und/oder für die Zuleitung eines Druckmassestroms zu mehreren Ausgabeöffnungen (62) und/oder mehreren Ausgabeschlitzen (66) und/oder mehreren Ausgaberohrabschnitten (68) aufweist.

15. Verfahren zur Herstellung von dreidimensionalen Siebdruckwerkstücken, insbesondere mit einer voranstehend beschriebenen Vorrichtung (10), bei dem in einer Druckeinrichtung (14) mit einem Drucksieb (16) ein Siebdruckwerkstücks schichtweise in mehreren Druckvorgängen erzeugt wird und bei dem mit einer Dosiereinrichtung (18) eine pastöse Druckmasse (22) dosiert auf das Drucksieb (16) ausgegeben wird, wobei mittels der Dosiereinrichtung (18) eine Druckmasse (22) aus einem Behälter (20) zur Aufbewahrung der pastösen Druckmasse (22) herausbefördert und über eine Zuführleitung (26) bis zu einer Ausgabevorrichtung (24) zur Ausgabe der Druckmasse (22) auf das Drucksieb (16) hindurchbefördert wird.
